# EUROPEAN PATENT SPECIFICATION

(11) **EP 4 187 242 B1**
(45) Date of publication and mention of the grant of the patent: **01.01.2025**
(21) Application number: 20949985.4
(22) Date of filing: 11.09.2020
(51) Int. Cl.: G01N 30/88, G01N 30/90

(54) **QUALITY CONTROL METHOD OF DAMPNESS-RESOLVING AND TOXIN-VANQUISHING COMPOSITION**
VERFAHREN ZUR QUALITÄTSKONTROLLE EINER FEUCHTIGKEITSAUFLÖSENDEN UND TOXINAUFLÖSENDEN ZUSAMMENSETZUNG
MÉTHODE DE CONTRÔLE DE LA QUALITÉ D'UNE COMPOSITION D'ÉLIMINATION DE L'HUMIDITÉ ET DE SUPPRESSION DE TOXINE

(30) Priority: 19.08.2020 CN 202010834323
(43) Date of publication of application: 31.05.2023
(73) Proprietor: Guangdong Yifang Pharmaceutical Co., Ltd, Foshan, Guangdong 528244 (CN)
(72) Inventor: WEI, Mei, Foshan, Guangdong 528244 (CN); CHENG, Xueren, Foshan, Guangdong 528244 (CN); SUN, Dongmei, Foshan, Guangdong 528244 (CN); LI, Dingfa, Foshan, Guangdong 528244 (CN); HE, Minyou, Foshan, Guangdong 528244 (CN); LI, Guowei, Foshan, Guangdong 528244 (CN); HUO, Wenjie, Foshan, Guangdong 528244 (CN); HE, Guangming, Foshan, Guangdong 528244 (CN); PAN, Liye, Foshan, Guangdong 528244 (CN); SUO, Caixian, Foshan, Guangdong 528244 (CN); YANG, Xiaodong, Foshan, Guangdong 528244 (CN); WU, Wenping, Foshan, Guangdong 528244 (CN); HUANG, Yueqian, Foshan, Guangdong 528244 (CN); HE, Jiaying, Foshan, Guangdong 528244 (CN); TONG, Peizhen, Foshan, Guangdong 528244 (CN)
(74) Representative: Sun, Yiming
(86) International application number: PCT/CN2020/114900
(87) International publication number: WO 2022/036781

(56) References cited:
- CN-A- 103 235 082
- CN-A- 105 842 381
- FAMEI LI ET AL: "Chromatography of medicinal plants and chinese traditional medicines", BIOMEDICAL CHROMATOGRAPHY, JOHN WILEY & SONS LTD, GB, vol. 12, no. 2, 4 January 1999 (1999-01-04), pages 78 - 85, XP071547161, ISSN: 0269-3879, DOI: 10.1002/(SICI)1099-0801(199803/04)12:2<78::AID-BMC726>3.0.CO;2-U
- YANG XIUWEI: "Material Basis Research of Anti-COVID-19 Huashibaidu Granule Gormula", MODERN CHINESE MEDICINE, ZHONG GUO XIAN DAI ZHONG YAO BIAN JI BU, CN, vol. 22, no. 5, 16 May 2020 (2020-05-16), CN , pages 672 - 689, XP055901093, ISSN: 1673-4890, DOI: 10.13313/j.issn.1673-4890.20200331002
- CHINESE PHARMACOPOEIA COMMISSION: "Passages, Pharmacopoeia of the People’s Republic of China", PHARMACOPOEIA OF THE PEOPLE’S REPUBLIC OF CHINA, 2015 ED., vol. 1, 30 June 2015 (2015-06-30), pages 23 - 24, 87, 158, 302, 320, 334, 540, XP009534609
- GE JIANHUA, DOU ZHIHUA, ROWLING, WANG XIAOLIU, LIU LIFANG: "Measuring Concentration of 5 Types of Anthraquinone Components in Virgate Wormwood Decoction Using High-Performance Liquid Chromatography", CHINESE JOURNAL OF HOSPITAL PHARMACY, vol. 29, no. 7, 30 April 2009 (2009-04-30), pages 590 - 592, XP055901600
- PENG LING, ZHU QIAN-YUN;ZHANG JIE;LI CHENG-WANG: "Determination of Hydrochloric Acid Ephedrine and Hydrochloric Acid Pseudoephedrine in Xiaoerkechuanling Granules", GUANGZHOU CHEMICAL INDUSTRY, vol. 45, no. 18, 30 September 2017 (2017-09-30), pages 112 - 114, XP055901594, ISSN: 1001-9677
- DAI WEIHONG, ZHANG SUFEN, TIAN SIQI: "Preparation and Clinical Application of Huang Qi Fu Zheng Granules", JOURNAL OF BETHUNE MILITARY MEDICAL COLLEGE, vol. 5, no. 4, 20 August 2007 (2007-08-20), pages 227 - 228, XP055901089, ISSN: 2095-7858, DOI: 10.16485/j.issn.2095-7858.2007.04.015

## Description

### TECHNICAL FIELD

The present disclosure relates to the technical field of quality control (QC) for traditional Chinese medicine, and in particular to a QC method for a Huashibaidu (HSBD) composition.

### BACKGROUND

Due to strong contagiousness, rapid transmission, general population susceptibility, and lack of specific drugs, the pneumonia caused by 2019 novel coronavirus (COVID-19) infection has led to a pandemic worldwide and has become a global super-major public health emergency. Traditional Chinese medicine has played a unique and important role in the fight against the COVID-19 pandemic. The National Administration of Traditional Chinese Medicine in China has pointed out that, according to research and screening results, Jinhua Qinggan (JHQG) granules, LianhuaQingwen (LHQW) capsules, Xuebijing (XBJ) injection, Lung-Cleansing and Detoxifying Preparation, HSBD formula (Dampness Resolving and Detoxifying Preparation), and Xuanfeibaidu (XFBD) formula (Lung Diffusing and Detoxifying Preparation) have played important roles in the fight against the COVID-19 pandemic.

The HSBD formula is composed of 14 traditional Chinese medicine components (TCMCs), including raw ephedra, almond, raw gypsum, licorice, *Agastache rugosa, Magnolia officinalis*, *AtractylodesLancea, Amomum tsaoko, RhizomaPinelliae, Poriacocos,* raw *Rheum palmatum,* raw *Astragalus membranaceus, Semen Lepidii,* and *Paeoniae Radix Rubra.* Clinical experiments have shown that the HSBD formula exhibits an outstanding effect on improving the symptoms of patients and increasing a conversion rate from nucleic acid positive to negative. However, most of the current studies on the HSBD formula focus on its pharmacology and efficacy, and there is no studies on its quality standards. The current production of the HSBD formula is conducted on a small scale with relatively-low requirements for QC, and there is no large-scale industrial production.

The literature "Research on Material Basis of Each Component in Huashibaidu (HSBD) Composition for Anti-COVID-19" (Modern Chinese Medicine, No. 3, 2020) discloses a material basis of each component in the HSBD Composition. Yang Xiuwei ("Material Basis Research of Anti-COVID-19 Huashibaidu Granule Gormula", Modern Chinese Medicine, vol.22, no.5, 2020-05-16, pages 672-689) also the HSBD Composition. However, a specific QC method for the HSBD composition has not been studied by these two literatures.

Famei Li et al ("Chromatography of medicinal plant and chinese traditional medicines", Biomedical Chromatography, vol. 12, no.2, 1999-01-04, pages 78-85) and CHINESE PHARMACOPOEIA COMMISSION ("Passages, Pharmacopoeia of the People's Republic of China",2015 ed., vol.1, 2015-06-30, pages 23-24,87,158,302,320,334,540) disclose methods using TLC and HPLC for qualitative and quantitative identification of crude drugs and active ingredients; however, these two literatures have not disclosed how to select detection targets from the complex Huashibaidu combination.

### SUMMARY

The technical problem to be solved by the present disclosure is to provide a QC method for an HSBD composition, which can provide a data basis for mass production and effectively ensure the stability and controllability of a product quality.

In order to solve the above technical problem, the present disclosure provides a QC method for an HSBD composition, where the HSBD composition mainly includes the following components: ephedra, fried bitter almond, raw gypsum, licorice, *PogostemonisHerba, Magnolia officinalis*, bran-fried *AtractylodesLancea,* fried *Amomum tsaoko* fruit, *RhizomaPinelliae, Poriacocos, Rheum palmatum, Astragalus membranaceus, Semen Lepidii, Paeoniae Radix Rubra,* and an adjuvant; and
the QC method for an HSBD composition includes:
   (1) identifying ephedra, licorice, and *Magnolia officinalis* by thin-layer chromatography (TLC); and
   (2) determining a total anthraquinone content, a free anthraquinone content, a total content of ephedrine hydrochloride and pseudoephedrine hydrochloride, and a paeoniflorin content in the HSBD composition by high-performance liquid chromatography (HPLC), and calculating a combined anthraquinone content,
where the combined anthraquinone content = the total anthraquinone content - the free anthraquinone content; in determination of both the total anthraquinone content and the free anthraquinone content, the chromatography column is an octadecylsilane-bonded silica gel column, and the following elution program is adopted:
   mobile phase A is acetonitrile and mobile phase B is a phosphoric acid aqueous solution: 0 min to 10 min: mobile phase A: from 35% to 40%, and mobile phase B: from 65% to 60%;
   10 min to 38 min: mobile phase A: from 40% to 60%, and mobile phase B: from 60% to 40%; and
   38 min to 48 min: mobile phase A: 60%, and mobile phase B: 40%.

As an improvement of the above technical solution, the QC method for an HSBD composition further includes:
(3) identifying *Astragalus membranaceus, Semen Lepidii, Paeoniae Radix Rubra,* and *Rheum palmatum* by TLC.

As an improvement of the above technical solution, a determination method of the total anthraquinone content includes:
(1) weighing appropriate amounts of aloe emodin, rheinic acid, emodin, chrysophanol, and emodin methyl ether, and adding methanol to prepare an anthraquinone reference solution;
(2) subjecting the HSBD composition to extraction with methanol to prepare a total anthraquinone test solution; and
(3) injecting the anthraquinone reference solution and the total anthraquinone test solution into a liquid chromatograph with octadecylsilane-bonded silica gel as a filler, and conducting gradient elution with acetonitrile as a mobile phase A and a phosphoric acid aqueous solution as a mobile phase B to determine the total anthraquinone content in the HSBD composition.

As an improvement of the above technical solution, a determination method of the free anthraquinone content includes:
(1) weighing appropriate amounts of aloe emodin, rheinic acid, emodin, chrysophanol, and emodin methyl ether, and adding methanol to prepare an anthraquinone reference solution;
(2) subjecting the HSBD composition to extraction with methanol to prepare a free anthraquinone test solution; and
(3) injecting the anthraquinone reference solution and the free anthraquinone test solution into a liquid chromatograph with octadecylsilane-bonded silica gel as a filler, and conducting gradient elution with acetonitrile as a mobile phase A and a phosphoric acid aqueous solution as a mobile phase B to determine the free anthraquinone content in the HSBD composition.

As an improvement of the above technical solution, in the determination method of the total anthraquinone content and the determination method of the free anthraquinone content, the octadecylsilane-bonded silica gel is used as a filler, and the gradient elution is conducted with acetonitrile as a mobile phase A and a 0.1 vol% phosphoric acid aqueous solution as a mobile phase B under the following conditions: flow rate: 0.6 mL/min to 1 mL/min, detection wavelength: 253 nm to 256 nm, and column temperature: 25°C to 35°C.

As an improvement of the above technical solution, the total anthraquinone test solution is prepared as follows:
adding 0.2 g to 0.5 g of the HSBD composition to an Erlenmeyer flask with a stopper, adding 20 mL to 30 mL of methanol, and heating to allow extraction under reflux for 20 min to 30 min; taking a resulting system out, cooling, weighing, and making up for a weight loss with methanol; thoroughly shaking and filtering the system, and taking 10 mL to 15 mL of a subsequent filtrate; subjecting the subsequent filtrate to vacuum distillation to dryness to recover the solvent and obtain a residue, adding 10 mL to 15 mL of a 8% hydrochloric acid solution to the residue, and subjecting a resulting mixture to an ultrasonic treatment for 2 min to 5 min; adding 10 mL to 20 mL of trichloromethane (TCM), and heating to reflux for 1 h to 3 h; cooling a resulting reflux system and transferring to a separatory funnel, washing a vessel for the reluxwith a small amount of TCM, and adding the small amount of TCM to the separatory funnel; separating to obtain a primary TCM phase and an acide phase, and subjecting the acid phase to extraction with 10 mL to 15 mL of TCM 2 to 5 times to collect TCM phases and combine with the primary TCM phase; and subjecting a combined TCM phase to vacuum distillation todryness to recover the solvent and obtain a product; dissolving the product with methanol, transferring a resulting solution to a 10 mL volumetric flask, and adding methanol to a specified scale; and thoroughly shaking, filtering, and taking a subsequent filtrate.

As an improvement of the above technical solution, the free anthraquinone test solution is prepared as follows:
adding 0.2 g to 0.5 g of the HSBD composition to an Erlenmeyer flask with a stopper, adding 25 mL to 30 mL of methanol, weighing, and heating to reflux for 20 min to 60 min; taking a resulting system out, cooling, weighing once again, and making up for a weight loss with methanol; and thoroughly shaking, filtering, and taking a subsequent filtrate.

As an improvement of the above technical solution, the anthraquinone reference solution is prepared as follows:
weighing 1.581 mg of an aloe emodin reference, 3.017 mg of a rheinic acid reference, 1.604 mg of an emodin reference, 2.656 mg of a chrysophanol reference, and 5.221 mg of an emodin methyl ether reference, adding each of the above to a 100 mL volumetric flask, and adding methanol to prepare an aloe emodin stock solution with 15.807 µg of the aloe emodin per mL, a rheinic acid stock solution with 30.167 µg of the rheinic acid per mL, an emodin stock solution with 16.039 µg of the emodin per mL, a chrysophanol stock solution with 26.563 µg of the chrysophanol per mL, and an emodin methyl ether stock solution with 52.213 µg of the emodin methyl ether per mL; and accurately pipetting 1 mL of the aloe emodin stock solution, 1 mL of the rheinic acid stock solution, 1 mL of the emodin stock solution, 1 mL of the chrysophanol stock solution, and 0.1 mL of the emodin methyl ether stock solution to a 10 mL volumetric flask, and adding methanol to prepare a mixed solution with 1.581 µg of the aloe emodin, 3.017 µg of the rheinic acid, 1.604 µg of the emodin, 2.656 µg of the chrysophanol, and 0.522 µg of the emodin methyl ether per mL.

As an improvement of the above technical solution, a determination method of the total content of ephedrine hydrochloride and pseudoephedrine hydrochloride includes:
(1) weighing an appropriate amount of an ephedrine hydrochloride reference and an appropriate amount of a pseudoephedrine hydrochloride reference, and adding methanol to prepare an ephedrine reference solution with 10 µg of the ephedrine hydrochloride reference and 10 µg of the pseudoephedrine hydrochloride reference per mL;
(2) subjecting the HSBD composition to extraction with a hydrochloric acid solution to prepare an ephedrine test solution; and
(3) injecting the ephedrine reference solution and the ephedrine test solution into a liquid chromatograph with polar diethyl ether-linked phenyl-bonded silica gel as a filler, and conducting elution with a mixed solution of methanol and a phosphoric acid aqueous solution as a mobile phase at a flow rate of 0.6 mL/min to 1 mL/min, a column temperature of 25°C to 35°C, and a detection wavelength of 205 nm to 215 nm to determine the total content of ephedrine hydrochloride and pseudoephedrine hydrochloride in the HSBD composition.

As an improvement of the above technical solution, in the determination method of the total content of ephedrine hydrochloride and pseudoephedrine hydrochloride, methanol and a phosphoric acid aqueous solution are adopted as mobile phases; and
the phosphoric acid aqueous solution is a mixed solution of phosphoric acid, diethylamine (DEA), triethylamine (TEA), and water, in which a volume fraction of the phosphoric acid is 0.090% to 0.094%, a volume fraction of the DEA is 0.01% to 0.04%, and a volume fraction of the TEA is 0.02% to 0.06%.

As an improvement of the above technical solution, a determination method of the paeoniflorin content includes:
(1) weighing an appropriate amount of a paeoniflorin reference, and adding methanol to prepare a paeoniflorin reference solution with 0.13 mg of the paeoniflorin reference per mL;
(2) subjecting the HSBD composition to extraction with methanol to prepare a paeoniflorin test solution; and
(3) injecting the paeoniflorin reference solution and the paeoniflorin test solution into a liquid chromatograph with octadecyl-bonded silica gel as a filler, and conducting elution with a methanol-0.05 mol/L monopotassium phosphate (MKP) aqueous solution as a mobile phase at a flow rate of 0.8 mL/min to 1.2 mL/min, a detection wavelength of 225 nm to 230 nm, and a column temperature of 30°C to 35°C to determine the paeoniflorin content in the HSBD composition.

As an improvement of the above technical solution, a TLC identification method for the ephedra includes:
(1) grinding 5 g to 10 g of the HSBD composition, adding 3 mL to 5 mL of a concentrated ammonia solution for wetting, adding 25 mL to 30 mL of TCM, and heating to reflux for 0.5 h to 1 h; and filtering a resulting system, subjecting a filtrate to evaporation to dryness to obtain a residue, and dissolving theresidue with 1 mL to 2 mL of methanol to obtain an ephedra test solution;
(2) taking an ephedrine hydrochloride reference, and adding methanol to prepare an ephedra reference solution with 1 mg of the ephedrine hydrochloride reference per mL; and
(3) spotting 1 µL to 5 µL of each of the ephedra test solution and the ephedra reference solution on a same silica gel G TLC plate, and developing with a mixed solution of TCM, methanol, and a concentrated ammonia solution in a volume ratio of 20:5:0.5 as a developing agent; and taking the silica gel G TLC plate out, air-drying, spraying with a ninhydrin solution, and heating until stained spots are clearly visulized, where a spot at a position in a chromatogram of the test solution is in the same color as a spot at a corresponding position in a chromatogram of the reference solution.

As an improvement of the above technical solution, a TLC identification method for the licorice includes:
(1) grinding 5 g to 10 g of the HSBD composition, adding 40 mL to 50 mL of diethyl ether, and heating to reflux for 1 h to 2 h; filtering a resulting system to obain an ether solution and a filter residue, discardingthe ether solution, dissolving the filter residue with 30 mL to 50 mL of methanol, and heating to reflux for 0.5 h to 1.5 h; filtering a resulting reflux system, subjecting a filtrate to evaporation to dryness to obtain a residue, dissolving the residue with 40 mL to 50 mL of water, and subjecting a resulting solution to extraction with 20 mL to 40 mL of n-butanol under shaking 1 to 3 times to collect n-butanol phases; combining the n-butanol phases, washing a combined n-butanol phase with water 1 to 3 times to obtain a n-butanolliquid, and discarding resulting aqueous phases; and evaporating the n-butanolliquid to drynessto obtain aproduct, and dissolving the product with 5 mL to 10 mL of methanol to obtain a licorice test solution;
(2) taking 1 g to 3 g of a licorice reference, and preparing a licorice reference solution according to the preparation of the licorice test solution in step (1); and
(3) spotting 2 µL to 5 µL of each of the licorice test solution and the licorice reference solution on a same silica gel G TLC plate prepared with a 1% sodium hydroxide solution, and developing with a mixed solution of ethyl acetate, formic acid, glacial acetic acid, and water in a volume ratio of 15:1:1:2 as a developing agent; and taking the silica gel G TLC plate out, air-drying, spraying with a 10% sulfuric acid-ethanol solution, and heating at 100°C to 110°C until stained spots are clearly visulized, where a spot at a position in a chromatogram of the test solution is in the same color as a spot at a corresponding position in a chromatogram of the reference solution.

As an improvement of the above technical solution, a TLC identification method for the *Magnolia officinalis* includes:
(1) grinding 5 g to 10 g of the HSBD composition, adding 15 mL to 25 mL of methanol, and subjecting a resulting mixture to an ultrasonic treatment for 0.5 h to 1 h; filtering a resulting system, subjecting a filtrate to evaporation to dryness to obtain a residue, dissolving the residue with 40 mL to 50 mL of water, and subjecting a resulting solution to extraction with 20 mL to 30 mL of ethyl acetate under shaking 1 to 3 times to collect ethyl acetate phases; and combining the ethyl acetate phases, subjecting a combined ethyl acetate phase to evaporation to dryness to obtain a product, and dissolving the product with 1 mL to 2 mL of methanol to obtain a *Magnolia officinalis* test solution;
(2) taking a magnolol reference, and adding methanol to prepare a magnolol reference solution with 1 mg of the magnolol reference per mL; and taking a honokiol reference, and adding methanol to prepare a honokiol reference solution with 1 mg of the honokiol reference per mL; and
(3) spotting 2 µL to 5 µL of each of the *Magnolia officinalis* test solution, the magnolol reference solution, and the honokiol reference solution on a same silica gel G TLC plate, and developing with a mixed solution of toluene, ethyl acetate, and methanol in a volume ratio of 17:3:3 as a developing agent; and taking the silica gel G TLC plate out, air-drying, spraying with a 5% vanillin-sulfuric acid solution, and heating until stained spots are clearly visulized, where a spot at a position in a chromatogram of the test solution is in the same color as a spot at a corresponding position in a chromatogram of the reference solution.

As an improvement of the above technical solution, a TLC identification method for the *Astragalus membranaceus* includes:
(1) taking 5 g to 10 g of the HSBD composition, adding 25 mL to 30 mL of methanol, and subjecting a resulting mixture to an ultrasonic treatment for 0.5 h to 1 h; cooling and filtering a resulting system to obtain a filtrate, subjecting the filtrate to evaporation to dryness to obtain a residue, dissolving the residue with 20 mL to 30 mL of water, and subjecting a resulting solution to extraction with 15 mL to 30 mL of water-saturated n-butanol under shaking 1 to 3 times to collectand combine n-butanol phases; washing a combined n-butanol phase with 20 mL to 30 mL of an ammonia solution 1 to 3 times to obtain a n-butanol liquid, and discarding resulting ammonia phases; and evaporating the n-butanolliquid to dryness to obtain a product, and dissolving the product with 1 mL to 3 mL of methanol to obtain an *Astragalus membranaceus* test solution;
(2) taking an astragaloside reference, and adding methanol to prepare an *Astragalus membranaceus* reference solution with 1 mg of the astragaloside reference per mL; and
(3) spotting 5 µL to 8 µL of the *Astragalus membranaceus* test solution and 2 µL to 3 µL of the *Astragalus membranaceus* reference solution on a same silica gel G TLC plate, and developing at 4°C to 10°C with a lower layer ofa mixed solution of TCM, methanol, and water in a volume ratio of 13:7:2 as a developing agent; and taking the silica gel G TLC plate out, air-drying, spraying with a 10% sulfuric acid-ethanol solution, heating at 100°C to 105°C until stained spots are clearly visulized, and observing under ultraviolet (UV) light, where a fluorescent spot at a position in a chromatogram of the test solution is in the same color as a fluorescent spot at a corresponding position in a chromatogram of the reference solution.

As an improvement of the above technical solution, a TLC identification method for the *Semen Lepidii* includes:
(1) grinding 5 g to 10 g of the HSBD composition, adding 20 mL to 30 mL of 70% methanol, and subjecting a resulting mixture to an ultrasonic treatment for 0.5 h to 1 h; cooling and filtering a resulting system, subjecting a filtrate to evaporation to dryness to obtain a residue, and dissolving the residue with 5 mL to 10 mL of water; allowing a resulting solution to pass through a D101 macroporous resin column, eluting with water until an eluate is colorless, eluting with 70% methanol until an eluate is colorless, and collecting an 70% methanol eluate; and subjecting the 70% methanol eluate to evaporation to dryness, and dissolving a residue with 1 mL to 2 mL of methanol to obtain a *Semen Lepidii* test solution;
(2) taking a quercetin-3-O-β-D-glucose-7-O-β-D-gentiobioside reference, and adding 30% methanol to prepare a *Semen Lepidii* reference solution with 0.1 mg of the quercetin-3-O-β-D-glucose-7-O-β-D-gentiobioside reference per mL; and
(3) spotting 1 µL to 5 µL of each of the *Semen Lepidii* test solution and the *Semen Lepidii* reference solution on a same polyamide (PA) film, and developing with a mixed solution of ethyl acetate, methanol, and water in a volume ratio of 7:2:1 as a developing agent; and taking the PA film out, air-drying, spraying with a 2% aluminum chloride-ethanol solution, hot air-drying, and observing under UV light, where a fluorescent spot at a position in a chromatogram of the test solution is in the same color as a fluorescent spot at a corresponding position in a chromatogram of the reference solution.

As an improvement of the above technical solution, a TLC identification method for the *Paeoniae Radix Rubra* includes:
(1) grinding 3 g to 5 g of the HSBD composition, adding 25 mL to 40 mL of methanol, and subjecting a resulting mixture to an ultrasonic treatment for 0.5 h to 1 h; and filtering a resulting system, subjecting a filtrate to evaporation to dryness to obtain a residue, and dissolving the residue with 1 mL to 2 mL of methanol to obtain a *Paeoniae Radix Rubra* test solution,
(2) taking a paeoniflorin reference, and adding methanol to prepare a *Paeoniae Radix Rubra* reference solution with 1 mg of the paeoniflorin reference per mL; and
(3) spotting 2 µL to 5 µL of each of the *Paeoniae Radix Rubra* test solution and the *Paeoniae Radix Rubra* reference solution on a same silica gel G TLC plate, and developing with a mixed solution of TCM, ethyl acetate, methanol, and formic acid in a volume ratio of 40:5:10:0.2 as a developing agent; and taking the silica gel G TLC plate out, air-drying, spraying with a 5% vanillin-sulfuric acid solution, and heating until stained spots are clearly visulized, where a spot at a position in a chromatogram of the test solution is in the same color as a spot at a corresponding position in a chromatogram of the reference solution.

As an improvement of the above technical solution, a TLC identification method for the *Rheum palmatum* includes:
(1) grinding 5 g to 10 g of the HSBD composition, adding 20 mL to 30 mL of methanol, and subjecting a resulting mixture to an ultrasonic treatment for 20 min to 30 min; filtering a resulting system, and taking 3 mL to 10 mL of a filtrate; subjecting the filtrate to evaporation to dryness to obtain a residue, dissolving the residue with 5 mL to 15 mL of water, adding 1 mL to 3 mL of hydrochloric acid, and heating to reflux for 20 min to 60 min; immediately cooling a resulting reflux system, and subjecting the reaction system to extraction with 20 mL to 30 mL of diethyl ether under shaking 2 to 3 times to collect diethyl ether phases; and combining the diethyl ether phases, subjecting a combined diethyl ether phase to evaporation to dryness to obtain a product, and dissolving product with 1 mL to 3 mL of TCM to obtain a *Rheum palmatum* test solution;
(2) taking 0.1 g of a *Rheum palmatum* reference, and preparing a *Rheum palmatum* reference solution according to the preparation of the *Rheum palmatum* test solution in step (1); and
(3) spotting 1 µL to 5 µL of each of the *Rheum palmatum* test solution and the *Rheum palmatum* reference solution on a same silica gel H TLC plate, and developing with an upper layer of a mixed solution of petroleum ether, ethyl formate, and formic acid in a volume ratio of 15:5:1 as a developing agent; and taking the silica gel H TLC plate out, air-drying, and observing under UV light, where a fluorescent spot at a position in a chromatogram of the test solution is in the same color as a fluorescent spot at a corresponding position in a chromatogram of the reference solution.

As an improvement of the above technical solution, the HSBD composition mainly includes the following components: 3 to 60 parts of the ephedra, 4.5 to 90 parts of the fried bitter almond, 7.5 to 150 parts of the raw gypsum, 1.5 to 30 parts of the licorice, 5 to 100 parts of the *PogostemonisHerba,* 5 to 100 parts of the *Magnolia officinalis*, 7.5 to 150 parts of the bran-fried *AtractylodesLancea,* 5 to 100 parts of the fried *Amomum tsaoko* fruit, 4.5 to 90 parts of the *RhizomaPinelliae,* 7.5 to 150 parts of the *Poriacocos,* 2.5 to 50 parts of the *Rheum palmatum,* 5 to 100 parts of the *Astragalus membranaceus,* 5 to 100 parts of the *Semen Lepidii,* 5 to 100 parts of the *Paeoniae Radix Rubra,* and an appropriate amount of the adjuvant; and
the HSBD composition is prepared into a traditional Chinese medicine preparation in a form selected from the group consisting of a granule, a decoction, a powder, a capsule, an oral liquid, a tablet, and a pill.

The implementation of the present disclosure has the following beneficial effects:
1. In the present disclosure, based on the research of a molecular action mechanism of the HSBD composition, the analysis of specific conditions of mass production, and the large amount of experimental investigation, the ephedra, licorice, *Magnolia officinalis*, *Astragalus membranaceus*, *Semen Lepidii*, *Paeoniae Radix Rubra*, and *Rheum palmatum* are identified by TLC, and the contents of combined anthraquinone, ephedrine hydrochloride, pseudoephedrine hydrochloride, and paeoniflorin are determined. Through the determination of the above aspects, a data basis is provided for the QC of mass production of the HSBD composition.
2. The determination method of each component in the HSBD composition of the present disclosure has excellent specificity and durability, and the accuracy and stability of the determination method can meet the requirements of large-scale production, which provides a prominent basis for ensuring the stability of the active components in the HSBD composition.
3. Each of the TLC identification methods in the present disclosure has prominent resolution, no interference by a negative sample, feasibility, short developing time, convenient observation, strong specificity, and excellent reproducibility, and can well control a quality of a drug in a mass production process.

### BRIEF DESCRIPTION OF THE DRAWINGS

FIG. 1 is an HPLC spectrum of an anthraquinone reference solution, where peak 1 is an aloe emodin peak, peak 2 is a rheinic acid peak, peak 3 is an emodin peak, peak 4 is a chrysophanol peak, and peak 5 is an emodin methyl ether peak;
FIG. 2 is an HPLC spectrum of a free anthraquinone negative sample solution;
FIG. 3 is an HPLC spectrum of a total anthraquinone negative sample solution;
FIG. 4 is an HPLC spectrum of a free anthraquinone test solution, where peak 1 is an aloe emodin peak, peak 2 is a rheinic acid peak, peak 3 is an emodin peak, peak 4 is a chrysophanol peak, and peak 5 is an emodin methyl ether peak;
FIG. 5 is an HPLC spectrum of a total anthraquinone test solution, where peak 1 is an aloe emodin peak, peak 2 is a rheinic acid peak, peak 3 is an emodin peak, peak 4 is a chrysophanol peak, and peak 5 is an emodin methyl ether peak;
FIG. 6 is a standard curve of an aloe emodin reference during the determination of a free anthraquinone content;
FIG. 7 is a standard curve of a rheinic acid reference during the determination of a free anthraquinone content;
FIG. 8 is a standard curve of an emodin reference during the determination of a free anthraquinone content;
FIG. 9 is a standard curve of a chrysophanol reference during the determination of a free anthraquinone content;
FIG. 10 is a standard curve of an emodin methyl ether reference during the determination of a free anthraquinone content;
FIG. 11 is a standard curve of an aloe emodin reference during the determination of a total anthraquinone content;
FIG. 12 is a standard curve of a rheinic acid reference during the determination of a total anthraquinone content;
FIG. 13 is a standard curve of an emodin reference during the determination of a total anthraquinone content;
FIG. 14 is a standard curve of a chrysophanol reference during the determination of a total anthraquinone content;
FIG. 15 is a standard curve of an emodin methyl ether reference during the determination of a total anthraquinone content;
FIG. 16 shows HPLC spectra of an ephedrine reference in different mobile phases;
FIG. 17 is an HPLC spectrum of an ephedra negative sample solution;
FIG. 18 is an HPLC spectrum of an ephedrine reference solution, where peak 1 is an ephedrine hydrochloride peak and peak 2 is a pseudoephedrine hydrochloride peak;
FIG. 19 is an HPLC spectrum of an ephedrine test solution, where peak 1 is an ephedrine hydrochloride peak and peak 2 is a pseudoephedrine hydrochloride peak;
FIG. 20 is a standard curve of ephedrine hydrochloride in an ephedrine reference;
FIG. 21 is a standard curve of pseudoephedrine hydrochloride in an ephedrine reference;
FIG. 22 is an HPLC spectrum of a *Paeonia lactiflora* negative sample solution;
FIG. 23 is an HPLC spectrum of a paeoniflorin reference solution, where peak 1 is a paeoniflorin peak;
FIG. 24 is an HPLC spectrum of a paeoniflorin test solution, where peak 1 is a paeoniflorin peak;
FIG. 25 is a standard curve of a paeoniflorin reference;
FIG. 26 is a TLC chromatogram of ephedra, where 1 to 3 are for different batches of the HSBD composition, 4 is for an ephedra reference, and 5 is for an ephedra-deficient negative sample;
FIG. 27 is a TLC chromatogram of ephedra at 21.1°C, where 1 to 3 are for different batches of the HSBD composition and 4 is for an ephedra reference;
FIG. 28 is a TLC chromatogram of ephedra at 6.4°C, where 1 to 3 are for different batches of the HSBD composition and 4 is for an ephedra reference;
FIG. 29 is a TLC chromatogram of ephedra at a relative humidity of 36%, where 1 to 3 are for different batches of the HSBD composition and 4 is for an ephedra reference;
FIG. 30 is a TLC chromatogram of ephedra at a relative humidity of 79%, where 1 to 3 are for different batches of the HSBD composition and 4 is for an ephedra reference;
FIG. 31 is a TLC chromatogram of ephedra at different spotting amounts, where 1 to 5 correspond to spotting amounts of 1 µL, 2 µL, 3 µL, 5 µL, and 10 µL of an ephedra reference solution, respectively, and 6 to 10 correspond to spotting amounts of 1 µL, 2 µL, 3 µL, 5 µL, and 10 µL of an ephedra test solution, respectively;
FIG. 32 is a TLC chromatogram of ephedra at a PUKE silica gel G plate, where 1 to 3 are for different batches of the HSBD composition and 4 is for an ephedra reference;
FIG. 33 is a TLC chromatogram of ephedra at a Merck silica gel G plate, where 1 to 3 are for different batches of the HSBD composition and 4 is for an ephedra reference;
FIG. 34 is a TLC chromatogram of licorice, where 1 to 3 are for different batches of the HSBD composition, 4 is for a licorice reference, and 5 is for a licorice-deficient negative sample;
FIG. 35 is a TLC chromatogram of licorice at 21.1°C, where 1 to 3 are for different batches of the HSBD composition and 4 is for a licorice reference;
FIG. 36 is a TLC chromatogram of licorice at 6.4°C, where 1 to 3 are for different batches of the HSBD composition and 4 is for a licorice reference;
FIG. 37 is a TLC chromatogram of licorice at a relative humidity of 36%, where 1 to 3 are for different batches of the HSBD composition and 4 is for a licorice reference;
FIG. 38 is a TLC chromatogram of licorice at a relative humidity of 79%, where 1 to 3 are for different batches of the HSBD composition and 4 is for a licorice reference;
FIG. 39 is a TLC chromatogram of licorice at different spotting amounts, where 1 to 5 correspond to spotting amounts of 2 µL, 4 µL, 6 µL, 8 µL, and 10 µL of a licorice test solution, respectively, and 6 to 10 correspond to spotting amounts of 2 µL, 4 µL, 6 µL, 8 µL, and 10 µL of a licorice reference solution, respectively;
FIG. 40 is a TLC chromatogram of licorice at a PUKE silica gel G plate, where 1 to 3 are for different batches of the HSBD composition and 4 is for a licorice reference;
FIG. 41 is a TLC chromatogram of licorice at a Merck silica gel G plate, where 1 to 3 are for different batches of the HSBD composition and 4 is for a licorice reference;
FIG. 42 is a TLC chromatogram of *Magnolia officinalis*, where 1 to 3 are for different batches of the HSBD composition, 4 is for a magnolol reference, 5 is for a honokiol reference, and 6 is for a *Magnolia officinalis-deficient* negative sample;
FIG. 43 is a TLC chromatogram of *Magnolia officinalis* at 26.1°C, where 1 to 3 are for different batches of the HSBD composition, 4 is for a magnolol reference, and 5 is for a honokiol reference;
FIG. 44 is a TLC chromatogram of *Magnolia officinalis* at 3. 1°C, where 1 to 3 are for different batches of the HSBD composition, 4 is for a magnolol reference, and 5 is for a honokiol reference;
FIG. 45 is a TLC chromatogram of *Magnolia officinalis* at a relative humidity of 36%, where 1 to 3 are for different batches of the HSBD composition, 4 is for a magnolol reference, and 5 is for a honokiol reference;
FIG. 46 is a TLC chromatogram of *Magnolia officinalis* at a relative humidity of 78%, where 1 to 3 are for different batches of the HSBD composition, 4 is for a magnolol reference, and 5 is for a honokiol reference;
FIG. 47 is a TLC chromatogram of *Magnolia officinalis* at different spotting amounts, where 1 to 4 correspond to spotting amounts of 2 µL, 4 µL, 6 µL, and 8 µL of a *Magnolia officinalis* test solution, respectively, 5 to 8 correspond to spotting amounts of 2 µL, 4 µL, 6 µL, and 8 µL of a magnolol reference solution, respectively, and 9 to 12 correspond to spotting amounts of 2 µL, 4 µL, 6 µL, and 8 µL of a honokiol reference solution;
FIG. 48 is a TLC chromatogram of *Magnolia officinalis* at a PUKE silica gel G plate, where 1 to 3 are for different batches of the HSBD composition, 4 is for a magnolol reference, and 5 is for a honokiol reference;
FIG. 49 is a TLC chromatogram of *Magnolia officinalis* at a Haiyang silica gel G plate, where 1 to 3 are for different batches of the HSBD composition, 4 is for a magnolol reference, and 5 is for a honokiol reference;
FIG. 50 is a TLC chromatogram of *Astragalus membranaceus,* where 1 to 3 are for different batches of the HSBD composition, 4 is for an *Astragalus membranaceus* reference, and 5 is for an *Astragalus membranaceus-deficient* negative sample;
FIG. 51 is a TLC chromatogram of *Astragalus membranaceus* at 25°C, where 1 to 3 are for different batches of the HSBD composition and 4 is for an *Astragalus membranaceus* reference;
FIG. 52 is a TLC chromatogram of *Astragalus membranaceus* at 9°C, where 1 to 3 are for different batches of the HSBD composition and 4 is for an *Astragalus membranaceus* reference;
FIG. 53 is a TLC chromatogram of *Astragalus membranaceus* at a relative humidity of 41%, where 1 to 3 are for different batches of the HSBD composition and 4 is for an *Astragalus membranaceus* reference;
FIG. 54 is a TLC chromatogram of *Astragalus membranaceus* at a relative humidity of 92%, where 1 to 3 are for different batches of the HSBD composition and 4 is for an *Astragalus membranaceus* reference;
FIG. 55 is a TLC chromatogram of *Astragalus membranaceus* at different spotting amounts, where 1 to 3 correspond to spotting amounts of 3 µL, 5 µL, and 8 µL of an *Astragalus membranaceus* test solution, respectively, and 4 to 6 correspond to spotting amounts of 2 µL, 3 µL, and 5 µL of an *Astragalus membranaceus* reference solution, respectively;
FIG. 56 is a TLC chromatogram of *Astragalus membranaceus* at a Haiyang silica gel G plate, where 1 to 3 are for different batches of the HSBD composition and 4 is for an *Astragalus membranaceus* reference;
FIG. 57 is a TLC chromatogram of *Astragalus membranaceus* at a Yinlong silica gel G plate, where 1 to 3 are for different batches of the HSBD composition and 4 is for an *Astragalus membranaceus* reference;
FIG. 58 is a TLC chromatogram of *Semen Lepidii,* where 1 to 3 are for different batches of the HSBD composition, 4 is for a *Semen Lepidii* reference, and 5 is for a *Semen Lepidii-deficient* negative sample;
FIG. 59 is a TLC chromatogram of *Semen Lepidii* at 25°C, where 1 to 3 are for different batches of the HSBD composition and 4 is for a *Semen Lepidii* reference;
FIG. 60 is a TLC chromatogram of *Semen Lepidii* at 9°C, where 1 to 3 are for different batches of the HSBD composition and 4 is for a *Semen Lepidii* reference;
FIG. 61 is a TLC chromatogram of *Semen Lepidii* at a relative humidity of 41%, where 1 to 3 are for different batches of the HSBD composition and 4 is for an*Semen Lepidii* reference;
FIG. 62 is a TLC chromatogram of *Semen Lepidii* at a relative humidity of 92%, where 1 to 3 are for different batches of the HSBD composition and 4 is for a *Semen Lepidii* reference;
FIG. 63 is a TLC chromatogram of *Semen Lepidii* at different spotting amounts, where 1 to 3 correspond to spotting amounts of 1 µL, 2 µL, and 3 µL of a *Semen Lepidii* reference solution, respectively, and 4 to 6 correspond to spotting amounts of 1 µL, 2 µL, and 3 µL of a *Semen Lepidii* test solution, respectively;
FIG. 64 is a TLC chromatogram of *Paeoniae Radix Rubra,* where 1 to 3 are for different batches of the HSBD composition, 4 is for a *Paeoniae Radix Rubra* reference, and 5 is for a *Paeoniae Radix Rubra-deficient* negative sample;
FIG. 65 is a TLC chromatogram of *Paeoniae Radix Rubra* at 21.1°C, where 1 to 3 are for different batches of the HSBD composition and 4 is for a *Paeoniae Radix Rubra* reference;
FIG. 66 is a TLC chromatogram of *Paeoniae Radix Rubra* at 6.4°C, where 1 to 3 are for different batches of the HSBD composition and 4 is for a *Paeoniae Radix Rubra* reference;
FIG. 67 is a TLC chromatogram of *Paeoniae Radix Rubra* at a relative humidity of 36%, where 1 to 3 are for different batches of the HSBD composition and 4 is for a *Paeoniae Radix Rubra* reference;
FIG. 68 is a TLC chromatogram of *Paeoniae Radix Rubra* at a relative humidity of 79%, where 1 to 3 are for different batches of the HSBD composition and 4 is for a *Paeoniae Radix Rubra* reference;
FIG. 69 is a TLC chromatogram of *Paeoniae Radix Rubra* at different spotting amounts, where 1 to 5 correspond to spotting amounts of 1 µL, 2 µL, 3 µL, 5 µL, and 10 µL of a *Paeoniae Radix Rubra* reference solution, respectively, and 6 to 10 correspond to spotting amounts of 1 µL, 2 µL, 3 µL, 5 µL, and 10 µL of a *Paeoniae Radix Rubra* test solution, respectively;
FIG. 70 is a TLC chromatogram of *Paeoniae Radix Rubra* at a PUKE silica gel G plate, where 1 to 3 are for different batches of the HSBD composition and 4 is for a *Paeoniae Radix Rubra* reference;
FIG. 71 is a TLC chromatogram of *Paeoniae Radix Rubra* at a Merck silica gel G plate, where 1 to 3 are for different batches of the HSBD composition and 4 is for a *Paeoniae Radix Rubra* reference;
FIG. 72 is a TLC chromatogram of *Rheum palmatum,* where 1 to 3 are for different batches of the HSBD composition, 4 is for a *Rheum palmatum* reference, and 5 is for a *Rheum palmatum-deficient* negative sample;
FIG. 73 is a TLC chromatogram of *Rheum palmatum* at 26.1°C, where 1 to 3 are for different batches of the HSBD composition and 4 is for a *Rheum palmatum* reference;
FIG. 74 is a TLC chromatogram of *Rheum palmatum* at 3.1°C, where 1 to 3 are for different batches of the HSBD composition and 4 is for a *Rheum palmatum* reference;
FIG. 75 is a TLC chromatogram of *Rheum palmatum* at a relative humidity of 36%, where 1 to 3 are for different batches of the HSBD composition and 4 is for a *Rheum palmatum* reference;
FIG. 76 is a TLC chromatogram of *Rheum palmatum* at a relative humidity of 78%, where 1 to 3 are for different batches of the HSBD composition and 4 is for a *Rheum palmatum* reference;
FIG. 77 is a TLC chromatogram of *Rheum palmatum* at different spotting amounts, where 1 to 5 correspond to spotting amounts of 1 µL, 2 µL, 3 µL, 5 µL, and 10 µL of a *Rheum palmatum* test solution, respectively, and 6 to 10 correspond to spotting amounts of 1 µL, 2 µL, 3 µL, 5 µL, and 10 µL of a *Rheum palmatum* reference solution, respectively;
FIG. 78 is a TLC chromatogram of *Rheum palmatum* at a PUKE silica gel H plate, where 1 to 3 are for different batches of the HSBD composition and 4 is for a *Rheum palmatum* reference; and
FIG. 79 is a TLC chromatogram of *Rheum palmatum* at a Yinlong silica gel H plate, where 1 to 3 are for different batches of the HSBD composition and 4 is for a *Rheum palmatum* reference.

### DETAILED DESCRIPTION

To make the objectives, technical solutions, and advantages of the present disclosure clearer, the present disclosure will be further described in detail in combination with the accompanying drawings and specific embodiments.

The HSBD composition of the present disclosure mainly includes the following components: ephedra, fried bitter almond, raw gypsum, licorice, *PogostemonisHerba, Magnolia officinalis*, bran-fried *AtractylodesLancea,* fried *Amomum tsaoko* fruit, *RhizomaPinelliae, Poriacocos, Rheum palmatum, Astragalus membranaceus, Semen Lepidii,* and *Paeoniae Radix Rubra.*

In the HSBD composition of the present disclosure, the ephedra, *PogostemonisHerba,* and gypsum serve as sovereign TCMCs. The ephedra and *PogostemonisHerba* are hard, bitter, warm, and aromatic, and can relieve exterior syndrome, suppress asthma, and remove dampness for regulating stomach. The gypsum is hard, sweet, and cold, and can clear stagnated heat from the lung and stomach and promote the secretion of saliva or body fluid. The three sovereign TCMCs complement each other to achieve the effects of relieving exterior syndrome, dissipating coldness, resolving dampness with aromatics, clearing heat, and relieving dyspnea. The fried bitter almond, *RhizomaPinelliae, Magnolia officinalis*, bran-fried *AtractylodesLancea,* fried *Amomum tsaoko* fruit, and *Poriacocos* serve as ministerial TCMCs. The fried bitter almond, *RhizomaPinelliae,* and *Magnolia officinalis* are hard, bitter, and warm, and can promote the circulation of qi, calm the adverse-rising energy, open knots, and calm asthma. The bran-fried *AtractylodesLancea* and fried *Amomum tsaoko* fruit are pungent, bitter, and warm, and can enter the spleen and stomach meridians to eliminate dampness, strengthen spleen, and break knots caused by anger. The *Poriacocos* can promote diuresis and strengthen spleen. The six ministerial TCMCs together assist with the sovereign TCMCs to achieve the effects of eliminating dampness, strengthening spleen, promoting qi circulation, removing meridian obstruction, free coursing, and expelling evil spirits. The *Astragalus membranaceus, Paeoniae Radix Rubra, Semen Lepidii,* and *Rheum palmatum* serve as adjuvant TCMCs. The *Astragalus membranaceus* is sweet and warm, and can invigorate the lung and spleen. The *Paeoniae Radix Rubra* is bitter and slightly cold, and can cool blood and dissipate blood stasis, which is used to treat blood stasis caused by damage of healthy qi and stagnation of qi at a later stage of the epidemic. The *Semen Lepidii* is hard and cold, and can assist with the sovereign TCM component gypsum to clear lung heat and promote diuresis, thereby preventing or treating wet lung (pulmonary edema) lesions. The *Rheum palmatum* is bitter and cold, and can enter large intestinal meridians for bowel-relaxing. Due to the theory of "lung and large intestine being interior-exteriorly related", the *Rheum palmatum* can assist with the sovereign TCM component gypsum to clear lung heat, and can also assist with the *Paeoniae Radix Rubra* to promote blood circulation and cool blood. The four adjuvantTCMCs can achieve the effects of caring for healthy qi, purging heat, cooling blood, and promoting blood circulation to remove blood stasis. The licorice serves as a conductant TCM component, and is sweet and neutral. The licorice can reconcile the TCMCs, and the combination of *Paeoniae Radix Rubra* and licoriceis adopted with reference to a peony and licorice decoction to alleviate acute symptoms. Thus, the HSBD composition can play the roles of relieving exterior syndrome, resolving dampness, clearing heat, relieving dyspnea, invigorating qi, and dissipating blood stasis.

It has been clinically found that patients with severe COVID-19 pneumonia have the following characteristics: (1) There is unsurfaced fever difficult to cure, or medium and low fever, or even no fever. (2) Dyspnea and fatigue are also the main manifestations. (3) Digestive system symptoms such as poor appetite, loose stool, and diarrhea are common. (4) A tongue coat is thick and greasy. The above characteristics are in line with the characteristics of dampness evil pathopoiesis: heavy turbidity, obstructing qi and damaging yang, viscosity, and downward trend. The dampness evil can cause a disease alone or a disease accompanied by cold and heat that are manifested as cold-dampness and dampness-heat, where the heat can be caused by dryness or can be caused by dampness evil and persistent depression. The dampness evil, cold-dampness, and dampness-heat each can cooperate with an epidemic toxin to cause a disease, which is common in light cold-dampness stagnating in the lung, dampness-heat accumulating in the lung, ordinary dampness-toxin stagnating in the lung, and cold-dampness obstructing the lung. If untreated timely, mistreated, or allowed to develop, the disease will hurt the ying blood, reverse the transmission to pericardium, and evolve into severe COVID-19 pneumonia. Therefore, it is believed that the COVID-19 pneumonia is prominently manifested as "dampness toxin epidemic", which is located in the lung and closely related to the spleen, and has the pathological characteristics of cold-heat jumble and deficiency-excess mixing and the pathological factors of toxin, dampness, heat, cold, stasis, and deficiency. For the pneumonia, the epidemic toxin is a foundation, and the core pathogenesis is a combination of epidemic toxin and dampness evil, which can be accompanied by the invasion of cold and heat into the body, the obstruction of chest and lung, the ascending and descending disorder of qi activity, the stasis of blood vessels, and the deficiency of both qi and yin. The COVID-19 pneumonia has a complex pathological mechanism involving various pathological factors.

The COVID-19 pneumonia is mainly caused by a lesion in the lung and involves the spleen and stomach, and its core pathogenesis is dampness toxin and stagnation of qi. A course of the COVID-19 pneumonia can be divided into an early stage, a middle stage, a severe stage, and a recovery stage, and can be subjected to syndrome differentiation-based treatment accordingly, including: resolving dampness and promoting circulation of qi, dispelling filth and detoxification, clearing lung and eliminating phlegm, promoting blood circulation to remove blood stasis, bowel-relaxing, and replenishing healthy qi. Therefore, the compatibility of the HSBD composition of the present disclosure is based on the core pathogenesis, and the HSBD composition has the main therapeutic effects of relieving exterior syndrome, resolving dampness, clearing heat, relieving dyspnea, and detoxifying and also has the auxiliary effects of removing blood stasis, dredging collaterals, invigorating qi, and nourishing yin. The combination of epidemic toxin and cold-dampness causes aversion to cold with fever, which is preferably treated by relieving exterior syndrome, resolving dampness, and detoxifying; the combination of epidemic toxin and dampness-heat causes loose stool and fatigue, which is preferably treated by clearing heat, resolving dampness, invigorating qi, and nourishing yin; and when there are symptoms such as obstruction of chest and lung, dyspnea, chest tightness, and shortness of breath, it is preferably treated by relieving dyspnea, removing blood stasis, and dredging collaterals.

The HSBD composition of the present disclosure can handle the integrated core pathogenesis of TCM treatment in the "Scheme for Diagnosis and Treatment of 2019 Novel Coronavirus Pneumonia (The 5th Trial Edition)", including coexisted warm-heat and dampness, impaired dispersing and descending of lung, obstruction of lung qi, turbid dampness, and stagnation of lung by heat; and the HSBD composition mainly has the effects of resolving dampness, promoting circulation of qi, freeing lung, relieving asthma, clearing heat and phlegm, invigorating qi, and promoting blood circulation. Previous clinical observations have shown that the HSBD composition of the present disclosure can improve the clinical symptoms of severe COVID-19 pneumonia. For severe patients, the HSBD composition of the present disclosure can significantly alleviate the main symptoms such as cough, fatigue, thirst, and vomiting. When used in combination with Western medicine, the HSBD composition of the present disclosure can shorten a cure time, significantly improve a respiratory function of a patient, and shorten the time to get out of oxygen uptake.For ordinary patients, the HSBD composition of the present disclosure can significantly alleviate the fever symptoms and can also improve the symptoms such as appetite decrease and chest distress.The HSBD composition of the present disclosure can significantly improve the clinical symptoms such as cough, fatigue, thirst, and vomiting of severe and ordinary COVID-19 pneumonia, and thus has become a drug urgently needed in the current epidemic situation for treating severe and ordinary COVID-19 pneumonia.

Preferably, the HSBD composition includes the following components:
3 to 60 parts of the ephedra, 4.5 to 90 parts of the fried bitter almond, 7.5 to 150 parts of the raw gypsum, 1.5 to 30 parts of the licorice, 5 to 100 parts of the *PogostemonisHerba,* 5 to 100 parts of the *Magnolia officinalis*, 7.5 to 150 parts of the bran-fried *AtractylodesLancea,* 5 to 100 parts of the fried *Amomum tsaoko* fruit, 4.5 to 90 parts of the *RhizomaPinelliae,* 7.5 to 150 parts of the *Poriacocos,* 2.5 to 50 parts of the *Rheum palmatum,* 5 to 100 parts of the *Astragalus membranaceus,* 5 to 100 parts of the *Semen Lepidii,* 5 to 100 parts of the *Paeoniae Radix Rubra,* and an appropriate amount of the adjuvant.

The HSBD composition is prepared into a TCM preparation in a form selected from the group consisting of a granule, a decoction, a powder, a capsule, an oral liquid, a tablet, and a pill.

The present disclosure provides a QC method for an HSBD composition, which can achieve a prominent detection effect on an HSBD composition of any dosage form. In the set process of the QC method of the present disclosure, the two aspects of identification and content determination of components in an HSBD composition are considered.

Specifically, for an identification method:
In a research process, the inventors use a molecular docking technique to analyze a relationship of each component in the HSBD composition with key targets for invasion, replication, assembly, and shedding and transfer of COVID-19 and key targets causing lung injury and inflammatory response of a host. Analysis results show that: The ephedra can respond to targets TMPRSS2, TACE, and AAK1 (virus invasion and endocytosis regulation) for inhibiting virus invasion and shedding and key targets VEGFR2 (vascular permeability) and ALK5 (vascular permeability and pulmonary fibrosis) for tissue damage caused by the virus invasion into a host. The licorice can respond to targets FURIN (virus invasion and endocytosis regulation), TACE, and AAK1 for inhibiting virus invasion and shedding and key targets sPLA2, AMPK (oxidative stress and inflammation), CCR2 (inflammation), p38αMAPK (inflammation and apoptosis), VEGFR2, and ALK5 for tissue damage caused by the virus invasion into a host. The *Magnolia officinalis* can respond to a target AAK1 for inhibiting virus invasion and shedding and key targets AMPK, VEGFR2, and ALK5 for tissue damage caused by the virus invasion into a host. The *Rheum palmatum* can respond to a target TMPRSS2 for inhibiting virus invasion and shedding and key targets AMPK, VEGFR2, and ALK5 for tissue damage caused by the virus invasion into a host. The *Astragalus membranaceus* can respond to a key target VEGFR2 for tissue damage caused by the virus invasion into a host. The *Paeoniae Radix Rubra* can respond to targets Mpro and ACE2. Through the actions of the above components on the above targets, the HSBD composition plays an anti-COVID-19 role. It can be known that the ephedra, licorice, and *Magnolia officinalis* can respond to a lot of targets to effectively inhibit the invasion, assembly, and shedding and transfer of the virus, and thus are core TCMCs. The *Astragalus membranaceus, Semen Lepidii, Paeoniae Radix Rubra,* and *Rheum palmatum* can only respond to few targets, but are also of great significance for anti-COVID-19. Therefore, from the perspective of efficacy, the ephedra, licorice, and *Magnolia officinalis* should be preferentially identified by TLC and the *Astragalus membranaceus, Semen Lepidii, Paeoniae Radix Rubra,* and *Rheum palmatum* can also be identified by TLC to establish a perfect identification method, which can provide a solid data basis for the quality monitoring of an HSBD composition.

In summary, on the basis of considering the above factors, the ephedra, licorice, *Magnolia officinalis*, *Astragalus membranaceus, Semen Lepidii, Paeoniae Radix Rubra,* and *Rheum palmatum* are identified by TLC in the present disclosure to establish a perfect identification method, which can provide a data basis for the quality monitoring of an HSBD composition.

For a content determination method: In a research process, the inventors use a molecular docking technique to conduct further investigation, and investigation results show that apigenin, 3-methoxyherbacetin, 3,5,4'-trihydroxy-8-methoxyflavone, and kaempferol in the ephedra have an impact on the above targets; rheinic acid, emodin methyl ether, 6-hydroxymusizin-8-O-β-D-glucoside, procyanidin B1-3'-O-gallate, and aloe emodin in the *Rheum palmatum* have an impact on the above targets; and baicalein and baicalin in the *Paeoniae Radix Rubra* have an impact on the above targets. Therefore, the detection of components related to ephedra, *Rheum palmatum,* and *Paeoniae Radix Rubra* is a key means to achieve the QC of the HSBD composition.

In addition, the ephedra in the HSBD composition mainly plays the roles of dispersing of Lung Qi, resolving phlegm, and relieving cough; and according to the principle of the TCM formula, the ephedra is a sovereign TCM component and plays an important role in the formula. Ephedrine introduced by the ephedra is volatile and easily lost during a mass production process. Therefore, the contents of ephedrine hydrochloride and pseudoephedrine hydrochloride in the ephedra are determined in the present disclosure. Specifically, in order to make the HSBD composition effectively play its role, a total content of ephedrine hydrochloride and pseudoephedrine hydrochloride should be controlled at 0.7 mg/g to 2.7 mg/g.

The *Rheum palmatum* in the HSBD composition mainly plays the roles of clearing heat, purging lung, promoting blood circulation, and cooling blood, which are mainly achieved by combined anthraquinone (*aloe emodin,* rheinic acid, emodin, chrysophanol, and emodin methyl ether) introduced by the *Rheum palmatum.* However, the combined anthraquinone is easily decomposed into free anthraquinone when heated, resulting in weakened efficacy. Thus, a content of the combined anthraquinone needs to be monitored. Therefore, in the present disclosure, a content of the combined anthraquinone in a finished drug is determined and monitored to achieve the QC of the HSBD composition. Specifically, in the HSBD composition of the present disclosure, the content of the combined anthraquinone shall be no less than 0.016%.

Further, the present disclosure also controls a content of the *Paeoniae Radix Rubra* by determining a content of paeoniflorin. Specifically, in the HSBD composition of the present disclosure, the content of paeoniflorin shall be 3 mg/g to 14 mg/g.

The QC method of the present disclosure is described below in three parts:

### 1. Determination of contents of components in the HSBD composition

### 1.1 Determination methods of total anthraquinone and free anthraquinone contents

In the present disclosure, the total anthraquinone and free anthraquinone contents in the HSBD composition are determined by HPLC, and then a combined anthraquinone content is calculated, where the combined anthraquinone content = the total anthraquinone content - the free anthraquinone content.

Specifically, in the present disclosure, the determination method of the total anthraquinone content includes:
(1) Chromatographic conditions: chromatographic column: octadecylsilane-bonded silica gel column; mobile phase: acetonitrile-0.1 vol% phosphoric acid aqueous solution; flow rate: 0.8 mL/min; detection wavelength: 254 nm; column temperature: 30°C; and injection volume: 10 µL.
Gradient elution was conducted in the mobile phase according to the following elution program:

| Time (min) | Acetonitrile | 0.1 vol% phosphoric acid aqueous solution |
|---|---|---|
| 0∼10 | 35%→40% | 65%→60% |
| 10∼38 | 40%→60% | 60%→40% |
| 38∼48 | 60% | 40% |

(2) Preparation of a total anthraquinone test solution: About 0.5 g of the HSBD composition was accurately weighed and added to an Erlenmeyer flask with a stopper, and 25 mL of methanol was accurately added; a resulting system was weighed, heated to allow extraction under reflux for 30 min, taken out, cooled, and weighed, then methanol was added to make up for a weight loss, a resulting mixture was thoroughly shaken and filtered, and 10 mL of a subsequent filtrate was taken and subjected to vacuum distillation to completely recover the solvent; 10 mL of a 8% hydrochloric acid solution was added, a resulting mixture was subjected to an ultrasonic treatment for 2 min, 10 mL of TCM was added, and a resulting mixture was heated to allow a reaction under reflux for 1 h, cooled, and placed in a separatory funnel; a reaction vessel was washed with a small amount of TCM, and resulting TCM was added to the separatory funnel; a resulting TCM phase was separated, and a resulting acid phase was subjected to extraction with 10 mL of TCM 3 times; resulting TCM phases were combined and subjected to vacuum distillation to completely recover the solvent; a residue was dissolved with methanol and transferred to a 10 mL volumetric flask, and methanol was added to a specified scale; and a resulting mixture was thoroughly shaken and filtered, and a subsequent filtrate was taken.
(3) Preparation of an anthraquinone reference solution: 1.581 mg of an aloe emodin reference, 3.017 mg of a rheinic acid reference, 1.604 mg of an emodin reference, 2.656 mg of a chrysophanol reference, and 5.221 mg of an emodin methyl ether reference each were weighed and added to a 100 mL volumetric flask, and methanol was added to prepare an aloe emodin stock solution with 15.807 µg of the aloe emodin per mL, a rheinic acid stock solution with 30.167 µg of the rheinic acid per mL, an emodin stock solution with 16.039 µg of the emodin per mL, a chrysophanol stock solution with 26.563 µg of the chrysophanol per mL, and an emodin methyl ether stock solution with 52.213 µg of the emodin methyl ether per mL; and 1 mL of the aloe emodin stock solution, 1 mL of the rheinic acid stock solution, 1 mL of the emodin stock solution, 1 mL of the chrysophanol stock solution, and 0.1 mL of the emodin methyl ether stock solution were accurately pipetted to a 10 mL volumetric flask, and methanol was added to prepare a mixed solution with 1.581 µg of the aloe emodin, 3.017 µg of the rheinic acid, 1.604 µg of the emodin, 2.656 µg of the chrysophanol, and 0.522 µg of the emodin methyl ether per mL.
(4) 10 µL of each of the total anthraquinone test solution and the anthraquinone reference solution was accurately pipetted and injected into a liquid chromatograph to determine a total anthraquinone content in the HSBD composition.

Specifically, in the present disclosure, the determination method of the free anthraquinone content includes:
(1) Chromatographic conditions: chromatographic column: octadecylsilane-bonded silica gel column; mobile phase: acetonitrile-0.1 vol% phosphoric acid aqueous solution; mobile phase flow rate: 0.8 mL/min; detection wavelength: 254 nm; column temperature: 30°C; and injection volume: 10 µL.
Gradient elution was conducted in the mobile phase according to the following elution program:

| Time (min) | Acetonitrile | 0.1 vol% phosphoric acid aqueous solution |
|---|---|---|
| 0∼10 | 35%→40% | 65%→60% |
| 10∼38 | 40%→60% | 60%→40% |
| 38∼48 | 60% | 40% |

(2) Preparation of a free anthraquinone test solution: About 0.5 g of the HSBD composition was accurately weighed and added to an Erlenmeyer flask with a stopper, 25 mL of methanol was accurately added, and a resulting system was weighed, heated to allow a reaction under reflux for 30 min, taken out, cooled, and weighed once again; and methanol was added to make up for a weight loss, a resulting mixture was thoroughly shaken and filtered, and a subsequent filtrate was taken.
(3) Preparation of an anthraquinone reference solution: 1.581 mg of an aloe emodin reference, 3.017 mg of a rheinic acid reference, 1.604 mg of an emodin reference, 2.656 mg of a chrysophanol reference, and 5.221 mg of an emodin methyl ether reference each were weighed and added to a 100 mL volumetric flask, and methanol was added to prepare an aloe emodin stock solution with 15.807 µg of the aloe emodin per mL, a rheinic acid stock solution with 30.167 µg of the rheinic acid per mL, an emodin stock solution with 16.039 µg of the emodin per mL, a chrysophanol stock solution with 26.563 µg of the chrysophanol per mL, and an emodin methyl ether stock solution with 52.213 µg of the emodin methyl ether per mL; and 1 mL of the aloe emodin stock solution, 1 mL of the rheinic acid stock solution, 1 mL of the emodin stock solution, 1 mL of the chrysophanol stock solution, and 0.1 mL of the emodin methyl ether stock solution were accurately pipetted to a 10 mL volumetric flask, and methanol was added to prepare a mixed solution with 1.581 µg of the aloe emodin, 3.017 µg of the rheinic acid, 1.604 µg of the emodin, 2.656 µg of the chrysophanol, and 0.522 µg of the emodin methyl ether per mL.
(4) 10 µL of each of the free anthraquinone test solution and the anthraquinone reference solution was accurately pipetted and injected into a liquid chromatograph to determine a free anthraquinone content in the HSBD composition.

It should be noted that a same elution program is adopted in both the determination method of the total anthraquinone content and the determination method of the free anthraquinone content, and a same anthraquinone reference solution is adopted in both the determination method of the total anthraquinone content and the determination method of the free anthraquinone content.

It should also be noted that, because the HSBD composition includes a total of 14 active ingredients and each active ingredient introduces a large amount of chemicals to cause a great impact on the test accuracy of the total anthraquinone and free anthraquinone, the present disclosure re-designs a gradient elution program on the basis of considering the accuracy, durability, and specificity of the test method. Specifically, investigation results show that the following elution program can effectively separate the aloe emodin, rheinic acid, emodin, and chrysophanol in the HSBD composition without setting too many gradient changes: 10 min to 38 min: acetonitrile proportion: 40%→60%, and 0.1 vol% phosphoric acid proportion: 60%→40%; and during a time range of 38 min to 48 min, emodin methyl ether has different peak times on different columns, and thus in this time range, isocratic elution is conducted in acetonitrile-0.1 vol% phosphoric acid (60:40) for 10 min to ensure the durability of the test method for different columns and improve the test accuracy.

The determination methods of the total anthraquinone and free anthraquinone in the present disclosure are subjected to methodological verification below:

### 1.1.2 Specificity investigation

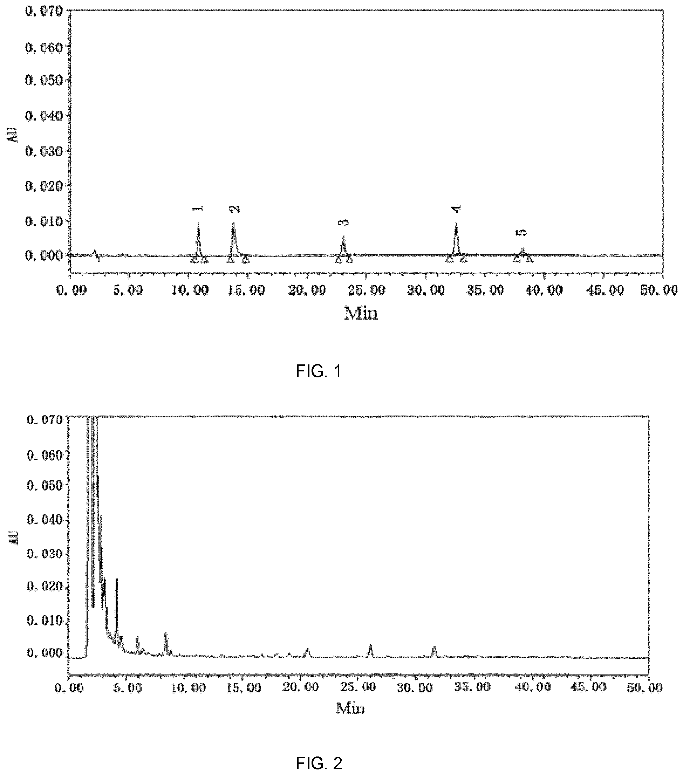

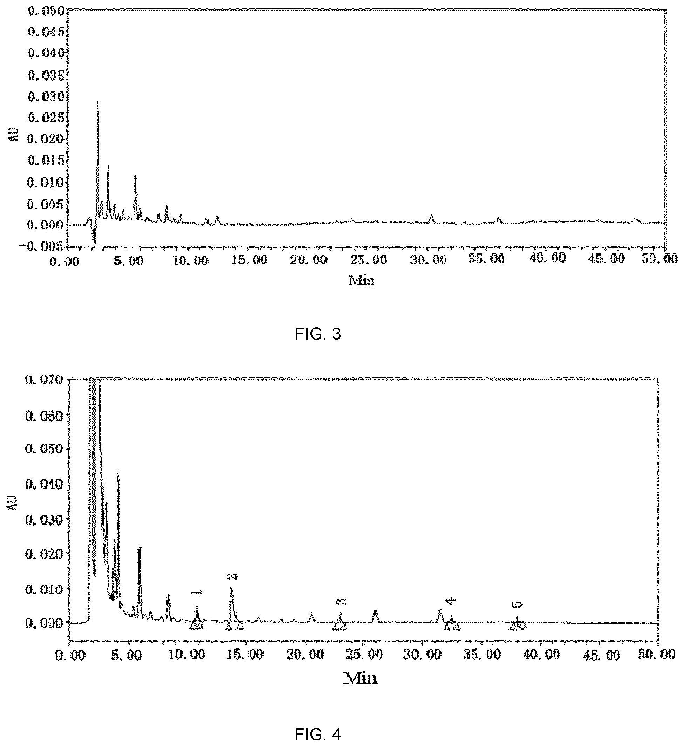

A *Rheum palmatum* negative sample was taken to prepare a total anthraquinone negative sample solution according to the preparation method of the total anthraquinone test solution, and a *Rheum palmatum* negative sample was taken to prepare a free anthraquinone negative sample solution according to the preparation method the free anthraquinone test solution. 10 µL of each of the free anthraquinone test solution, the total anthraquinone test solution, the free anthraquinone negative sample solution, the total anthraquinone negative sample solution, and the anthraquinone reference solution was injected into a liquid chromatograph and tested according to the proposed conditions, and test results were shown in FIG. 1 to FIG. 5. A peak position of each reference was shown in the following table:

**Table 1 Peak positions for the investigation of specificity of the determination of total anthraquinone/free anthraquinone contents in the HSBD composition**

| | Aloe emodin | Rheinic acid | Emodin | Chrysophanol | Emodin methyl ether |
|---|---|---|---|---|---|
| Anthraquinone reference solution | 10.833 | 13.795 | 23.073 | 32.568 | 38.215 |
| Free anthraquinone test solution | 10.815 | 13.732 | 23.036 | 32.500 | 38.119 |
| Total anthraquinone test solution | 10.798 | 13.688 | 23.017 | 32.504 | 38.090 |

The results show that, during a separate free anthraquinone/total anthraquinone sample test process,there is no chromatographic peakat a retention time corresponding to the free anthraquinone/total anthraquinone, and there is also no impurity peak at a similar retention time. Thus, the negative sample has no interference, and the method has prominent specificity.

### 1.1.3 Linear relationship investigation

### (1) Linear relationship investigation for the determination of the free anthraquinone content

3.570 mg of an aloe emodin reference, 2.751 mg of an emodin reference, 1.631 mg of a chrysophanol reference, and 3.051 mg of an emodin methyl ether reference each were accurately weighed and added to a 50 mL volumetric flask, and methanol was added to prepare an aloe emodin reference solution with 71.405 µg of the aloe emodin per mL, an emodin reference solution with 55.015 µg of the emodin per mL, a chrysophanol reference solution with 32.629 µg of the chrysophanol per mL, and an emodin methyl ether reference solution with 61.024 µg of the emodin methyl ether per mL; and 2.057 mg of a rheinic acid reference, 5 mL of each of the aloe emodin reference solution, the emodin reference solution, and the chrysophanol reference solution, and 1 mL of the emodin methyl ether reference solution were accurately taken and added to a 100 mL volumetric flask, and methanol was added to prepare a mixed solution with 3.570 µg of the aloe emodin, 20.565 µg of the rheinic acid, 2.751 µg of the emodin, 1.631 µg of the chrysophanol, and 0.610 µg of the emodin methyl ether per mL, which was a free anthraquinone reference stock solution. 5 mL, 3 mL, 1 mL, 0.5 mL, and 0.2 mL of the free anthraquinone reference stock solution each were accurately pipetted and added to a 10 mL volumetric flask to prepare reference solutions respectively including 0.071 µg, 0.179 µg, 0.357 µg, 1.071 µg, and 1.785 µg of aloe emodin per mL, 0.411 µg, 1.028 µg, 2.057 µg, 6.170 µg, and 10.283 µg of rheinic acid per mL, 0.055 µg, 0.138 µg, 0.275 µg, 0.825 µg, and 1.375 µg of emodin per mL, 0.033 µg, 0.082 µg, 0.163 µg, 0.489 µg, and 0.816 µg of chrysophanol per mL, and 0.012 µg, 0.030 µg, 0.061 µg, 0.183 µg, and 0.305 µg of emodin methyl ether per mL.

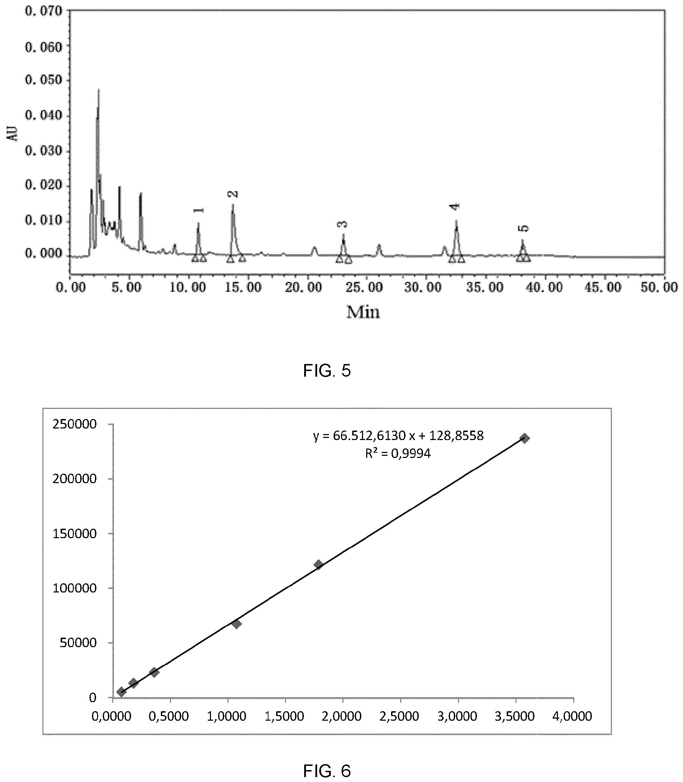

10 µL of each of the above 6 reference solutions with different concentrations was accurately pipetted and tested, and chromatographic peak areas were recorded. With a peak area as an ordinate (y) and a reference concentration as an abscissa (x), a standard curve was plotted, and results were shown in FIG. 6 to FIG. 10.

It can be seen from FIG. 6 that a regression equation of the aloe emodin is as follows: y = 66,512.6130 x + 128.8558, with a correlation coefficient R² = 0.9994, indicating that an injection quality of the aloe emodin in an injection concentration range of 0.071 µg/mL to 3.570 µg/mL has a prominent linear relationship with a peak area.

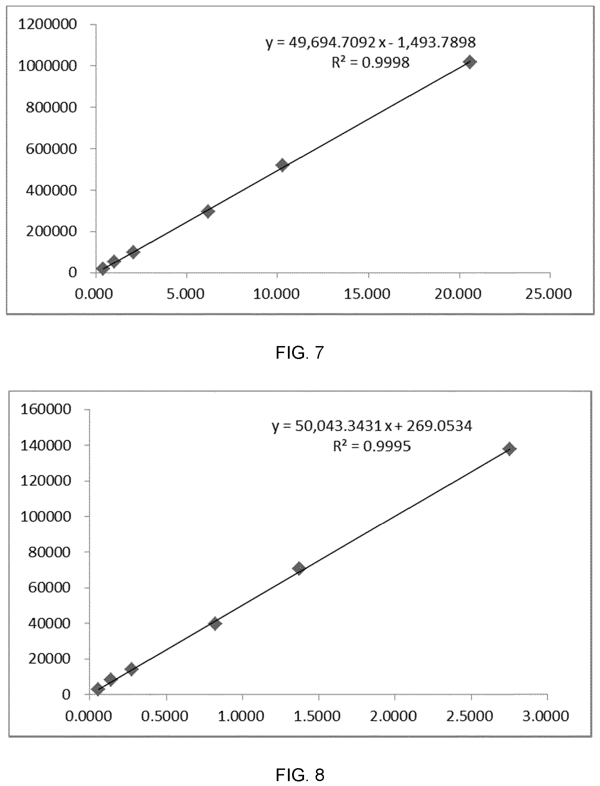

It can be seen from FIG. 7 that a regression equation of the rheinic acid is as follows: y = 49,694.7092 x - 1,493.7898, with a correlation coefficient R² = 0.9998, indicating that an injection quality of the rheinic acid in an injection concentration range of 0.411 µg/mL to 20.565 µg/mL has a prominent linear relationship with a peak area.

It can be seen from FIG. 8 that a regression equation of the emodin is as follows: y = 50,043.3431 x + 269.0534, with a correlation coefficient R² = 0.9995, indicating that an injection quality of the emodin in an injection concentration range of 0.055 µg/mL to 2.751 µg/mL has a prominent linear relationship with a peak area.

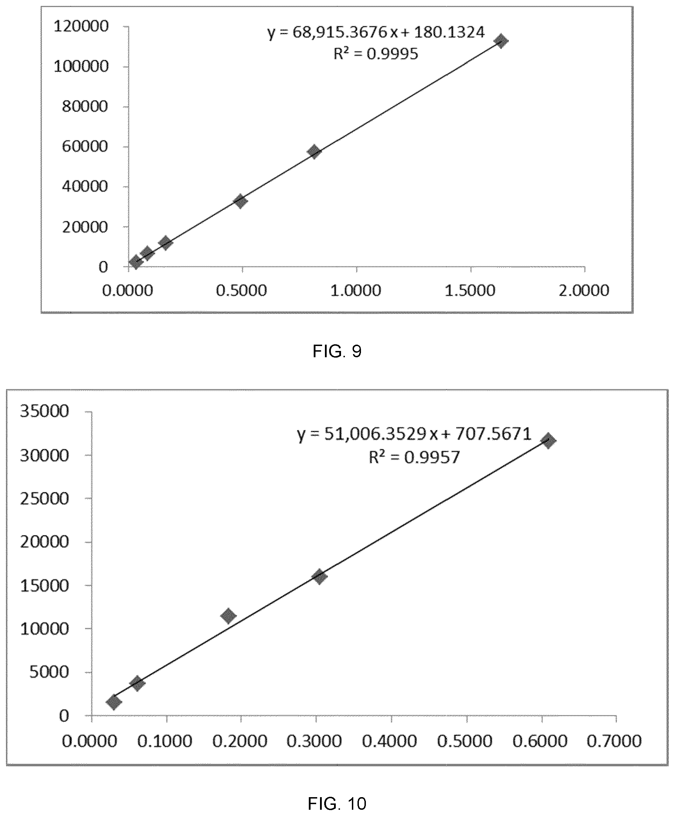

It can be seen from FIG. 9 that a regression equation of the chrysophanol is as follows: y = 68,915.3676 x + 180.1324, with a correlation coefficient R² = 0.9995, indicating that an injection quality of the chrysophanol in an injection concentration range of 0.033 µg/mL to 1.631 µg/mL has a prominent linear relationship with a peak area.

It can be seen from FIG. 10 that a regression equation of the emodin methyl ether is as follows: y = 51,006.3529 x + 707.5671, with a correlation coefficient R² = 0.995, indicating that an injection quality of the emodin methyl ether in an injection concentration range of 0.012 µg/mL to 0.610 µg/mL has a prominent linear relationship with a peak area.

### (2) Linear relationship investigation for the determination of the total anthraquinone content

According to the preparation method of the anthraquinone reference solution, a solution with 15.807 µg of aloe emodin, 30.167 µg of rheinic acid, 16.039 µg of emodin, 26.563 µg of chrysophanol, and 5.221 µg of emodin methyl ether per mL was prepared as a total anthraquinone reference stock solution. 5 mL, 3 mL, 1 mL, 0.5 mL, and 0.2 mL of the total anthraquinone reference stock solution each were accurately pipetted and added to a 10 mL volumetric flask to prepare reference solutions respectively including 0.316 µg, 0.790 µg, 1.581 µg, 4.742 µg, and 7.903 µg of aloe emodin per mL, 0.603 µg, 1.508 µg, 3.017 µg, 9.050 µg, and 15.084 µg of rheinic acid per mL, 0.321 µg, 0.802 µg, 1.604 µg, 4.812 µg, and 8.109 µg of emodin per mL, 0.531 µg, 1.328 µg, 2.656 µg, 7.969 µg, and 13.282 µg of chrysophanol per mL, and 0.104 µg, 0.261 µg, 0.522 µg, 1.566 µg, and 2.611 µg of emodin methyl ether per mL.

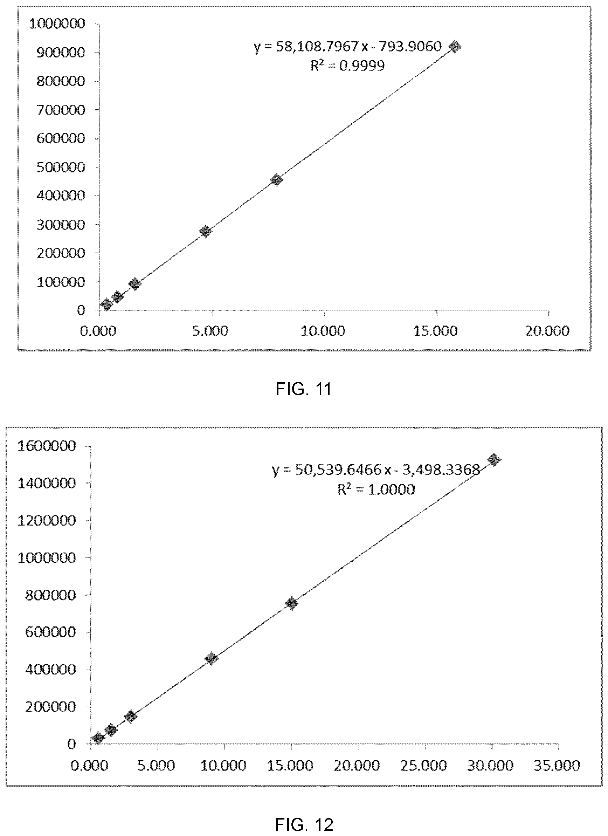

10 µL of each of the above 6 reference solutions with different concentrations was accurately pipetted and tested, and chromatographic peak areas were recorded. With a peak area as an ordinate (y) and a reference concentration as an abscissa (x), a standard curve was plotted, and results were shown in FIG. 11 to FIG. 15.

It can be seen from FIG. 11 that a regression equation of the aloe emodin is as follows: y = 58108.7967 x - 793.9060, with a correlation coefficient R² = 0.9999, indicating that an injection quality of the aloe emodin in an injection concentration range of 0.316 µg/mL to 15.807 µg/mL has a prominent linear relationship with a peak area.

It can be seen from FIG. 12 that a regression equation of the rheinic acid is as follows: y = 50,539.6466 x - 3,498.3368, with a correlation coefficient R² = 1.0000, indicating that an injection quality of the rheinic acid in an injection concentration range of 0.603 µg/mL to 30.167 µg/mL has a prominent linear relationship with a peak area.

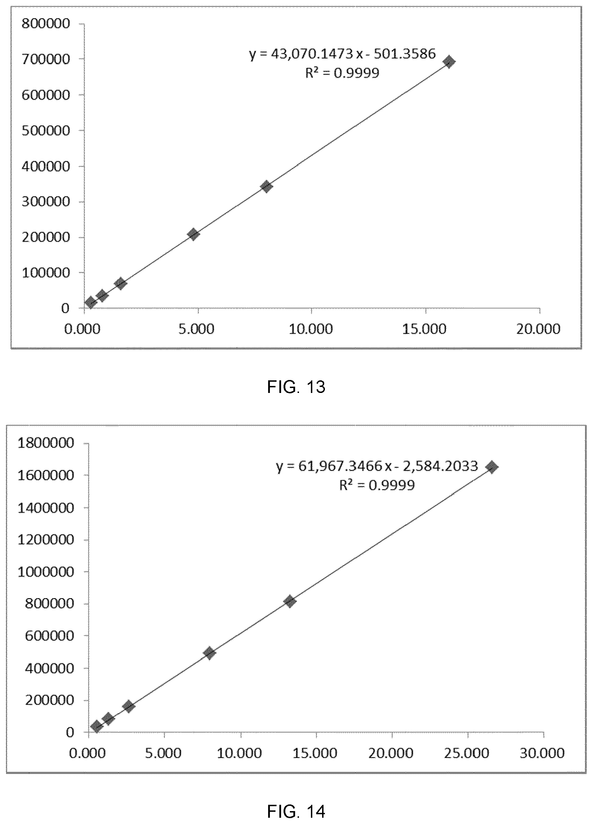

It can be seen from FIG. 13 that a regression equation of the emodin is as follows: y = 43,070.1473 x - 501.3586, with a correlation coefficient R² = 0.9999, indicating that an injection quality of the emodin in an injection concentration range of 0.321 µg/mL to 16.039 µg/mL has a prominent linear relationship with a peak area.

It can be seen from FIG. 14 that a regression equation of the chrysophanol is as follows: y = 61,967.3466 x - 2,584.2033, with a correlation coefficient R² = 0.9999, indicating that an injection quality of the chrysophanol in an injection concentration range of 0.531 µg/mL to 26.563 µg/mL has a prominent linear relationship with a peak area.

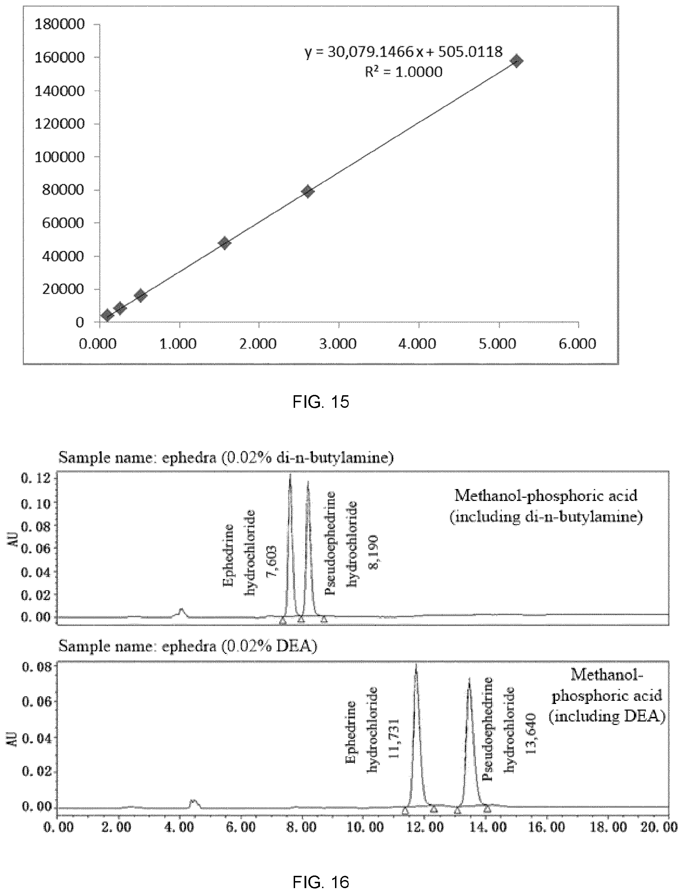

It can be seen from FIG. 15 that a regression equation of the emodin methyl ether is as follows: y = 30,079.1466 x + +505.0118, with a correlation coefficient R² = 1.000, indicating that an injection quality of the emodin methyl ether in an injection concentration range of 0.104 µg/mL to 5.221 µg/mL has a prominent linear relationship with a peak area.

### 1.1.4 Precision investigation

### (1) Instrument precision

10 µL of the anthraquinone reference solution was accurately pipetted and tested, and peak areas of the aloe emodin, rheinic acid, emodin, chrysophanol, and emodin methyl ether were calculated. Test results were shown in Table 2.

**Table 2 Instrument precision investigation results for the determination of the free anthraquinone content in the HSBD composition**

| No. | Aloe emodin | Rheinic acid | Emodin | Chrysophanol | Emodin methyl ether |
|---|---|---|---|---|---|
| 1 | 111142 | 479479 | 64168 | 52022 | 15608 |
| 2 | 111391 | 477684 | 64588 | 53850 | 15328 |
| 3 | 112571 | 486688 | 66415 | 52613 | 15397 |
| 4 | 111651 | 481380 | 64317 | 51998 | 15299 |
| 5 | 111983 | 479889 | 64464 | 52258 | 15535 |
| RSD (%) | 0.50 | 0.71 | 1.42 | 1.46 | 0.87 |

The results show that an RSD value of index peak areas resulting from 5 consecutive injections of a same anthraquinone reference solution is less than 3.0%, indicating that the instrument precision is excellent.

### (2) Intermediate precision investigation

Different experimenters were selected to conduct the content determination at different time points on different high-performance liquid chromatographs. An appropriate amount of the HSBD composition was taken and ground, and about 0.5 g of the ground composition was accurately weighed to prepare a free anthraquinone test solution or a total anthraquinone test solution. 6 parallel samples were prepared in each group. 10 µL of an anthraquinone reference solution was accurately pipetted and tested, and a free anthraquinone content, a total anthraquinone content, and corresponding RSD values were calculated and compared with reproducibility investigation results. Test results were shown in Table 3 to Table 4.

**Table 3 Intermediate precision investigation results for the determination of the free anthraquinone content in the HSBD composition**

| Operator | No. | Content (mg/g) | RSD (%) | RSD (%) |
|---|---|---|---|---|
| Operator 1 | 1 | 0.262 | 0.29 | 0.45 |
| | 2 | 0.262 | | |
| | 3 | 0.261 | | |
| | 4 | 0.260 | | |
| | 5 | 0.261 | | |
| | 6 | 0.261 | | |
| Operator 2 | A | 0.258 | 0.49 | |
| | B | 0.261 | | |
| | C | 0.259 | | |
| | D | 0.261 | | |
| | E | 0.261 | | |
| | F | 0.260 | | |

**Table 4 Intermediate precision investigation results for the determination of the total anthraquinone content in the HSBD composition**

| Operator | No. | Content (mg/g) | RSD (%) | RSD (%) |
|---|---|---|---|---|
| Operator 1 | 1 | 0.613 | 1.00 | |
| | 2 | 0.615 | | |
| | 3 | 0.601 | | |
| | 4 | 0.602 | | |
| | 5 | 0.613 | | |
| | 6 | 0.611 | | 0.92 |
| Operator 2 | A | 0.607 | 0.75 | |
| | B | 0.606 | | |
| | C | 0.611 | | |
| | D | 0.600 | | |
| | E | 0.599 | | |
| | F | 0.606 | | |

The results show that, when a same sample is tested by an operator 6 times at different time points on different chromatographs, an RSD value for the free anthraquinone content is 0.49%, and when a same sample is tested by two operators 12 times at different time points on different chromatographs, an RSD value for the free anthraquinone content is 0.45%; and when a same sample is tested by an operator 6 times at different time points on different chromatographs, an RSD value for the total anthraquinone content is 0.75%, and when a same sample is tested by two operators 12 times at different time points on different chromatographs, an RSD value for the total anthraquinone content is 0.92%. According to "Guidelines for Validation of Analytical Methods for Drug Quality Standards" in the 2015 Edition of Chinese Pharmacopoeia*,* when a content of a component to be tested in a sample is 0.01% to 0.1%, an intermediate precision RSD limit should be lower than 6%. Therefore, the operation results of the different operators at different time points on different chromatographs show that the method has prominent intermediate precision.

### 1.1.5 Stability investigation

10 µL of each of the free anthraquinone test solution and the total anthraquinone test solution was accurately pipetted and injected at 0 h, 2.5 h, 6 h, 9.5 h, 13 h, 17 h, 20.5 h, and 25.5 h, peak areas of aloe emodin, rheinic acid, emodin, chrysophanol, and emodin methyl ether in the test solutions were determined, and a relative standard deviation (RSD) value of peak areas was calculated. Determination results were shown in Table 5 and Table 6.

**Table 5 Stability investigation results for the determination of the free anthraquinone content in the HSBD composition**

| Time (h) | Aloe emodin | Rheinic acid | Emodin | Chrysopha nol | Emodin methyl ether |
|---|---|---|---|---|---|
| 0.0 | 29543 | 116205 | 15515 | 11592 | 1265 |
| 2.5 | 29562 | 118081 | 15439 | 11864 | 1278 |
| 6.0 | 29504 | 117982 | 15389 | 11538 | 1230 |
| 9.5 | 29368 | 118249 | 15141 | 11623 | 1226 |
| 13.0 | 29490 | 118394 | 15246 | 11733 | 1191 |
| 17.0 | 29650 | 117034 | 15661 | 12141 | 1217 |
| 20.5 | 29373 | 118350 | 15601 | 11735 | 1241 |
| 25.5 | 29718 | 116945 | 15634 | 12487 | 1278 |
| RSD (%) | 0.41 | 0.69 | 1.21 | 2.73 | 2.50 |

**Table 6 Stability investigation results for the determination of the total anthraquinone content in the HSBD composition**

| Time (h) | Aloe emodin | Rheinic acid | Emodin | Chrysophanol | Emodin methyl ether |
|---|---|---|---|---|---|
| 0.0 | 89921 | 179284 | 88188 | 180938 | 54424 |
| 2.5 | 91698 | 181031 | 89780 | 183742 | 55829 |
| 6.0 | 93397 | 188114 | 91369 | 186257 | 57735 |
| 9.5 | 94029 | 190049 | 93235 | 189327 | 57738 |
| 13.0 | 95813 | 193462 | 94666 | 192953 | 57272 |
| 17.0 | 98259 | 196084 | 96092 | 196637 | 57064 |
| 20.5 | 100476 | 201969 | 98949 | 200577 | 56710 |
| 25.5 | 102913 | 205544 | 100982 | 206119 | 56986 |
| 13 h RSD (%) | 2.42 | 3.24 | 2.84 | 2.51 | 2.55 |
| 25.5 h RSD (%) | 4.65 | 4.83 | 4.70 | 4.51 | 1.96 |

The results show that, when a same free anthraquinone test solution is injected and tested at 0.0 h, 2.5 h, 6.0 h, 9.5 h, 13.0 h, 17.0 h, 20.5 h, and 25.5 h, an RSD value of peak areas of each index component is lower than 3.0%, indicating that the free anthraquinone test solution has high stability within 24 h.

When a same total anthraquinone test solution is injected and tested at 0.0 h, 2.5 h, 6.0 h, 9.5 h, 13.0 h, 17.0 h, 20.5 h, and 25.5 h, an RSD value of peak areas of the emodin methyl ether is lower than 3.0%, but an RSD value of peak areas of each of the remaining index components is higher than 3%. Thus, it is recommended that the test of the total anthraquinone test solution should be completed within 13 h.

### 1.1.6 Reproducibility investigation

10 µL of each of the free anthraquinone test solution and the total anthraquinone test solution was accurately pipetted and tested, and the free anthraquinone and total anthraquinone contents and corresponding RSD values were calculated. Determination results were shown in Table 7 and Table 8.

**Table 7 Reproducibility investigation results for the determination of the free anthraquinone content in the HSBD composition**

| No. | Content (mg/g) | | | | | |
|---|---|---|---|---|---|---|
| | Aloe emodin | Rheinic acid | Emodin | Chrysophanol | Emodin methyl ether | Free anthraquinone |
| 1 | 0.0307 | 0.1822 | 0.0275 | 0.0146 | 0.0069 | 0.2618 |
| 2 | 0.0306 | 0.1818 | 0.0276 | 0.0145 | 0.0072 | 0.2616 |
| 3 | 0.0305 | 0.1820 | 0.0271 | 0.0142 | 0.0071 | 0.2609 |
| 4 | 0.0304 | 0.1811 | 0.0271 | 0.0145 | 0.0070 | 0.2602 |
| 5 | 0.0308 | 0.1813 | 0.0275 | 0.0143 | 0.0074 | 0.2613 |
| 6 | 0.0308 | 0.1804 | 0.0275 | 0.0147 | 0.0074 | 0.2608 |
| Mean | 0.0306 | 0.1815 | 0.0274 | 0.0145 | 0.0072 | 0.2611 |
| RSD (%) | 0.54 | 0.36 | 0.80 | 1.29 | 2.73 | 0.24 |

**Table 8 Reproducibility investigation results for the determination of the total anthraquinone content in the HSBD composition**

| No. | Content (mg/g) | | | | | |
|---|---|---|---|---|---|---|
| | Aloe emodin | Rheinic acid | Emodin | Chrysophanol | Emodin methyl ether | Total anthraquinone |
| 1 | 0.0838 | 0.2323 | 0.0917 | 0.1356 | 0.0693 | 0.6126 |
| 2 | 0.0827 | 0.2358 | 0.0917 | 0.1348 | 0.0700 | 0.6150 |
| 3 | 0.0829 | 0.2253 | 0.0914 | 0.1321 | 0.0693 | 0.6010 |
| 4 | 0.0823 | 0.2261 | 0.0916 | 0.1328 | 0.0694 | 0.6021 |
| 5 | 0.0818 | 0.2367 | 0.0922 | 0.1329 | 0.0696 | 0.6132 |
| 6 | 0.0819 | 0.2339 | 0.0915 | 0.1335 | 0.0701 | 0.6110 |
| Mean | 0.0826 | 0.2317 | 0.0917 | 0.1336 | 0.0696 | 0.6091 |
| RSD (%) | 0.87 | 2.11 | 0.33 | 0.99 | 0.51 | 0.99 |

The results show that, when a same sample is repeatedly tested 6 times, an RSD value for either the free anthraquinone content or the total anthraquinone content is lower than 3%, indicating that the analysis method has prominent reproducibility.

### 1.1.7 Accuracy investigation

### (2) Accuracy investigation for the determination of the free anthraquinonecontent

2.455 mg of an aloe emodin reference, 2.485 mg of a rheinic acid reference, 1.625 mg of an emodin reference, 1.950 mg of a chrysophanol reference, and 0.845 mg of an emodin methyl ether reference were accurately weighed and added to a 250 mL volumetric flask, a 50 mL volumetric flask, a 250 mL volumetric flask, a 500 mL volumetric flask, and a 500 mL volumetric flask, respectively; and methanol was added to each of the volumetric flasks to prepare an aloe emodin solution with 0.00982 mg of aloe emodin per mL, a rheinic acid solution with 0.04969 mg of rheinic acid per mL, an emodin solution with 0.00650 mg of emodin per mL, a chrysophanol solution with 0.00390 mg of chrysophanol per mL, and an emodin methyl ether solution with 0.00169 mg of emodin methyl ether per mL, which would be used as spike-and-recovery stock solutions. 1 mL of each of the stock solutions was accurately pipetted and added to an Erlenmeyer flask, and the solvent was completely volatilized, where 6 replicates were set for each group; and the HSBD composition was taken to prepare a free anthraquinone test solution, a free anthraquinone content in the free anthraquinone test solution was determined, and a spiked recovery rate was calculated. Results were shown in Table 9 to 13.

**Table 9 Spiked recovery rate investigation results of the determination of the free anthraquinone aloe emodin in the HSBD composition**

| No. | Sample amount (g) | Sample content (mg) | Determined total amount (mg) | Added standard amount (mg) | Recovery rate (%) | Mean | RSD (%) |
|---|---|---|---|---|---|---|---|
| 1 | 0.2549 | 0.00781 | 0.018735 | 0.00982 | 111.28 | | |
| 2 | 0.2533 | 0.00776 | 0.018614 | 0.00982 | 110.54 | 112.08 | 1.47 |
| 3 | 0.2548 | 0.00780 | 0.019044 | 0.00982 | 114.45 | | |
| 4 | 0.2538 | 0.00777 | 0.018704 | 0.00982 | 111.31 | | |
| 5 | 0.2532 | 0.00776 | 0.018655 | 0.00982 | 110.99 | | |
| 6 | 0.2527 | 0.00774 | 0.018923 | 0.00982 | 113.88 | | |

**Table 10 Spiked recovery rate investigation results of the determination of the free anthraquinone rheinic acid in the HSBD composition**

| No. | Sample amount (g) | Sample content (mg) | Determined total amount (mg) | Added standard amount (mg) | Recovery rate (%) | Mean | RSD (%) |
|---|---|---|---|---|---|---|---|
| 1 | 0.2549 | 0.0463 | 0.088835 | 0.04969 | 85.69 | | |
| 2 | 0.2533 | 0.0460 | 0.088764 | 0.04969 | 86.13 | | |
| 3 | 0.2548 | 0.0462 | 0.089066 | 0.04969 | 86.19 | 86.17 | 0.70 |
| 4 | 0.2538 | 0.0461 | 0.088813 | 0.04969 | 86.04 | | |
| 5 | 0.2532 | 0.0459 | 0.088515 | 0.04969 | 85.66 | | |
| 6 | 0.2527 | 0.0459 | 0.089243 | 0.04969 | 87.31 | | |

**Table 11 Spiked recovery rate investigation results of the determination of the free anthraquinone emodin in the HSBD composition**

| No. | Sample amount (g) | Sample content (mg) | Determined total amount (mg) | Added standard amount (mg) | Recovery rate (%) | Mean | RSD (%) |
|---|---|---|---|---|---|---|---|
| 1 | 0.2549 | 0.0070 | 0.013869 | 0.00650 | 106.02 | | |
| 2 | 0.2533 | 0.0069 | 0.013857 | 0.00650 | 106.52 | | |
| 3 | 0.2548 | 0.0070 | 0.013982 | 0.00650 | 107.81 | 107.31 | 0.91 |
| 4 | 0.2538 | 0.0069 | 0.014019 | 0.00650 | 108.79 | | |
| 5 | 0.2532 | 0.0069 | 0.013911 | 0.00650 | 107.39 | | |
| 6 | 0.2527 | 0.0069 | 0.013894 | 0.00650 | 107.33 | | |

**Table 12 Spiked recovery rate investigation results of the determination of the free anthraquinone chrysophanol in the HSBD composition**

| No. | Sample amount (g) | Sample content (mg) | Determined total amount (mg) | Added standard amount (mg) | Recovery rate (%) | Mean | RSD (%) |
|---|---|---|---|---|---|---|---|
| 1 | 0.2549 | 0.0037 | 0.007457 | 0.00390 | 96.72 | | |
| 2 | 0.2533 | 0.0037 | 0.007457 | 0.00390 | 97.29 | | |
| 3 | 0.2548 | 0.0037 | 0.007541 | 0.00390 | 98.88 | 97.79 | 0.78 |
| 4 | 0.2538 | 0.0037 | 0.007478 | 0.00390 | 97.65 | | |
| 5 | 0.2532 | 0.0037 | 0.007478 | 0.00390 | 97.87 | | |
| 6 | 0.2527 | 0.0037 | 0.007488 | 0.00390 | 98.32 | | |

**Table 13 Spiked recovery rate investigation results of the determination of the free anthraquinone emodin methyl ether in the HSBD composition**

| No. | Sample amount (g) | Sample content (mg) | Determined total amount (mg) | Added standard amount (mg) | Recovery rate (%) | Mean | RSD (%) |
|---|---|---|---|---|---|---|---|
| 1 | 0.2549 | 0.0018 | 0.003557 | 0.00169 | 102.29 | | |
| 2 | 0.2533 | 0.0018 | 0.003586 | 0.00169 | 104.70 | | |
| 3 | 0.2548 | 0.0018 | 0.003614 | 0.00169 | 105.71 | 105.93 | 2.10 |
| 4 | 0.2538 | 0.0018 | 0.003641 | 0.00169 | 107.75 | | |
| 5 | 0.2532 | 0.0018 | 0.003647 | 0.00169 | 108.36 | | |
| 6 | 0.2527 | 0.0018 | 0.003617 | 0.00169 | 106.77 | | |

It can be seen from the table that a recovery rate of aloe emodin is 112.08%, a recovery rate of rheinic acid is 86.17%, a recovery rate of emodin is 107.31%, a recovery rate of chrysophanol is 97.79%, and a recovery rate of emodin methyl ether is 105.93%. According to "Guidelines for Validation of Analytical Methods for Drug Quality Standards" in the 2015 Edition of Chinese Pharmacopoeia*,* when a content of a component to be tested in a sample is 0.001% to 0.01%, a recovery rate limit should be 80% to 115%. Thus, the determination method of the present disclosure has excellent accuracy.

### (2) Accuracy investigation for the determination of the total anthraquinone content

2.497 mg of an aloe emodin reference, 3.960 mg of a rheinic acid reference, 2.707 mg of an emodin reference, 2.313 mg of a chrysophanol reference, and 1.995 mg of an emodin methyl ether reference each were weighed and added to a 50 mL volumetric flask; and methanol was added to prepare an aloe emodin solution with 0.04994 mg of aloe emodin per mL, a rheinic acid solution with 0.07920 mg of rheinic acid per mL, an emodin solution with 0.05414 mg of emodin per mL, a chrysophanol solution with 0.04625 mg of chrysophanol per mL, and an emodin methyl ether solution with 0.03990 mg of emodin methyl ether per mL, which would be used as spike-and-recovery stock solutions. 1 mL of each of the aloe emodin, emodin, and emodin methyl ether stock solutions and 2 mL of each of the rheinic acid and chrysophanol stock solutions were accurately pipetted and added to an Erlenmeyer flask, and the solvent was completely volatilized, where 6 replicates were set for each group; and an appropriate amount of the HSBD composition (batch No: J2004007) was taken and ground, 0.25 g of the ground composition was taken and added to each of the 6 replicates to prepare total anthraquinone test solutions, a total anthraquinone content in each of the total anthraquinone test solutions was determined, and a spiked recovery rate was calculated. Results were shown in Table 14 to 18.

**Table 14 Spiked recovery rate investigation results of the determination of the total anthraquinone aloe emodin in the HSBD composition**

| No. | Sample amount (g) | Sample content (mg) | Determined total amount (mg) | Added standard amount (mg) | Recovery rate (%) | Mean | RSD (%) |
|---|---|---|---|---|---|---|---|
| 1 | 0.2509 | 0.02072 | 0.068049 | 0.04994 | 94.78 | 95.05 | 1.11 |
| 2 | 0.2523 | 0.02083 | 0.068032 | 0.04994 | 94.51 | | |
| 3 | 0.2552 | 0.02107 | 0.067766 | 0.04994 | 93.50 | | |
| 4 | 0.2508 | 0.02071 | 0.068443 | 0.04994 | 95.58 | | |
| 5 | 0.2502 | 0.02066 | 0.068253 | 0.04994 | 95.30 | | |
| 6 | 0.2507 | 0.02070 | 0.068956 | 0.04994 | 96.63 | | |

**Table 15 Spiked recovery rate investigation results of the determination of the total anthraquinone rheinic acid in the HSBD composition**

| No. | Sample amount (g) | Sample content (mg) | Determined total amount (mg) | Added standard amount (mg) | Recovery rate (%) | Mean | RSD (%) |
|---|---|---|---|---|---|---|---|
| 1 | 0.2509 | 0.0581 | 0.195512 | 0.15840 | 86.73 | 88.68 | 4.39 |
| 2 | 0.2523 | 0.0585 | 0.196415 | 0.15840 | 87.10 | | |
| 3 | 0.2552 | 0.0591 | 0.211054 | 0.15840 | 95.92 | | |
| 4 | 0.2508 | 0.0581 | 0.201037 | 0.15840 | 90.24 | | |
| 5 | 0.2502 | 0.0580 | 0.193288 | 0.15840 | 85.43 | | |
| 6 | 0.2507 | 0.0581 | 0.195306 | 0.15840 | 86.63 | | |

**Table 16 Spiked recovery rate investigation results of the determination of the total anthraquinone emodin in the HSBD composition**

| No. | Sample amount (g) | Sample content (mg) | Determined total amount (mg) | Added standard amount (mg) | Recovery rate (%) | Mean | RSD (%) |
|---|---|---|---|---|---|---|---|
| 1 | 0.2509 | 0.0230 | 0.076980 | 0.05414 | 99.70 | 101.25 | 2.95 |
| 2 | 0.2523 | 0.0231 | 0.077717 | 0.05414 | 100.82 | | |
| 3 | 0.2552 | 0.0234 | 0.077414 | 0.05414 | 99.77 | | |
| 4 | 0.2508 | 0.0230 | 0.079416 | 0.05414 | 104.22 | | |
| 5 | 0.2502 | 0.0229 | 0.075750 | 0.05414 | 97.55 | | |
| 6 | 0.2507 | 0.0230 | 0.080058 | 0.05414 | 105.42 | | |

**Table 17 Spiked recovery rate investigation results of the determination of the total anthraquinone chrysophanol in the HSBD composition**

| No. | Sample amount (g) | Sample content (mg) | Determined total amount (mg) | Added standard amount (mg) | Recovery rate (%) | Mean | RSD (%) |
|---|---|---|---|---|---|---|---|
| 1 | 0.2509 | 0.0335 | 0.128539 | 0.09250 | 102.73 | 98.83 | 4.94 |
| 2 | 0.2523 | 0.0337 | 0.125536 | 0.09250 | 99.28 | | |
| 3 | 0.2552 | 0.0341 | 0.128972 | 0.09250 | 102.58 | | |
| 4 | 0.2508 | 0.0335 | 0.127569 | 0.09250 | 101.69 | | |
| 5 | 0.2502 | 0.0334 | 0.116740 | 0.09250 | 90.07 | | |
| 6 | 0.2507 | 0.0335 | 0.122857 | 0.09250 | 96.61 | | |

**Table 18 Spiked recovery rate investigation results of the determination of the total anthraquinone emodin methyl ether in the HSBD composition**

| No. | Sample amount (g) | Sample content (mg) | Determined total amount (mg) | Added standard amount (mg) | Recovery rate (%) | Mean | RSD (%) |
|---|---|---|---|---|---|---|---|
| 1 | 0.2509 | 0.0175 | 0.057446 | 0.03990 | 100.20 | 101.53 | 2.73 |
| 2 | 0.2523 | 0.0176 | 0.060102 | 0.03990 | 106.61 | | |
| 3 | 0.2552 | 0.0178 | 0.057701 | 0.03990 | 100.09 | | |
| 4 | 0.2508 | 0.0175 | 0.057159 | 0.03990 | 99.50 | | |
| 5 | 0.2502 | 0.0174 | 0.057273 | 0.03990 | 99.89 | | |
| 6 | 0.2507 | 0.0175 | 0.058500 | 0.03990 | 102.88 | | |

The results show that a recovery rate of aloe emodin is 95.05%, a recovery rate of rheinic acid is 88.68%, a recovery rate of emodin is 101.25%, a recovery rate of chrysophanol is 98.83%, and a recovery rate of emodin methyl ether is 101.53%. According to "Guidelines for Validation of Analytical Methods for Drug Quality Standards" in the 2015 Edition of Chinese Pharmacopoeia*,* when a content of a component to be tested in a sample is 0.001% to 0.01%, a recovery rate limit should be 80% to 115%. Thus, the method has excellent accuracy.

### 1.1.8 Durability investigation

### (1) Investigation of different chromatographic columns

The following three chromatographic columns were adopted: Phenomenex Kinetex-EVO C18 column (4.6 mm × 150 mm, 5 µm; No. JS-091), Waters HSS T3 column (4.6 mm × 150 mm, 5 µm; No. JS-136), and Waters X-bridge C18 column (4.6 mm × 150 mm, 5 µm; No. JS-154).

10 µL of each of the free anthraquinone test solution and the total anthraquinone test solution was pipetted and tested on each of the three chromatographic columns, and the free anthraquinone and total anthraquinone contents and corresponding RSD values were calculated. Test results were shown in Table 19.

**Table 19 Investigation results for the determination of the total/free anthraquinone contents in the HSBD composition on the different chromatographic columns**

| Chromatographic column | Free anthraquinone content (mg/g) | Total anthraquinone content (mg/g) |
|---|---|---|
| JS-091 | 0.297 | 0.615 |
| JS-154 | 0.283 | 0.665 |
| JS-136 | 0.313 | 0.645 |
| RSD (%) | 5.0 | 3.9 |

The results show that the resolution effect at each of the chromatographic columns is prominent, and an RSD value for the content is lower than or equal to 5%, indicating that the analysis method exhibits excellent durability during the analysis on the different chromatographic columns.

### (2) Investigation of different column temperatures

The column temperatures of 28°C, 30°C, and 32°C were set to investigate the influence of the column temperature on the determination of the free/total anthraquinone contents in the HSBD composition.

10 µL of each of the free anthraquinone test solution and the total anthraquinone test solution was pipetted and tested at each of the column temperatures, and the free anthraquinone and total anthraquinone contents and corresponding RSD values were calculated. Test results were shown in Table 20.

**Table 20 Investigation results for the determination of the total/free anthraquinone contents in the HSBD composition at the different column temperatures**

| Column temperature (°C) | Free anthraquinone content (mg/g) | Total anthraquinone content (mg/g) |
|---|---|---|
| 28 | 0.261 | 0.596 |
| 30 | 0.283 | 0.665 |
| 32 | 0.299 | 0.578 |
| RSD (%) | 6.8 | 7.5 |

The results show that an RSD value for each of the free anthraquinone content and the total anthraquinone content in the HSBD composition at a same column temperature is greater than 5%, indicating that the analysis method is sensitive to the column temperature. Therefore, the column temperature is strictly controlled at 30°C.

### (3) Investigation of different flow rates

The flow rates of 0.7 mL/min, 0.8 mL/min, and 0.9 mL/min were set to investigate the influence of the flow rate on the determination of the free/total anthraquinone contents in the HSBD composition.

10 µL of each of the free anthraquinone test solution and the total anthraquinone test solution was pipetted and tested at each of the flow rates, and the free anthraquinone and total anthraquinone contents and corresponding RSD values were calculated. Test results were shown in Table 21.

**Table 21 Investigation results for the determination of the total/free anthraquinone contents in the HSBD composition at the different flow rates**

| Flow rate (mL/min) | Free anthraquinone content (mg/g) | Total anthraquinone content (mg/g) |
|---|---|---|
| 0.7 | 0.279 | 0.621 |
| 0.8 | 0.283 | 0.665 |
| 0.9 | 0.285 | 0.655 |
| RSD (%) | 1.1 | 3.6 |

The results show that an RSD value for each of the free anthraquinone content and the total anthraquinone content in the HSBD composition at each of the different flow rates is lower than 5%; and when the flow rate is 0.7 mL/min, the emodin methyl ether in the total anthraquinone has a split peak, and it is recommended that the flow rate should be no less than 0.8 mL/min during the analysis.

### 1.1.9 Content determination for different batches of HSBD composition test samples

10 batches of the HSBD composition were taken to prepare free anthraquinone test solutions and total anthraquinone test solutions, the free anthraquinone content and total anthraquinone content in each of the 10 batches of the HSBD composition were determined, and a combined anthraquinone content was calculated. Experimental results were shown in Table 22.

**Table 22 Determination results of the combined anthraquinone content in the HSBD composition**

| Batch No. | Free anthraquinone content (mg/g) | Total anthraquinone content (mg/g) | Combined anthraquinone content (mg/g) |
|---|---|---|---|
| S1 | 0.202 | 0.445 | 0.243 |
| S2 | 0.153 | 0.456 | 0.303 |
| S3 | 0.105 | 0.284 | 0.179 |
| S4 | 0.241 | 0.494 | 0.253 |
| S5 | 0.248 | 0.441 | 0.193 |
| S6 | 0.240 | 0.443 | 0.203 |
| S7 | 0.235 | 0.534 | 0.299 |
| S8 | 0.232 | 0.528 | 0.296 |
| S9 | 0.244 | 0.560 | 0.316 |
| S10 | 0.233 | 0.541 | 0.308 |

### 1.2 Determination method of a total content of ephedrine hydrochloride and pseudoephedrine hydrochloride

### 1.2.1 Determination method

In the present disclosure, the total content of ephedrine hydrochloride and pseudoephedrine hydrochloride in the HSBD composition is determined by HPLC. Specifically, the determination method includes:
(1) Chromatographic conditions: filler: polar diethyl ether-linked phenyl-bonded silica gel; mobile phase: mixed solution of methanol and 0.092 vol% phosphoric acid (including 0.04 vol% TEA and 0.02 vol% DEA) (1.5:98.5); flow rate: 0.8 mL/min; detection wavelength: 210 nm; column temperature: 35°C; and number of theoretical plates based on ephedrine hydrochloride: no less than 3,000.
   It should be noted that, in the determination of ephedrine hydrochloride and pseudoephedrine hydrochloride contents in ephedra, a mixed solution of methanol and 0.092 vol% phosphoric acid (including 0.04% TEA and 0.02% di-n-butylamine) (1.5:98.5) is generally used as a mobile phase, but DEA is used instead of di-n-butylamine in the present disclosure. Experimental results show that the mobile phase in the present disclosure exhibits a strong retention capacity for a target substance, and thus can effectively extend a retention time to optimize a separation effect between an ephedrine hydrochloride peak and a pseudoephedrine hydrochloride peak (FIG. 16).
(2) Preparation of an ephedrine test solution: About 0.5 g of the HSBD composition was taken, ground, weighed, and placed in an Erlenmeyer flask with a stopper, 50 mL of a 0.1 mol/L hydrochloric acid solution was added, and the Erlenmeyer flask was plugged; a resulting system was weighed, subjected to an ultrasonic treatment (power: 250 W, and frequency: 40 kHz) for 30 min, cooled, and weighed once again; a 0.1 mol/L hydrochloric acid solution was added to make up for a weight loss, and a resulting mixture was thoroughly shaken and centrifuged for 5 min at 4,000 rpm; a resulting supernatant was taken and filtered, and 25 mL of a subsequent filtrate was taken and allowed to pass through a solid-phase extraction column (with a mixed cation exchange reversed-phase adsorbent as a filler, 150 mg, 6 mL, the column was pre-washed with 6 mL of each of methanol and water); the column was subjected to elution with 6 mL of each of a 0.1 mol/L hydrochloric acid solution and methanol, and an eluate was discarded; and then the column was further subjected to elution with 10 mL of a freshly-prepared acetonitrile-concentrated ammonia (95:5) mixed solution, and an eluate was collected, added to a 10 mL volumetric flask, diluted to a specified scale with the mixed solution, and thoroughly shaken.
(3) Preparation of an ephedrine reference solution: An appropriate amount of an ephedrine hydrochloride reference and an appropriate amount of a pseudoephedrine hydrochloride reference were weighed, and methanol was added to prepare a mixed solution with 10 µg of the ephedrine hydrochloride reference and 10 µg of the pseudoephedrine hydrochloride reference per mL.
(4) 10 µL of each of the ephedrine test solution prepared in step (2) and the ephedrine reference solution prepared in step (3) was pipetted and injected into a liquid chromatograph to determine a total content of ephedrine hydrochloride and pseudoephedrine hydrochloride in the HSBD composition.

The determination method of the ephedrine hydrochloride and pseudoephedrine hydrochloride in the present disclosure is subjected to methodological verification below:

### 1.2.2 Specificity investigation

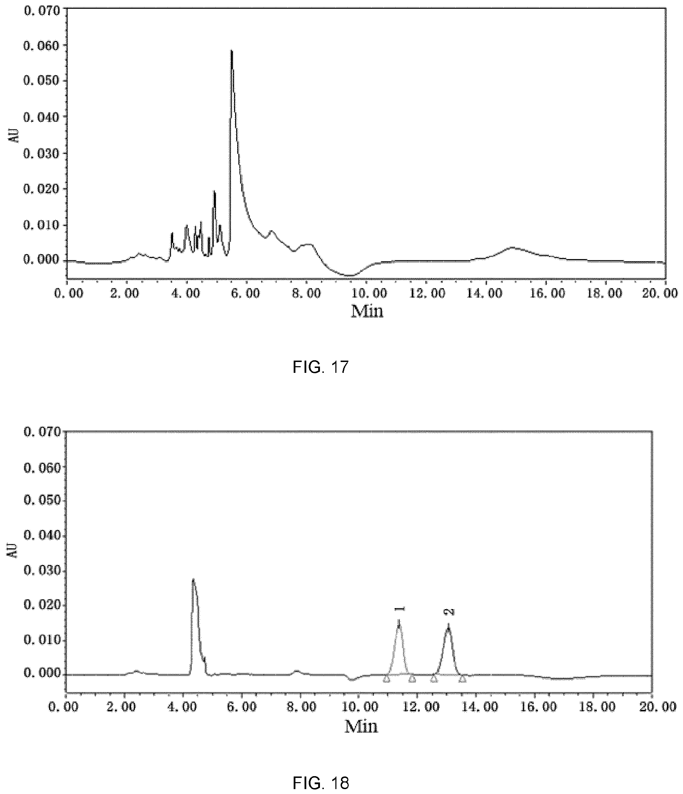

An ephedra negative sample was taken to prepare an ephedrine negative sample solution according to the preparation method of the ephedrine test solution; and 10 µL of each of the ephedrine test solution, the ephedrine negative sample solution, and the ephedrine reference solution was injected into a liquid chromatograph and tested. Test results were shown in FIG. 17 to FIG. 19. A peak position of each reference was shown in the following table:

**Table 23 Specificity test results for the determination of the ephedrine hydrochloride/pseudoephedrine hydrochloride content in the HSBD composition**

| Name | Sample name | Retention time (min) | Area (µV·s) | Height (µV) | Number of theoretical plates |
|---|---|---|---|---|---|
| Ephedrine hydrochloride | Reference solution | 11.385 | 285600 | 14482 | 7092 |
| | Test solution | 11.578 | 313434 | 24718 | 19516 |
| | Negative sample | 11.731 | / | / | / |
| Pseudoephedrine hydrochloride | Reference solution | 13.055 | 298993 | 13565 | 7515 |
| | Test solution | 13.207 | 368439 | 25660 | 19449 |
| | Negative sample | 13.460 | / | / | / |

It can be seen from FIG. 17 to FIG. 19 and Table 23 that the ephedrine negative sample solution has no obvious chromatographic peak at the corresponding retention time of ephedrine hydrochloride and pseudoephedrine hydrochloride, and thus there is no interference, indicating that the method has prominent specificity.

### 1.2.3 Linear relationship investigation

2.115 mg of an ephedrine hydrochloride reference and 2.196 mg of a pseudoephedrine hydrochloride reference were taken and added to a 10 mL volumetric flask, and methanol was added to prepare a mixed reference stock solution with 211.500 µg of ephedrine hydrochloride and 219.161 µg of pseudoephedrine hydrochloride per mL; and different volumes of the reference stock solution each were accurately measured and serially diluted to obtain mixed reference solutions with ephedrine hydrochloride and pseudoephedrine hydrochloride at different concentration levels.

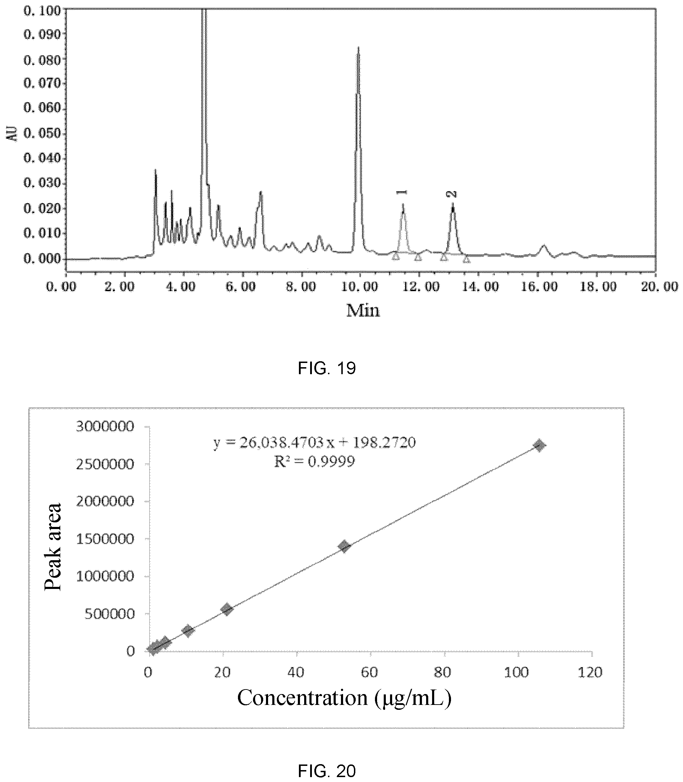

10 µL of each of the ephedrine hydrochloride reference solutions (which included 1.058 µg, 2.115 µg, 4.230 µg, 10.575 µg, 21.150 µg, 52.875 µg, and 105.750 µg of ephedrine hydrochloride per mL, respectively, and included 1.096 µg, 2.192 µg, 4.383 µg, 10.958 µg, 21.916 µg, 54.790 µg, and 109.580 µg of pseudoephedrine hydrochloride per mL, respectively) was accurately pipetted and subjected to chromatographic assay. A peak area was determined according to the above chromatographic conditions, the ephedrine hydrochloride and pseudoephedrine hydrochloride (x) were regressed with the peak area (y), and a standard curve was plotted. Test results were shown in FIG. 19 and FIG. 20.

It can be seen from FIG. 19 that a linear curve of ephedrine hydrochloride is as follows: y = 26,038.4703 x + 198.2720, R² = 0.9999.

It can be seen from FIG. 20 that a linear curve of pseudoephedrine hydrochloride is as follows: y = 26,339.9956 x - 1,062.3701, R² = 1.0000.

The results show that, when the ephedrine hydrochloride is in a concentration range of 1.058 µg/mL to 105.750 µg/mL, there is a prominent linear relationship between the peak area and the concentration; and when the pseudoephedrine hydrochloride is in a concentration range of 1.096 µg/mL to 109.580 µg/mL, there is a prominent linear relationship between the peak area and the concentration.

### 1.2.4 Precision investigation

10 µL of an ephedrine reference solution (ephedrine hydrochloride concentration: 10.575 µg/mL, and pseudoephedrine hydrochloride concentration: 10.958 µg/mL) was accurately pipetted and repeatedly tested 6 times, and peak areas of ephedrine hydrochloride and pseudoephedrine hydrochloride were calculated. Test results were shown in Table 24.

**Table 24 Precision test results for the determination of the total content of ephedrine hydrochloride and pseudoephedrine hydrochloride in the HSBD composition**

| No. | Ephedrine hydrochloride peak area | Pseudoephedrine hydrochloride peak area |
|---|---|---|
| 1 | 292091 | 302935 |
| 2 | 287501 | 296438 |
| 3 | 299576 | 307634 |
| 4 | 296466 | 302093 |
| 5 | 294594 | 302923 |
| 6 | 302215 | 311631 |
| RSD (%) | 1.78 | 1.71 |

The results show that an RSD value for index peak areas resulting from 6 consecutive injections of a same ephedrine reference solution is less than 2.0%, indicating that the instrument precision is excellent.

### 1.2.5 Stability investigation

10 µL of a same ephedrine test solution was accurately pipetted and injected into a chromatograph at 0 h, 2 h, 4 h, 8 h, 12 h, and 14 h to determine peak areas of ephedrine hydrochloride and pseudoephedrine hydrochloride, and an RSD value for peak areas was calculated. Test results were shown in Table 25.

**Table 25 Stability test results for the determination of the total content of ephedrine hydrochloride and pseudoephedrine hydrochloride in the HSBD composition**

| Time | Ephedrine hydrochloride | Pseudoephedrine hydrochloride |
|---|---|---|
| 0h | 313091 | 363362 |
| 2h | 317516 | 371638 |
| 4h | 320644 | 374812 |
| 8h | 320237 | 371977 |
| 12h | 319730 | 368706 |
| 14h | 313434 | 368439 |
| RSD (%) | 1.08 | 1.07 |

It can be seen from the table that RSD values (n = 6) for the ephedrine hydrochloride and pseudoephedrine hydrochloride are 1.08% and 1.07%, respectively, which both are lower than 3.0%, indicating that the sample has prominent stability within 14 h.

### 1.2.6 Reproducibility investigation

A same batch of samples were taken to prepare ephedrine test solutions, and the ephedrine test solutions were tested. The contents of ephedrine hydrochloride and pseudoephedrine hydrochloride and the corresponding RSD values were calculated, and results were shown in Table 26.

**Table 26 Reproducibility test results (n = 2) for the determination of the total content of ephedrine hydrochloride and pseudoephedrine hydrochloride in the HSBD composition**

| No. | Ephedrine hydrochloride (mg/g) | Pseudoephedrine hydrochloride (mg/g) |
|---|---|---|
| 1 | 0.471 | 0.553 |
| 2 | 0.470 | 0.552 |
| 3 | 0.469 | 0.555 |
| 4 | 0.480 | 0.565 |
| 5 | 0.482 | 0.568 |
| 6 | 0.479 | 0.563 |
| Mean | 0.475 | 0.559 |
| RSD (%) | 1.22 | 1.21 |

The results show that RSD values for the ephedrine hydrochloride and pseudoephedrine hydrochloride contents both are lower than 2.0%, indicating that the method has prominent reproducibility.

### 1.2.7 Accuracy investigation

The spike-and-recovery method was adopted. About 0.25 g of a sample in which the ephedrine hydrochloride and pseudoephedrine hydrochloride contents were known was accurately weighed, and 9 parallel samples were prepared, with 3 in each group. The ephedrine hydrochloride and pseudoephedrine hydrochloride references were added according to sample-to-reference ratios of 0.5:1.0, 1.0:1.0, and 1.5:1.0. 9 ephedrine test solutions were prepared according to the preparation method of the ephedrine test solution and tested, and a spiked recovery rate was calculated. Test results were shown in Table 27.

**Table 27 Spiked recovery rate investigation results for the determination of the total content of ephedrine hydrochloride and pseudoephedrine hydrochloride in the HSBD composition**

| Component | No. | Sample weight (g) | Amount in sample (mg) | Added amount (mg) (mg) | Detected amount (mg) | Recovery rate (%) | Mean (%) | RSD (%) |
|---|---|---|---|---|---|---|---|---|
| | 1 | 0.2519 | 0.120 | 0.063 | 0.178 | 93.02 | | |
| | 2 | 0.2536 | 0.120 | 0.063 | 0.182 | 97.31 | | |
| | 3 | 0.2576 | 0.122 | 0.063 | 0.179 | 90.30 | | |
| | 4 | 0.2546 | 0.121 | 0.125 | 0.238 | 93.32 | | |
| Ephedrine hydrochloride | 5 | 0.2506 | 0.119 | 0.125 | 0.237 | 94.03 | 94.96 | 2.66 |
| | 6 | 0.2566 | 0.122 | 0.125 | 0.244 | 97.34 | | |
| | 7 | 0.2580 | 0.123 | 0.188 | 0.305 | 96.96 | | |
| | 8 | 0.2508 | 0.119 | 0.188 | 0.298 | 94.79 | | |
| | 9 | 0.2514 | 0.119 | 0.188 | 0.303 | 97.56 | | |
| | 1 | 0.2519 | 0.141 | 0.072 | 0.210 | 95.76 | | |
| | 2 | 0.2536 | 0.142 | 0.072 | 0.214 | 100.01 | | |
| | 3 | 0.2576 | 0.144 | 0.072 | 0.211 | 92.71 | | |
| | 4 | 0.2546 | 0.142 | 0.143 | 0.279 | 94.92 | | |
| Pseudoephedrine hydrochloride | 5 | 0.2506 | 0.140 | 0.143 | 0.278 | 95.78 | 96.59 | 2.24 |
| | 6 | 0.2566 | 0.143 | 0.143 | 0.284 | 97.63 | | |
| | 7 | 0.2580 | 0.144 | 0.216 | 0.354 | 96.97 | | |
| | 8 | 0.2508 | 0.140 | 0.210 | 0.344 | 96.67 | | |
| | 9 | 0.2514 | 0.141 | 0.211 | 0.349 | 98.89 | | |

It can be seen from the table that an average spiked recovery rate of ephedrine hydrochloride is 94.96% and an average spiked recovery rate of pseudoephedrine hydrochloride is 96.59%, which are in line with the relevant provisions in *Chinese Pharmacopoeia.* Thus, the determination method of the present disclosure has prominent accuracy.

### 1.2.8 Determination for different batches of HSBD composition test samples

3 batches of the HSBD composition were taken to prepare test solutions. 10 µL of an ephedrine test solution was accurately pipetted and tested for an ephedrine hydrochloride content and a pseudoephedrine hydrochloride content, and a total content of ephedrine hydrochloride and pseudoephedrine hydrochloride was calculated. Results were shown in Table 28.

**Table 28 Determination results (n = 2) of the total content of ephedrine hydrochloride and pseudoephedrine hydrochloride in the different batches of the HSBD composition**

| Batch No. | Content (mg/g) | | Total content (mg/g) |
|---|---|---|---|
| | Ephedrine hydrochloride | Pseudoephedrine hydrochloride | Ephedrine hydrochloride + Pseudoephedrine hydrochloride |
| S8 | 0.554 | 0.658 | 1.212 |
| S9 | 0.594 | 0.698 | 1.292 |
| S10 | 0.568 | 0.667 | 1.235 |

### 1.3 Determination method of a paeoniflorin content

### 1.3.1 Determination method

In the present disclosure, the paeoniflorin content in the HSBD composition is determined by HPLC. Specifically, the determination method includes:
(1) Chromatographic conditions: filler: octadecyl-bonded silica gel; mobile phase: methanol-0.05 mol/L MKP solution (35:65); flow rate: 1.0 mL/min; detection wavelength: 230 nm; and column temperature: 30°C.
(2) Preparation of a paeoniflorin test solution: About 1.0 g of the HSBD composition was weighed and added to an Erlenmeyer flask with a stopper, 25 mL of methanol was added, and a resulting system was weighed, heated to allow a reaction under reflux for 30 min, cooled, and weighed once again; and methanol was added to make up for a weight loss, a resulting mixture was thoroughly shaken and filtered, and a subsequent filtrate was taken.
(3) Preparation of a paeoniflorin reference solution: An appropriate amount of a paeoniflorin reference was weighed, and methanol was added to prepare a solution with 0.13 mg of the paeoniflorin reference per mL.
(4) 10 µL of each of the paeoniflorin test solution prepared in step (2) and the paeoniflorin reference solution prepared in step (3) was pipetted and injected into a liquid chromatograph to determine the paeoniflorin content in the HSBD composition.

The determination method of the paeoniflorin in the present disclosure is subjected to methodological verification below:

### 1.3.2 Specificity investigation

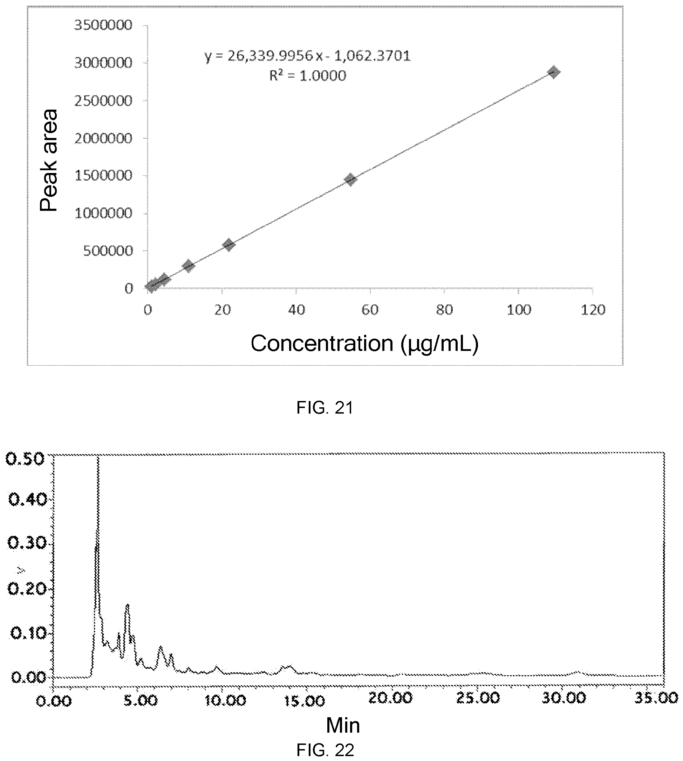

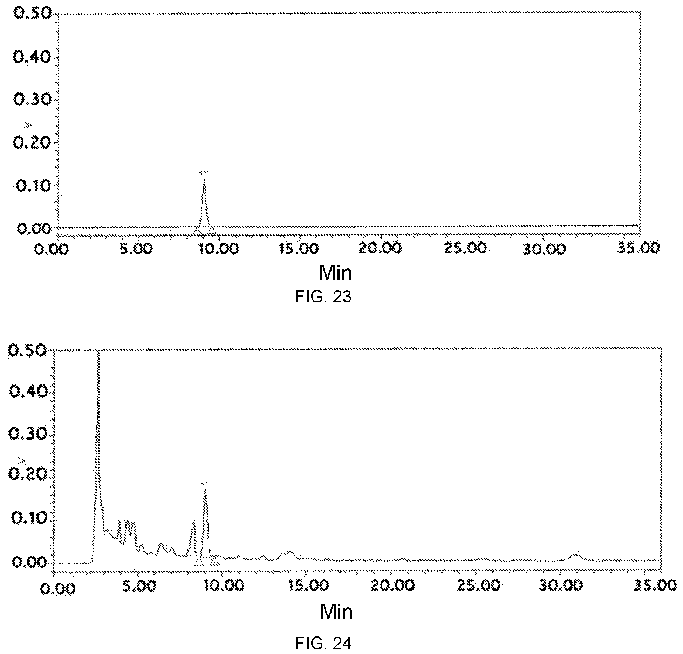

A *Paeoniae Radix Rubra* negative sample was taken to prepare a paeoniflorin negative sample solution according to the preparation method of the paeoniflorin test solution; and 10 µL of each of the paeoniflorin test solution, the paeoniflorin reference solution, and the paeoniflorin negative sample solution was injected into a liquid chromatograph and tested. Test results were shown in FIG. 22 to FIG. 24. It can be seen from the figure that the paeoniflorin negative sample solution has no obvious chromatographic peak at the same retention time as paeoniflorin, and thus it is considered that there is no interference by the negative sample.

### 1.3.3 Linear relationship investigation

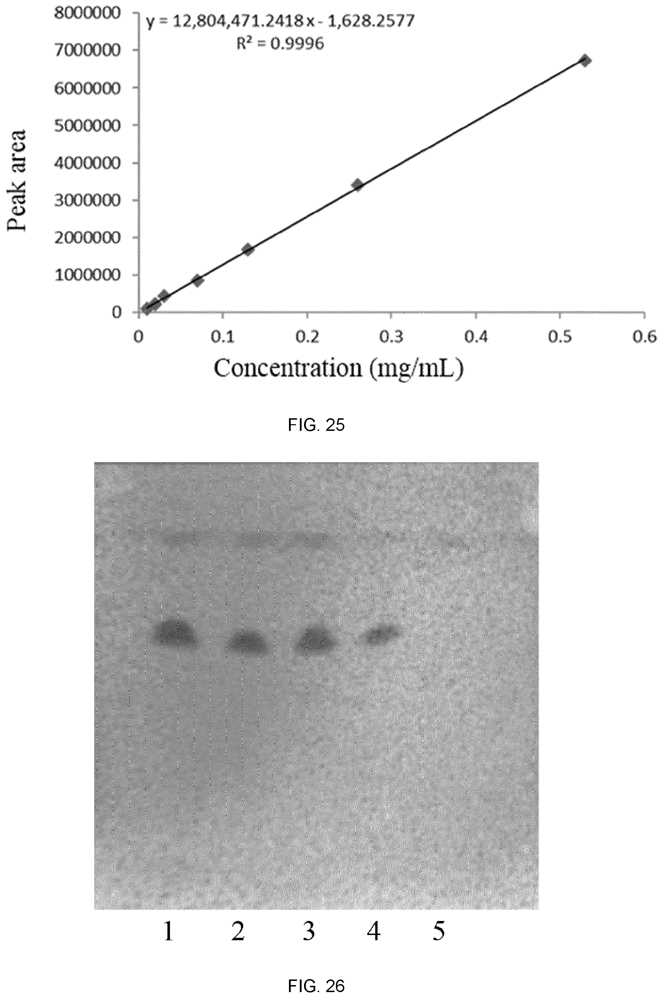

An appropriate amount of a paeoniflorin reference was accurately weighed, and methanol was added to prepare a paeoniflorin reference solution with 0.53 mg of the paeoniflorin reference per mL. The paeoniflorin reference solution was diluted 2, 4, 8, 16, 32, and 64 times to prepare a series of paeoniflorin reference solutions with different concentrations. With the concentration as an abscissa and the peak area as an ordinate, a standard curve was plotted, and a regression equation was calculated. Results were shown in FIG. 25.

A linear curve of paeoniflorin is as follows: y = 12,804,471.2418 x - 1,628.2577, R² = 0.9996; and a linear relationship between the peak area and the concentration is prominent.

### 1.3.4 Precision investigation

10 µL of a paeoniflorin reference solution was accurately pipetted and repeatedly tested 6 times, and a deviation was calculated based on a paeoniflorin peak area. Test results were shown in Table 29.

**Table 29 Precision investigation results for the determination of the paeoniflorin content in the HSBD composition**

| No. | Peak area | Mean | RSD (%) |
|---|---|---|---|
| 1 | 1716712 | 1709821 | 1.08 |
| 2 | 1726584 | | |
| 3 | 1719349 | | |
| 4 | 1723590 | | |
| 5 | 1686364 | | |
| 6 | 1686326 | | |

The results show that an RSD value is 1.08%, indicating prominent instrument precision.

### 1.3.5 Stability investigation

10 µL of a same paeoniflorin test solution was accurately pipetted and injected into a chromatograph at 0 h, 4 h, 8 h, 12 h, 18 h, and 24 h to determine a paeoniflorin peak area, and an RSD value was calculated. Test results were shown in Table 30.

**Table 30 Stability investigation results for the determination of the paeoniflorin content in the HSBD composition**

| Time (h) | Peak area | Mean | RSD (%) |
|---|---|---|---|
| 0 | 2257654 | 2265685 | 0.84 |
| 4 | 2256174 | | |
| 8 | 2253862 | | |
| 12 | 2254709 | | |
| 18 | 2269094 | | |
| 24 | 2302619 | | |

The results show that an RSD value is 0.84%, indicating that the paeoniflorin test solution is stable within 24 h.

### 1.3.6 Reproducibility investigation

A same batch of samples were taken to prepare 6 paeoniflorin test solutions according to the preparation method of the paeoniflorin test solution, the paeoniflorin test solutions were tested, and an RSD value for the paeoniflorin content was calculated. Test results were shown in Table 31.

**Table 31 Reproducibility investigation results for the determination of the paeoniflorin content in the HSBD composition**

| No. | Peak area | Content (mg/g) | Mean | RSD (%) |
|---|---|---|---|---|
| 1 | 2224804 | 4.31 | 4.40 | 1.10 |
| 2 | 2266635 | 4.38 | | |
| 3 | 2273537 | 4.40 | | |
| 4 | 2302670 | 4.45 | | |
| 5 | 2283757 | 4.40 | | |
| 6 | 2295827 | 4.43 | | |

The results show that an RSD is 1.1%, which is much lower than the standard requirement of 5%. Thus, the paeoniflorin determination method of the present disclosure has excellent reproducibility.

### 1.3.7 Accuracy investigation

The spike-and-recovery method was adopted. 0.5 g of a sample was taken, and a paeoniflorin reference solution was added according to a sample-reference ratio of 1:1. 6 parallel samples were prepared according to the preparation method of the paeoniflorin test solution, and a spiked recovery rate was calculated. Results were shown in Table 32.

**Table 32 Accuracy investigation results for the determination of the paeoniflorin content in the HSBD composition**

| No. | Peak area | Measured amount (mg) | Sample (mg) | Reference (mg) | Recovery rate (%) | Mean | RSD (%) |
|---|---|---|---|---|---|---|---|
| 1 | 2239653 | 4.34 | 2.20 | 2.20 | 97.27 | 98.86 | 2.69 |
| 2 | 2257450 | 4.37 | 2.20 | 2.20 | 98.64 | | |
| 3 | 2263223 | 4.38 | 2.21 | 2.20 | 98.64 | | |
| 4 | 2217293 | 4.29 | 2.20 | 2.20 | 95.00 | | |
| 5 | 2287294 | 4.43 | 2.20 | 2.20 | 101.36 | | |
| 6 | 2300603 | 4.45 | 2.20 | 2.20 | 102.27 | | |

It can be seen from the table that an average spiked recovery rate of paeoniflorin is 98.86%, which is in line with the relevant provisions in *Chinese Pharmacopoeia.* Thus, the determination method of the present disclosure has prominent accuracy.

### 1.3.8 Determination for different batches of HSBD composition test samples

3 batches of the HSBD composition were taken to prepare paeoniflorin test solutions. 10 µL of a paeoniflorin test solution was accurately pipetted and tested for a paeoniflorin content. Results were shown in Table 33.

**Table 33 Determination results of the paeoniflorin content in the different batches of the HSBD composition**

| Batch No. | Paeoniflorin content (mg/g) |
|---|---|
| S8 | 4.00 |
| S9 | 4.20 |
| S10 | 4.20 |

### 2. TLC identification methods for the HSBD composition

### 2.1 TLC identification method for ephedra

### 2.1.1 Identification method

(1) Preparation of an ephedra test solution: 5 g of the HSBD composition was taken and ground, 3 mL to 5 mL of a concentrated ammonia solution was added for wetting, 25 mL of TCM was added, and a resulting mixture was heated to allow a reaction under reflux for 30 min; and a resulting reaction system was filtered, a filtrate was subjected to evaporation to dryness, and a residue was dissolved with 1 mL of methanol.
(2) Preparation of an ephedra reference solution: An ephedrine hydrochloride reference was taken, and methanol was added to prepare a solution with 1 mg of the ephedrine hydrochloride reference per mL.
(3) 3 µL of each of the ephedra test solution and the ephedra reference solution was spotted on a same silica gel G TLC plate, and development was conducted with a mixed solution of TCM, methanol, and a concentrated ammonia solution (20:5:0.5) as a developing agent; and the silica gel G TLC plate was taken out, air-dried, sprayed with a ninhydrin solution, and heated until spots were clearly stained, where a spot at a position in a chromatogram of the test solution was in the same color as a spot at a corresponding position in a chromatogram of the reference solution.

### 2.1.2 Methodological verification

### (1) Specificity

An ephedra negative sample was taken to prepare an ephedra-deficient negative sample solution according to the preparation method of the ephedra test solution; 3 µL of the ephedra test solution, 3 µL of the ephedra-deficient negative sample solution, and 3 µL of the ephedra reference solution were taken and spotted on a same silica gel G TLC plate (Haiyang silica gel G plate), and development was conducted with a mixed solution of TCM, methanol, and a concentrated ammonia solution (20:5:0.5) as a developing agent at a normal temperature and humidity (T: 21.1°C, RH: 47%); and the silica gel G TLC plate was taken out, air-dried, sprayed with a ninhydrin solution, heated until spots were clearly stained, and observed under sunlight. Experimental results were shown in FIG. 26. It can be seen from the figure that, in the TLC identification method of the present disclosure, there is no spot for an active ingredient deficient in the negative sample and there is also no impurity spot at a position nearby during TLC of the negative sample, indicating that the method has prominent specificity.

### (2) Durability investigation

### 1) Comparison of different temperatures

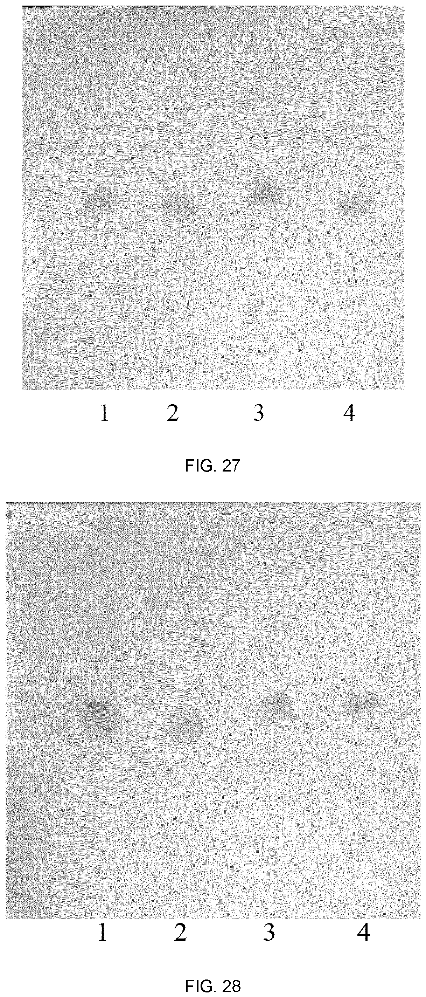

3 µL of the ephedra test solution and 3 µL of the ephedra reference solution were taken and spotted on a same silica gel G TLC plate (Haiyang silica gel G plate), and development was conducted with a mixed solution of TCM, methanol, and a concentrated ammonia solution (20:5:0.5) as a developing agent at a normal temperature (T: 21.1°C, RH: 47%) and a low temperature (T: 6.4°C, RH: 90%); and the silica gel G TLC plate was taken out, air-dried, sprayed with a ninhydrin solution, heated until spots were clearly stained, and observed under sunlight. Experimental results were shown in FIG. 27 and FIG. 28.

It can be seen from FIG. 27 and FIG. 28 that the resolution effect is excellent at both the normal temperature and the low temperature, and a main spot at a position in a chromatogram of the HSBD composition is in the same color as a main spot at a corresponding position in a chromatogram of the reference. The experimental results show that the temperature has a little impact on the TLC identification of ephedra in the HSBD composition, indicating that the TLC identification method has excellent durability for different temperatures.

### 2) Comparison of different humidities

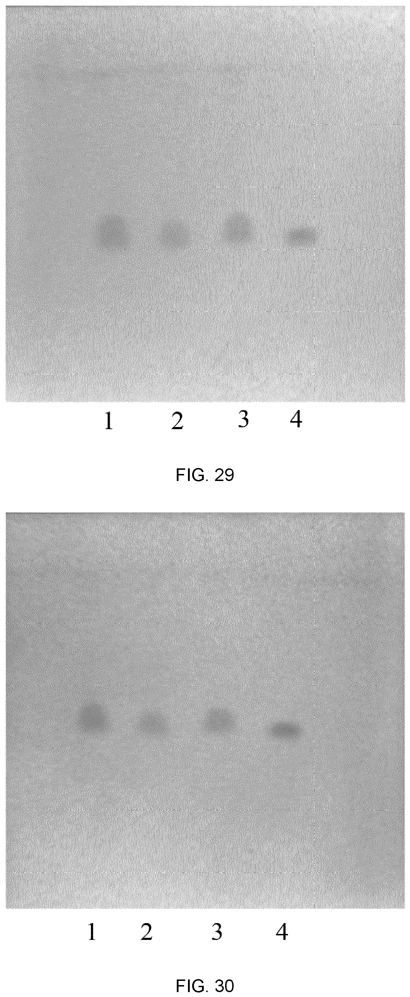

3 µL of the ephedra test solution and 3 µL of the ephedra reference solution were taken and spotted on a same silica gel G TLC plate (Haiyang silica gel G plate), and development was conducted with a mixed solution of TCM, methanol, and a concentrated ammonia solution (20:5:0.5) as a developing agent at a normal humidity (T: 21.1°C, RH: 47%), a low humidity (T: 21.1°C, RH: 36%), and a high humidity (T: 21.1°C, RH: 79%); and the silica gel G TLC plate was taken out, air-dried, sprayed with a ninhydrin solution, heated until spots were clearly stained, and observed under sunlight. Experimental results were shown in FIG. 27, FIG. 29, and FIG. 30.

It can be seen from FIG. 27, FIG. 29, and FIG. 30 that the resolution effect is excellent at the normal humidity, low humidity, and high humidity, and a main spot at a position in a chromatogram of the HSBD composition is in the same color as a main spot at a corresponding position in a chromatogram of the reference. The experimental results show that the humidity has a little impact on the TLC identification of ephedra in the HSBD composition, indicating that the TLC identification method has excellent durability for different humidities.

### 3) Comparison of different spotting amounts

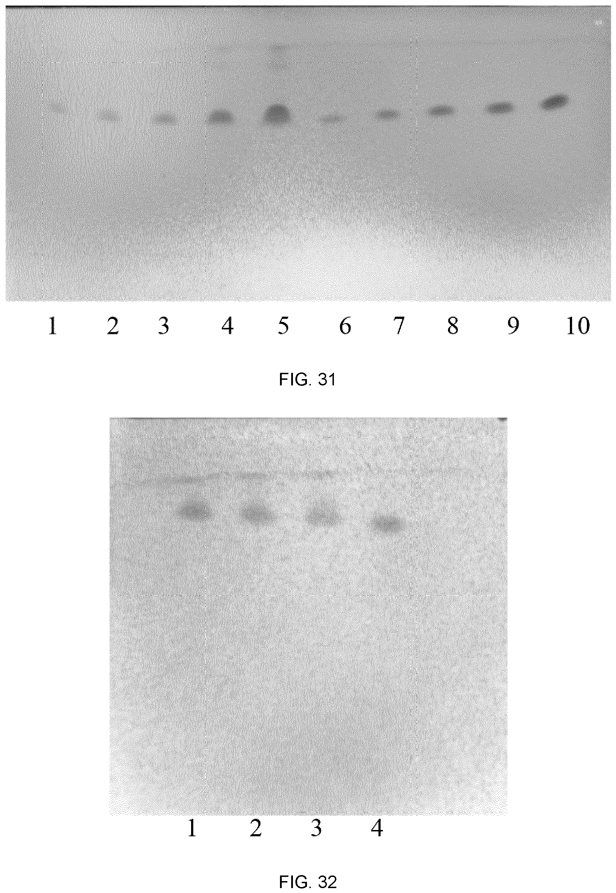

The ephedra test solution and the ephedra reference solution each were taken and spotted at different amounts on a same silica gel G TLC plate (Haiyang silica gel G plate), and development was conducted with a mixed solution of TCM, methanol, and a concentrated ammonia solution (20:5:0.5) as a developing agent; and the silica gel G TLC plate was taken out, air-dried, sprayed with a ninhydrin solution, heated until spots were clearly stained, and observed under sunlight. Experimental results were shown in FIG. 31.

It can be seen from FIG. 31 that, when the ephedra test solution is spotted at an amount of 3 µL and the ephedra reference solution is spotted at an amount of 3 µL, a main spot at a position in a test chromatogram corresponding to a reference chromatogram is clear and is not interfered. Therefore, in the ephedra identification method of the present disclosure, the ephedra test solution is spotted at an amount of 3 µL and the ephedra reference solution is spotted at an amount of 3 µL.

### 4) Comparison of TLC plates of different manufacturers

3 µL of the ephedra test solution and 3 µL of the ephedra reference solution were taken and spotted on each of silica gel G TLC plates of different manufacturers (Haiyang silica gel G plate, PUKE silica gel G plate, and Merck silica gel G plate), and development was conducted with a mixed solution of TCM, methanol, and a concentrated ammonia solution (20:5:0.5) as a developing agent at the same temperature and humidity (T: 21.1°C, RH: 47%); and the silica gel G TLC plates were taken out, air-dried, sprayed with a ninhydrin solution, heated until spots were clearly stained, and observed under sunlight. Experimental results were shown in FIG. 27, FIG. 32, and FIG. 33.

The Haiyang silica gel G plate was a TLC plate produced by Qingdao Haiyang Chemical Co., Ltd.; the PUKE silica gel G plate was a TLC plate produced by Qingdao PUKE Parting Materials Co., Ltd.; and the Merck silica gel G plate was a TLC plate produced by Merck KGaA. The TLC plates each had a specification of 10 cm × 10 cm and a thickness of 0.20 mm to 0.25 mm.

The results show that the silica gel G TLC plates of different manufacturers (Haiyang silica gel G plate, PUKE silica gel G plate, and Merck silica gel G plate) have no significant impact on the TLC identification of ephedra in the HSBD composition, indicating that the TLC identification method has prominent durability for silica gel G TLC plates of different manufacturers.

### 2.2 TLC identification method for licorice

### 2.2.1 Identification method

(1) Preparation of a licorice test solution: 5 g of the HSBD composition was taken and ground, 40 mL of diethyl ether was added, and a resulting mixture was heated to allow a reaction under reflux for 1 h; a resulting reaction system was filtered, and a resulting ether solution was discarded; a residue was dissolved with 30 mL of methanol, and a resulting solution was heated to allow a reaction under reflux for 1 h and then filtered; a filtrate was subjected to evaporation to dryness, and a residue was dissolved with 40 mL of water and subjected to extraction with 20 mL of n-butanol under shaking 3 times; resulting n-butanol phases were combined and washed with water 3 times, and resulting aqueous phases were discarded; and the n-butanol was evaporated, and a residue was dissolved with 5 mL of methanol.
(2) Preparation of a licorice reference solution: 1 g of a licorice reference was taken to prepare the licorice reference solution according to the preparation method of the licorice test solution.
(3) 4 µL of each of the licorice test solution and the licorice reference solution was taken and spotted on a same silica gel G TLC plate prepared with a 1% sodium hydroxide solution, and development was conducted with a mixed solution of ethyl acetate, formic acid, glacial acetic acid, and water (15:1:1:2) as a developing agent; and the silica gel G TLC plate was taken out, air-dried, sprayed with a 10% sulfuric acid-ethanol solution, and heated at 105°C until spots were clearly stained, where a spot at a position in a chromatogram of the test solution was in the same color as a spot at a corresponding position in a chromatogram of the reference solution.

### 2.2.2 Methodological verification

### (1) Specificity investigation

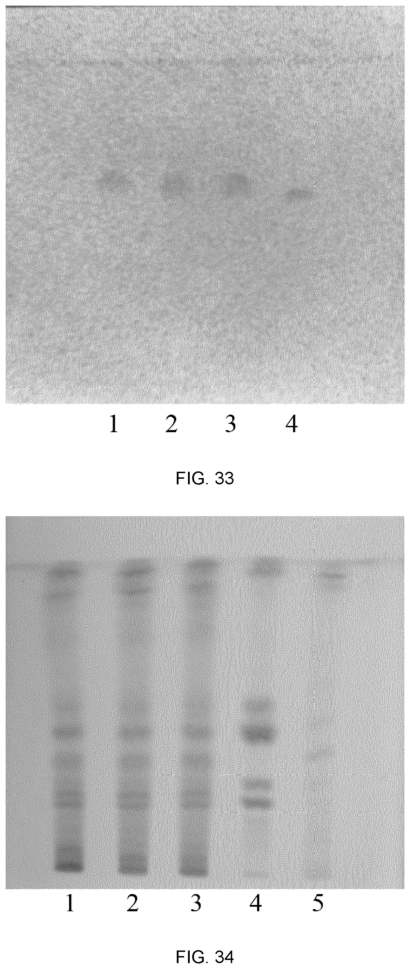

A licorice negative sample was taken to prepare a licorice-deficient negative sample solution according to the preparation method of the licorice test solution; 4 µL of the licorice test solution, 4 µL of the licorice reference solution, and 4 µL of the licorice-deficient negative sample solution were taken and spotted on a same silica gel G TLC plate (Haiyang silica gel G plate), and development was conducted with a mixed solution of ethyl acetate, formic acid, glacial acetic acid, and water (15:1:1:2) as a developing agent at a normal temperature and humidity (T: 21.1°C, RH: 47%); and the silica gel G TLC plate was taken out, air-dried, sprayed with a 10% sulfuric acid-ethanol solution, heated at 105°C until spots were clearly stained, and observed under sunlight. Experimental results were shown in FIG. 34. It can be seen from the figure that, in the TLC identification method of the present disclosure, there is no spot for an active ingredient deficient in the negative sample and there is also no impurity spot at a position nearby during TLC of the negative sample, indicating that the method has prominent specificity.

### (2) Durability investigation

### 1) Comparison of different temperatures

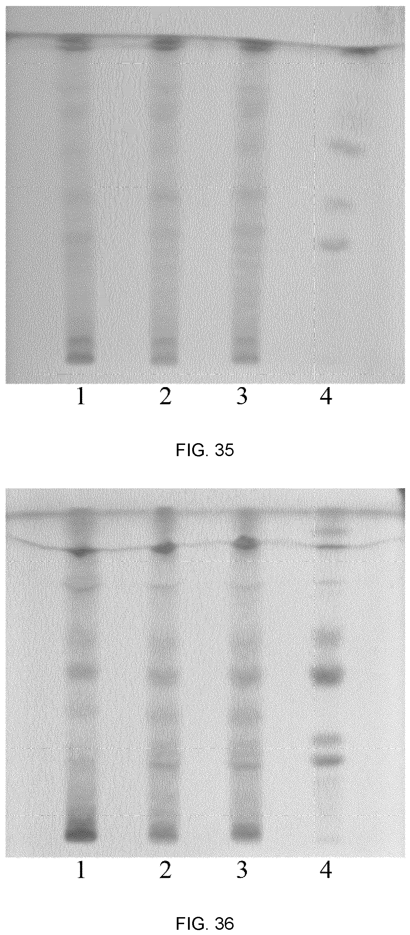

4 µL of the licorice test solution and 4 µL of the licorice reference solution were taken and spotted on a same silica gel G TLC plate (Haiyang silica gel G plate), and development was conducted with a mixed solution of ethyl acetate, formic acid, glacial acetic acid, and water (15:1:1:2) as a developing agent at a normal temperature (T: 21.1°C, RH: 47%) and a low temperature (T: 6.4°C, RH: 90%); and the silica gel G TLC plate was taken out, air-dried, sprayed with a 10% sulfuric acid-ethanol solution, heated at 105°C until spots were clearly stained, and observed under sunlight. Experimental results were shown in FIG. 35 and FIG. 36.

It can be seen from FIG. 35 and FIG. 36 that the resolution effect is excellent at both the normal temperature and the low temperature, and a main spot at a position in a chromatogram of the HSBD composition is in the same color as a main spot at a corresponding position in a chromatogram of the reference. The experimental results show that the temperature has a little impact on the TLC identification of licorice in the HSBD composition, indicating that the TLC identification method has excellent durability for different temperatures.

### 2) Comparison of different humidities

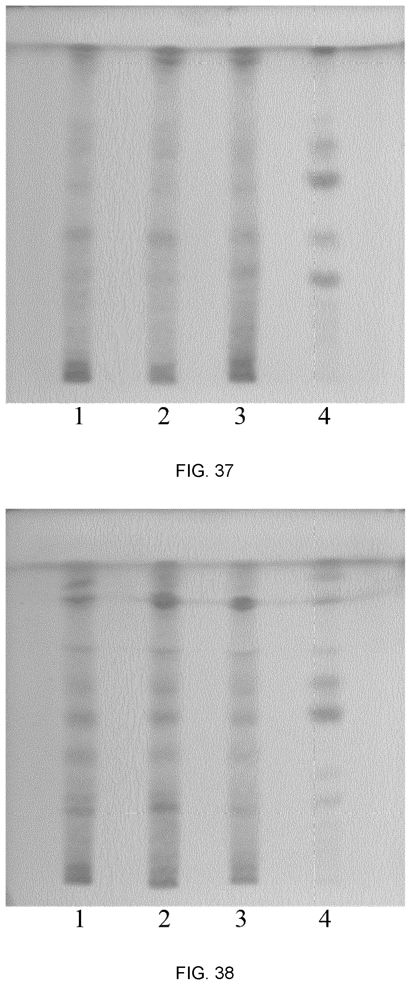

4 µL of the licorice test solution and 4 µL of the licorice reference solution were taken and spotted on a same silica gel G TLC plate (Haiyang silica gel G plate), and development was conducted with a mixed solution of ethyl acetate, formic acid, glacial acetic acid, and water (15:1:1:2) as a developing agent at a normal humidity (T: 21.1°C, RH: 47%), a low humidity (T: 21.1°C, RH: 36%), and a high humidity (T: 21.1°C, RH: 79%); and the silica gel G TLC plate was taken out, air-dried, sprayed with a 10% sulfuric acid-ethanol solution, heated at 105°C until spots were clearly stained, and observed under sunlight. Experimental results were shown in FIG. 35, FIG. 37, and FIG. 38.

It can be seen from FIG. 35, FIG. 37, and FIG. 38 that the resolution effect is excellent at the normal humidity, low humidity, and high humidity, and a main spot at a position in a chromatogram of the HSBD composition is in the same color as a main spot at a corresponding position in a chromatogram of the reference. The experimental results show that the humidity has a little impact on the TLC identification of licorice in the HSBD composition, indicating that the TLC identification method has excellent durability for different humidities.

### 3) Comparison of different spotting amounts

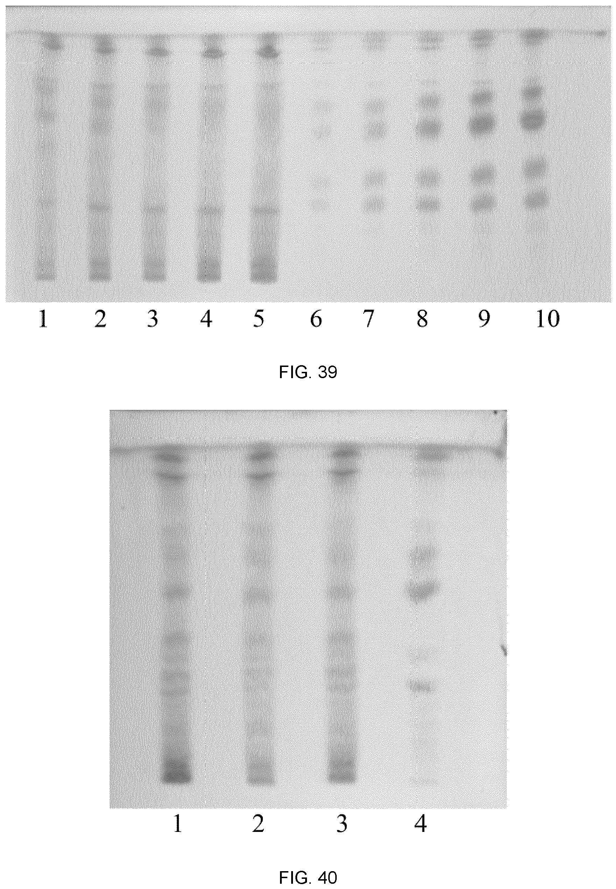

The licorice test solution and the licorice reference solution each were taken and spotted at different amounts on a same silica gel G TLC plate (Haiyang silica gel G plate), and development was conducted with a mixed solution of ethyl acetate, formic acid, glacial acetic acid, and water (15:1:1:2) as a developing agent at a normal temperature and humidity (T: 21.1°C, RH: 47%); and the silica gel G TLC plate was taken out, air-dried, sprayed with a 10% sulfuric acid-ethanol solution, heated at 105°C until spots were clearly stained, and observed under sunlight. Experimental results were shown in FIG. 39.

It can be seen from FIG. 39 that, when the licorice test solution is spotted at an amount of 4 µL and the licorice reference solution is spotted at an amount of 4 µL, a main spot at a position in a test chromatogram corresponding to a reference chromatogram is clear and is not interfered. Therefore, in the licorice identification method of the present disclosure, the licorice test solution is spotted at an amount of 4 µL and the licorice reference solution is spotted at an amount of 4 µL.

### 4) Comparison of TLC plates of different manufacturers

The licorice test solution and the licorice reference solution were taken and spotted on each of silica gel G TLC plates of different manufacturers (Haiyang silica gel G plate, PUKE silica gel G plate, and Merck silica gel G plate), and development was conducted with a mixed solution of ethyl acetate, formic acid, glacial acetic acid, and water (15:1:1:2) as a developing agent at a normal temperature and humidity (T: 21.1°C, RH: 47%); and the silica gel G TLC plate was taken out, air-dried, sprayed with a 10% sulfuric acid-ethanol solution, heated at 105°C until spots were clearly stained, and observed under sunlight. Experimental results were shown in FIG. 35, FIG. 40, and FIG. 41.

The Haiyang silica gel G plate was a TLC plate produced by Qingdao Haiyang Chemical Co., Ltd.; the PUKE silica gel G plate was a TLC plate produced by Qingdao PUKE Parting Materials Co., Ltd.; and the Merck silica gel G plate was a TLC plate produced by Merck KGaA. The TLC plates each had a specification of 10 cm × 10 cm and a thickness of 0.20 mm to 0.25 mm.

The results show that the silica gel G TLC plates of different manufacturers (Haiyang silica gel G plate, PUKE silica gel G plate, and Merck silica gel G plate) have no significant impact on the TLC identification of licorice in the HSBD composition, indicating that the TLC identification method has prominent durability for silica gel G TLC plates of different manufacturers.

### 2.3 TLC identification method for Magnolia officinalis

### 2.3.1 Identification method

(1) Preparation of a *Magnolia officinalis* test solution: 5 g of the HSBD composition was taken and ground, 20 mL of methanol was added, and a resulting mixture was subjected to an ultrasonic treatment for 30 min and then filtered; a filtrate was subjected to evaporation to dryness, and a residue was dissolved with 40 mL of water and then subjected to extraction with 30 mL of ethyl acetate under shaking 2 times; and resulting ethyl acetate phases were combined and subjected to evaporation to dryness, and a residue was dissolved with 1 mL of methanol.
   It should be noted that, traditionally, a *Magnolia officinalis* test solution is generally prepared through methanol extraction alone, but an ethyl acetate extraction step is added in the present disclosure, which can well remove impurities in the HSBD composition to eliminate their interference on target spots (magnolol and honokiol).
(2) Preparation of a magnolol reference solution: A magnolol reference was taken, and methanol was added to prepare a solution with 1 mg of the magnolol reference per mL.
(3) Preparation of a honokiol reference solution: A honokiol reference was taken, and methanol was added to prepare a solution with 1 mg of the honokiol reference per mL.
(4) 4 µL of each of the *Magnolia officinalis* test solution, the magnolol reference solution, and the honokiol reference solution was spotted on a same silica gel G TLC plate, and development was conducted with a mixed solution of toluene, ethyl acetate, and methanol (17:3:3) as a developing agent; and the silica gel G TLC plate was taken out, air-dried, sprayed with a 5% vanillin-sulfuric acid solution, and heated until spots were clearly stained, where a spot at a position in a chromatogram of the test solution was in the same color as a spot at a corresponding position in a chromatogram of the reference solution.

### 2.3.2 Methodological verification

### (1) Specificity

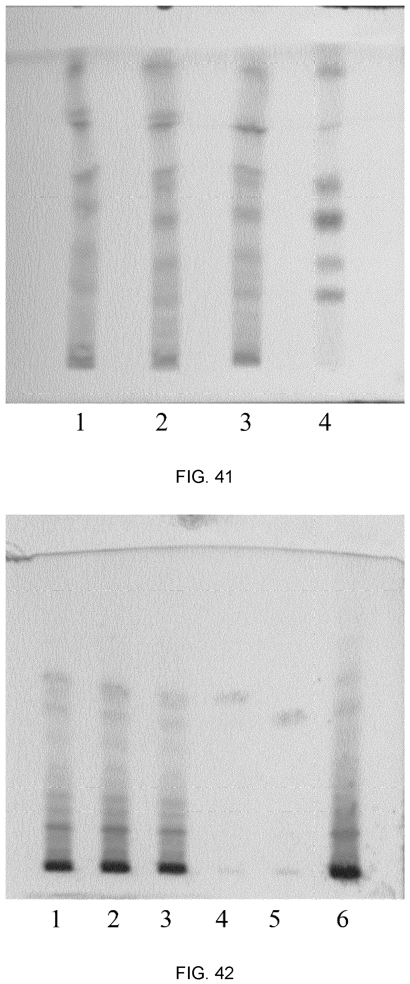

A *Magnolia officinalis* negative sample was taken to prepare a *Magnolia officinalis*-deficient negative sample solution according to the preparation method of the *Magnolia officinalis* test solution; 4 µL of the *Magnolia officinalis* test solution, 4 µL of the magnolol reference solution, 4 µL of the honokiol reference solution, and 4 µL of the *Magnolia officinalis*-deficient negative sample solution were taken and spotted on a same silica gel G TLC plate (Merck silica gel G plate), and development was conducted with a mixed solution of toluene, ethyl acetate, and methanol (17:3:3) as a developing agent at a normal temperature and humidity (T: 26. 1°C, RH: 48%); and the silica gel G TLC plate was taken out, air-dried, sprayed with a 5% vanillin-sulfuric acid solution, heated until spots were clearly stained, and observed under sunlight. Experimental results were shown in FIG. 42. It can be seen from the figure that, in the TLC identification method of the present disclosure, there is no spot for an active ingredient deficient in the negative sample and there is also no impurity spot at a position nearby during TLC of the negative sample, indicating that the method has prominent specificity.

### (2) Durability investigation

### 1) Comparison of different temperatures

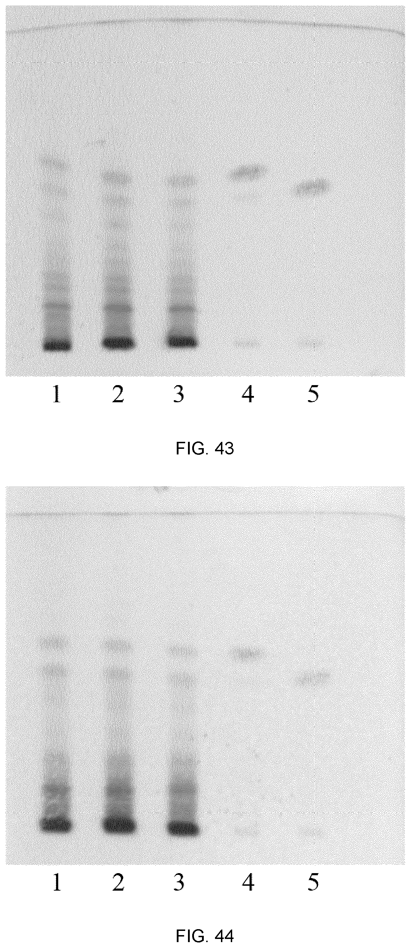

4 µL of the *Magnolia officinalis* test solution, 4 µL of the magnolol reference solution, and 4 µL of the honokiol reference solution were taken and spotted on a same silica gel G TLC plate (Merck silica gel G plate), and development was conducted with a mixed solution of toluene, ethyl acetate, and methanol (17:3:3) as a developing agent at a normal temperature (T: 26.1°C, RH: 48%) and a low temperature (T: 3.1°C, RH: 91%); and the silica gel G TLC plate was taken out, air-dried, sprayed with a 5% vanillin-sulfuric acid solution, heated until spots were clearly stained, and observed under sunlight. Experimental results were shown in FIG. 43 and FIG. 44.

It can be seen from FIG. 43 and FIG. 44 that the resolution effect is excellent at both the normal temperature and the low temperature, and a main spot at a position in a chromatogram of the HSBD composition is in the same color as a main spot at a corresponding position in a chromatogram of the reference. The experimental results show that the temperature has a little impact on the TLC identification of *Magnolia officinalis* in the HSBD composition, indicating that the TLC identification method has excellent durability for different temperatures.

### 2) Comparison of different humidities

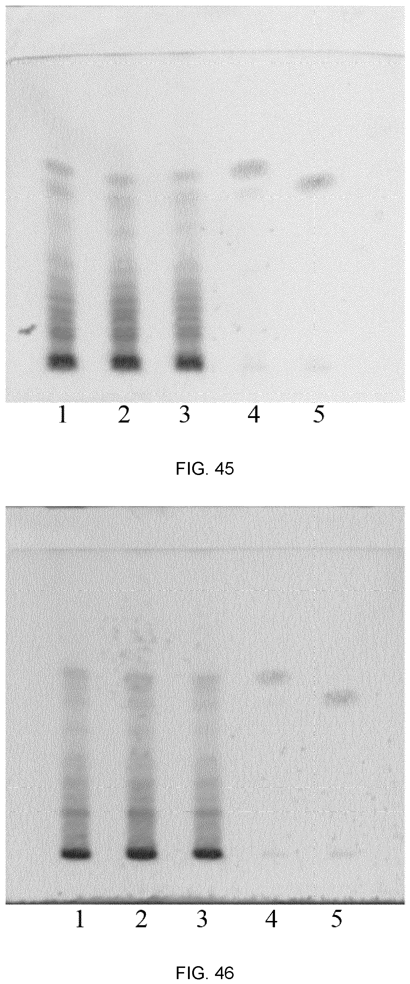

4 µL of the *Magnolia officinalis* test solution, 4 µL of the magnolol reference solution, and 4 µL of the honokiol reference solution were taken and spotted on a same silica gel G TLC plate (Merck silica gel G plate), and development was conducted with a mixed solution of toluene, ethyl acetate, and methanol (17:3:3) as a developing agent at a normal humidity (T: 26.1°C, RH: 48%), a low humidity (T: 26. 1°C, RH: 36%), and a high humidity (T: 26. 1°C, RH: 78%); and the silica gel G TLC plate was taken out, air-dried, sprayed with a 5% vanillin-sulfuric acid solution, heated until spots were clearly stained, and observed under sunlight. Experimental results were shown in FIG. 43, FIG. 45, and FIG. 46.

It can be seen from FIG. 43, FIG. 45, and FIG. 46 that the resolution effect is excellent at the normal humidity, low humidity, and high humidity, and a main spot at a position in a chromatogram of the HSBD composition is in the same color as a main spot at a corresponding position in a chromatogram of the reference. The experimental results show that the humidity has a little impact on the TLC identification of *Magnolia officinalis* in the HSBD composition, indicating that the TLC identification method has excellent durability for different humidities.

### 3) Comparison of different spotting amounts

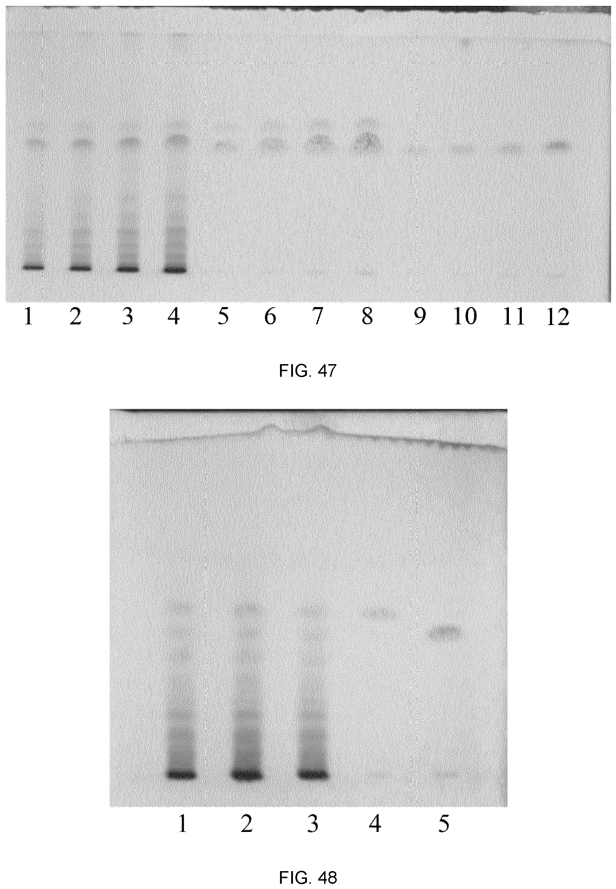

The *Magnolia officinalis* test solution, the magnolol reference solution, and the honokiol reference solution each were taken and spotted at different amounts on a same silica gel G TLC plate (Merck silica gel G plate), and development was conducted with a mixed solution of toluene, ethyl acetate, and methanol (17:3:3) as a developing agent at a normal temperature and humidity (T: 26. 1°C, RH: 48%); and the silica gel G TLC plate was taken out, air-dried, sprayed with a 5% vanillin-sulfuric acid solution, heated until spots were clearly stained, and observed under sunlight. Experimental results were shown in FIG. 47.

It can be seen from FIG. 47 that, when the *Magnolia officinalis* test solution is spotted at an amount of 4 µL, the magnolol reference solution is spotted at an amount of 4 µL, and the honokiol reference solution is spotted at an amount of 4 µL, a main spot at a position in a test chromatogram corresponding to a reference chromatogram is clear and is not interfered. Therefore, in the *Magnolia officinalis* identification method of the present disclosure, the *Magnolia officinalis* test solution is spotted at an amount of 4 µL, the magnolol reference solution is spotted at an amount of 4 µL, and the honokiol reference solution is spotted at an amount of 4 µL.

### 4) Comparison of TLC plates of different manufacturers

4 µL of the *Magnolia officinalis* test solution, 4 µL of the magnolol reference solution, and 4 µL of the honokiol reference solution were taken and spotted on each of silica gel G TLC plates of different manufacturers (Haiyang silica gel G plate, PUKE silica gel G plate, and Merck silica gel G plate), and development was conducted with a mixed solution of toluene, ethyl acetate, and methanol (17:3:3) as a developing agent at a normal temperature and humidity (T: 26.1°C, RH: 48%); and the silica gel G TLC plates were taken out, air-dried, sprayed with a 5% vanillin-sulfuric acid solution, heated until spots were clearly stained, and observed under sunlight. Experimental results were shown in FIG. 43, FIG. 48, and FIG. 49.

The Haiyang silica gel G plate was a TLC plate produced by Qingdao Haiyang Chemical Co., Ltd.; the PUKE silica gel G plate was a TLC plate produced by Qingdao PUKE Parting Materials Co., Ltd.; and the Merck silica gel G plate was a TLC plate produced by Merck KGaA. The TLC plates each had a specification of 10 cm × 10 cm and a thickness of 0.20 mm to 0.25 mm.

The results show that the silica gel G TLC plates of different manufacturers (Haiyang silica gel G plate, PUKE silica gel G plate, and Merck silica gel G plate) have no significant impact on the TLC identification of *Magnolia officinalis* in the HSBD composition, indicating that the TLC identification method has prominent durability for silica gel G TLC plates of different manufacturers.

### 2.4 TLC identification method for Astragalus membranaceus

### 2.4.1 Identification method

(1) Preparation of an *Astragalus membranaceus* test solution: An appropriate amount of the HSBD composition was taken and ground; about 5 g of the ground composition was taken, 30 mL of methanol was added, and a resulting mixture was subjected to an ultrasonic treatment for 30 min, then cooled, and filtered; a filtrate was subjected to evaporation to dryness, a residue was dissolved with 20 mL of water, and a resulting solution was subjected to extraction with 20 mL of water-saturated n-butanol under shaking 2 times; resulting n-butanol phases were combined and washed with 20 mL of an ammonia solution 2 times, and resulting ammonia phases were discarded; and the n-butanol was evaporated, and a residue was dissolved with 1 mL of methanol.
(2) Preparation of an *Astragalus membranaceus* reference solution: An astragaloside reference was taken, and methanol was added to prepare a solution with 1 mg of the astragaloside reference per mL.
(3) 5 µL to 8 µL of the *Astragalus membranaceus* test solution and 2 µL of the *Astragalus membranaceus* reference solution were taken and spotted on a same silica gel G TLC plate, and development was conducted with a lower layer of a mixed solution of TCM, methanol, and water (13:7:2) as a developing agent at 4°C to 10°C; and the silica gel G TLC plate was taken out, air-dried, sprayed with a 10% sulfuric acid-ethanol solution, heated at 105°C until spots were clearly stained, and observed under UV light (365 nm). A fluorescent spot at a position in a chromatogram of the test solution was in the same color as a fluorescent spot at a corresponding position in a chromatogram of the reference solution.

### 2.4.2 Methodological verification

### (1) Specificity investigation

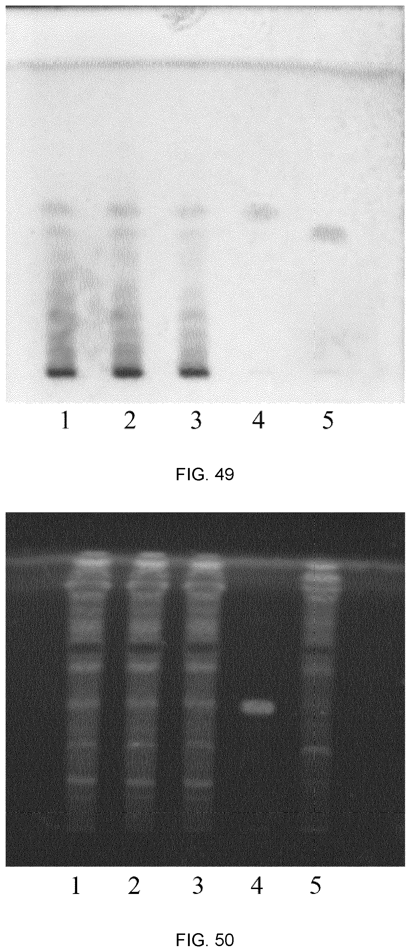

An *Astragalus membranaceus* negative sample was taken to prepare an *Astragalus membranaceus-deficient* negative sample solution according to the preparation method of the *Astragalus membranaceus* test solution; and the *Astragalus membranaceus* test solution, the *Astragalus membranaceus-deficient* negative sample solution, and the *Astragalus membranaceus* reference solution were spotted on a same silica gel G TLC plate (Merck silica gel G plate) and tested according to the proposed method. Results were shown in FIG. 50. It can be seen from the figure that, in the TLC identification method of the present disclosure, there is no spot for an active ingredient deficient in the negative sample and there is also no impurity spot at a position nearby during TLC of the negative sample, indicating that the method has prominent specificity.

### (2) Durability investigation

### 1) Comparison of different temperatures

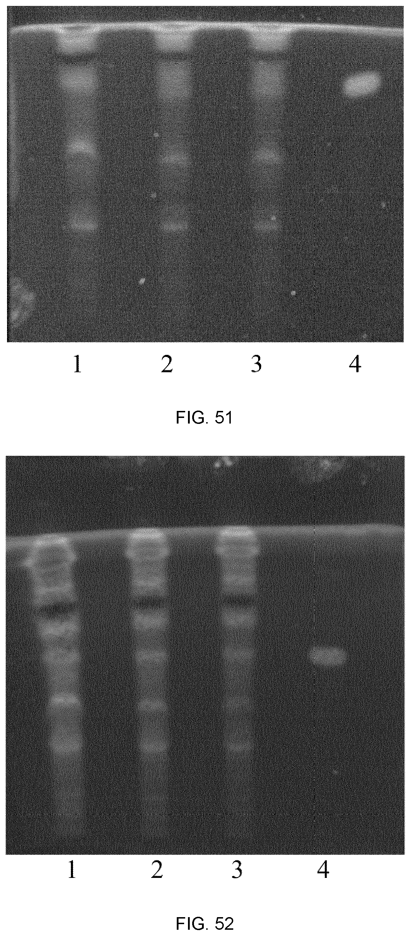

Spotted silica gel G plates (Merck silica gel G plates) were taken and subjected to development at a normal temperature (T: 25°C, RH: 75%) and a low temperature (T: 9°C, RH: 89%), respectively, and then observed according to the proposed method. Results were shown in FIG. 26 and FIG. 27. The results show that, at the normal temperature, a spot in either the test chromatogram or the reference chromatogram has a too-high Rf value and poor resolution (FIG. 51); and at the low temperature, a spot in the test chromatogram has an appropriate Rf value and prominent resolution (FIG. 52), and well corresponds to a spot at a corresponding position in the reference chromatogram. Therefore, in the method of the present disclosure, the development is conducted at 4°C to 10°C.

### 2) Comparison of different humidities

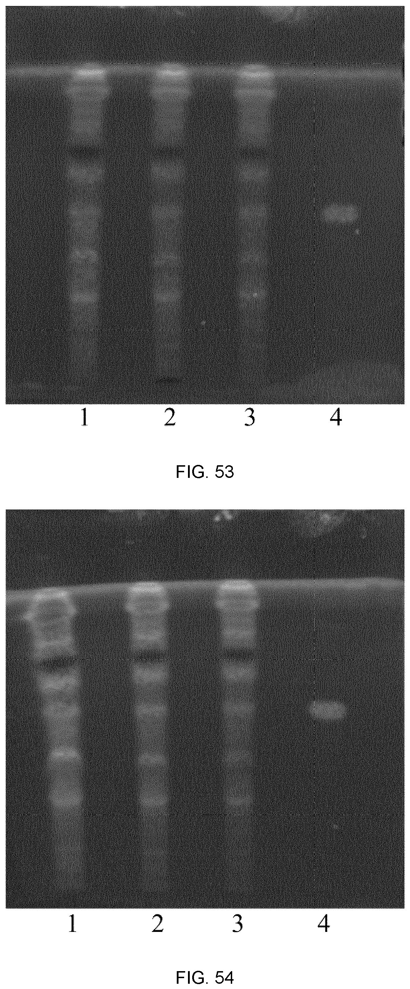

Spotted silica gel G plates (Merck silica gel G plates) were taken and subjected to development at a low temperature and low humidity (T: 8.9°C, RH: 41%) and a low temperature and high humidity (T: 8.9°C, RH: 92%), respectively, and then observed according to the proposed method. Results were shown in FIG. 53 and FIG. 54. The results show that the humidity has a little impact on the TLC identification of *Astragalus membranaceus* in the HSBD composition, indicating that the TLC identification method has excellent durability for different humidities.

### 3) Comparison of different spotting amounts

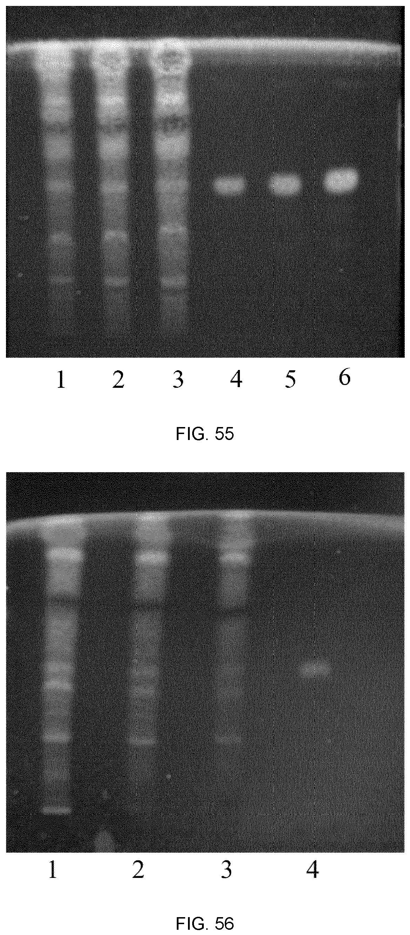

The *Astragalus membranaceus* test solution and the *Astragalus membranaceus* reference solution each were spotted at different volumes on a same silica gel G TLC plate (Merck silica gel G plate) and tested according to the proposed method. Results were shown in FIG. 55, and it can be seen from the figure that, when the *Astragalus membranaceus* test solution is spotted at an amount of 5 µL to 8 µL and the *Astragalus membranaceus* reference solution is spotted at an amount of 2 µL to 3 µL, a fluorescent spot at a position in a test chromatogram corresponding to a reference chromatogram is clear. Therefore, in the method of the present disclosure, the *Astragalus membranaceus* test solution is spotted at an amount of 5 µL to 8 µL and the *Astragalus membranaceus* reference solution is spotted at an amount of 2 µL to 3 µL.

### 4) Comparison of different TLC plates

The *Astragalus membranaceus* test solution and the *Astragalus membranaceus* reference solution were spotted on each of silica gel G TLC plates of different manufacturers (Merck silica gel G plate, Haiyang silica gel G plate, and Yinlong silica gel G plate) and tested according to the proposed method. Results were shown in FIG. 52, FIG. 56, and FIG. 57.

The Merck silica gel G plate was a TLC plate produced by Merck KGaA; the Haiyang silica gel G plate was a TLC plate produced by Qingdao Haiyang Chemical Co., Ltd.; and the Yinlong silica gel G plate was a TLC plate produced by Yantai Chemical Industry Institute. The TLC plates each had a specification of 10 cm × 10 cm and a thickness of 0.20 mm to 0.25 mm.

The results show that the 3 silica gel G TLC plates all can achieve a prominent resolution effect, indicating that the TLC identification method has prominent durability for silica gel G TLC plates of different manufacturers.

### 2.5 TLC identification method for Semen Lepidii

### 2.5.1 Identification method

Specifically, the TLC identification method for *Semen Lepidii* is as follows:
(1) Preparation of a *Semen Lepidii* test solution: An appropriate amount of the HSBD composition was taken and ground; about 5 g of the ground compound was taken, 30 mL of 70% methanol was added, and a resulting mixture was subjected to an ultrasonic treatment for 30 min, cooled, and filtered; a filtrate was subjected to evaporation to dryness, and a residue was dissolved with 5 mL of water; a resulting solution was allowed to pass through a D101 macroporous resin column (with an inner diameter of 1.5 cm and a column height of 12 cm), and the macroporous resin column was subjected to elution with water until an eluate was colorless and then subjected to elution with 70% methanol until an eluate was colorless; and an eluate of the 70% methanol was collected and subjected to evaporation to dryness, and a residue was dissolved with 1 mL of methanol.
(2) Preparation of a *Semen Lepidii* reference solution: A quercetin-3-O-β-D-glucose-7-O-β-D-gentiobioside reference was taken, and 30% methanol was added to prepare a solution with 0.1 mg of the quercetin-3-O-β-D-glucose-7-O-β-D-gentiobioside reference per mL.
(3) 2 µL of each of the *Semen Lepidii* test solution and the *Semen Lepidii* reference solution was spotted on a same PA film, and development was conducted with a mixed solution of ethyl acetate, methanol, and water (7:2:1) as a developing agent; and the PA film was taken out, air-dried, sprayed with a 2% aluminum chloride-ethanol solution, hot air-dried, and observed under UV light (365 nm). A fluorescent spot at a position in a chromatogram of the test solution was in the same color as a fluorescent spot at a corresponding position in a chromatogram of the reference solution.

It should be noted that, in the existing TLC identification process for *Semen Lepidii,* a *Semen Lepidii* test solution is generally prepared by directly dissolving a relevant sample with methanol, heating to allow a reaction under reflux, and filtering. However, the large number of components in the HSBD composition in the present disclosure have a great impact on the identification method. Thus, the macroporous resin purification step is added in the present disclosure.

### 2.5.2 Methodological verification

### (1) Specificity investigation

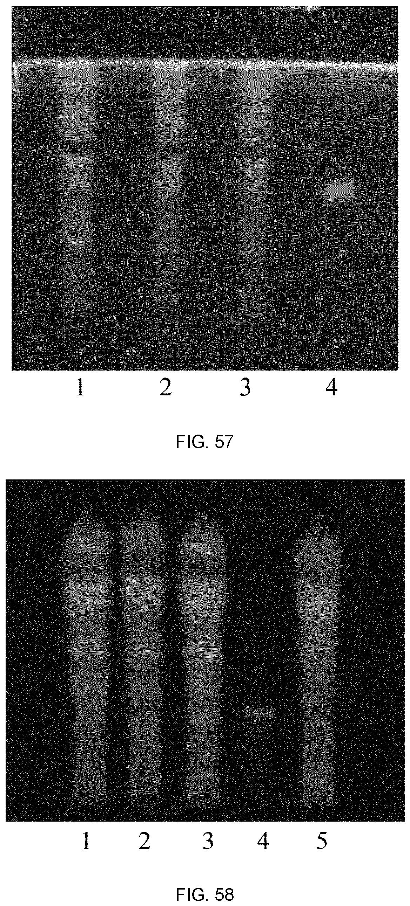

A *Semen Lepidii* negative sample was taken to prepare a *Semen Lepidii-deficient* negative sample solution according to the preparation method of the *Semen Lepidii* test solution; and 2 µL of the *Semen Lepidii* test solution, 2 µL of the *Semen Lepidii-deficient* negative sample solution, and 2 µL of the *Semen Lepidii* reference solution were spotted on a same PA film and tested according to the proposed method. Results were shown in FIG. 58. It can be seen from the figure that, in the TLC identification method of the present disclosure, there is no spot for an active ingredient deficient in the negative sample and there is also no impurity spot at a position nearby during TLC of the negative sample, indicating that the method has prominent specificity.

### (2) Durability investigation

### 1) Comparison of different temperatures

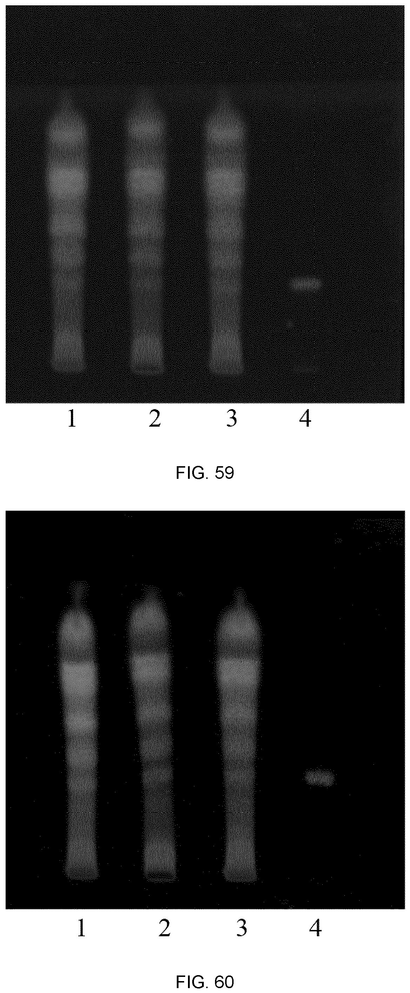

2 µL of the *Semen Lepidii* test solution and 2 µL of the *Semen Lepidii* reference solution were taken and spotted on a PA film, and development was conducted with a mixed solution of ethyl acetate, methanol, and water (7:2:1) as a developing agent at a normal temperature (T: 25°C, RH: 75%) and a low temperature (T: 9°C, RH: 89%); and the PA film was taken out, air-dried, sprayed with a 2% aluminum chloride-ethanol solution, hot air-dried, and observed under UV light (365 nm). Experimental results were shown in FIG. 59 and FIG. 60.

It can be seen from FIG. 59 and FIG. 60 that the resolution effect is excellent at both the normal temperature and the low temperature, and a main spot at a position in a chromatogram of the HSBD composition is in the same color as a main spot at a corresponding position in a chromatogram of the reference. The experimental results show that the temperature has a little impact on the TLC identification of *Semen Lepidii* in the HSBD composition, indicating that the TLC identification method has excellent durability for different temperatures.

### 2) Comparison of different humidities

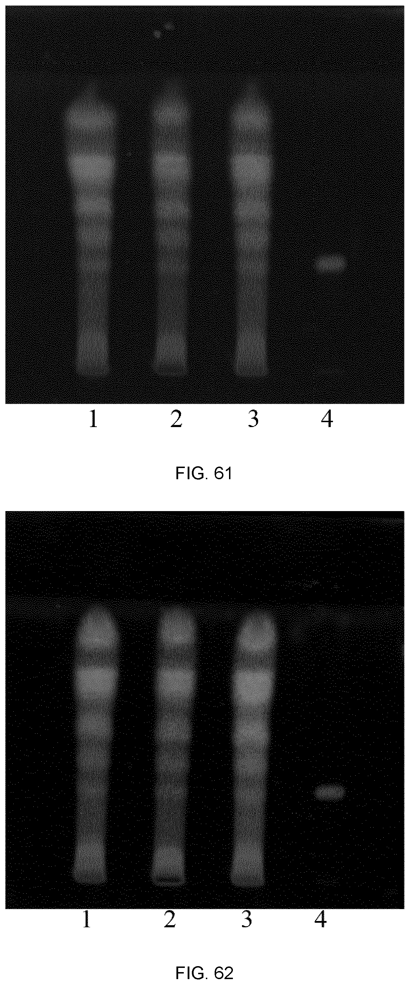

2 µL of the *Semen Lepidii* test solution and 2 µL of the *Semen Lepidii* reference solution were taken and spotted on a PA film, and development was conducted with a mixed solution of ethyl acetate, methanol, and water (7:2:1) as a developing agent at a normal humidity (T: 25°C, RH: 75%), a low humidity (T: 25°C, RH: 41%), and a high humidity (T: 25°C, RH: 92%); and the PA film was taken out, air-dried, sprayed with a 2% aluminum chloride-ethanol solution, hot air-dried, and observed under UV light (365 nm). Experimental results were shown in FIG. 59, FIG. 61, and FIG. 62.

It can be seen from FIG. 59, FIG. 61, and FIG. 62 that the resolution effect is excellent at the normal humidity, low humidity, and high humidity, and a main spot at a position in a chromatogram of the HSBD composition is in the same color as a main spot at a corresponding position in a chromatogram of the reference. The experimental results show that the humidity has a little impact on the TLC identification of *Semen Lepidii* in the HSBD composition, indicating that the TLC identification method has excellent durability for different humidities.

### 3) Comparison of different spotting amounts

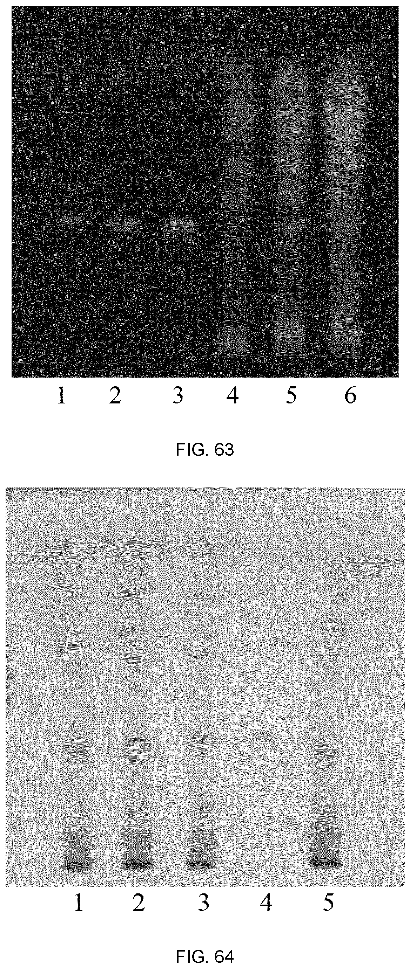

The *Semen Lepidii* test solution and the *Semen Lepidii* reference solution each were spotted at different volumes on a same PA film and tested according to the proposed method. Results were shown in FIG. 63. It can be seen from the figure that, when the *Semen Lepidii* test solution and the *Semen Lepidii* reference solution each are spotted at an amount of 2 µL, a fluorescent spot at a position in a test chromatogram corresponding to a reference chromatogram is clear. Thus, the spotting amount of 2 µL is selected.

### 2.6 TLC identification method for Paeoniae Radix Rubra

### 2.6.1 Identification method

(1) Preparation of a *Paeoniae Radix Rubra* test solution: 3 g of the HSBD composition was taken and ground, 25 mL of methanol was added, and a resulting mixture was subjected to an ultrasonic treatment for 30 min and filtered; and a filtrate was subjected to evaporation to dryness, and a residue was dissolved with 2 mL of methanol.
(2) Preparation of a *Paeoniae Radix Rubra* reference solution: A paeoniflorin reference was taken, and methanol was added to prepare a solution with 1 mg of the paeoniflorin reference per mL.
(3) 3 µL of each of the *Paeoniae Radix Rubra* test solution and the *Paeoniae Radix Rubra* reference solution was taken and spotted on a same silica gel G TLC plate, and development was conducted with a mixed solution of TCM, ethyl acetate, methanol, and formic acid (40:5:10:0.2) as a developing agent; and the silica gel G TLC plate was taken out, air-dried, sprayed with a 5% vanillin-sulfuric acid solution, and heated until spots were clearly stained. A spot at a position in a chromatogram of the test solution was in the same color as a spot at a corresponding position in a chromatogram of the reference solution.

### 2.6.2 Methodological verification

### (1) Specificity

A *Paeoniae Radix Rubra* negative sample was taken to prepare a *Paeoniae Radix* Rubra-deficient negative sample solution according to the preparation method of the *Paeoniae Radix Rubra* test solution; 3 µL of the *Paeoniae Radix Rubra* test solution, 3 µL of the *Paeoniae Radix Rubra-deficient* negative sample solution, and 3 µL of the *Paeoniae Radix Rubra* reference solution were taken and spotted on a same silica gel G TLC plate (Haiyang silica gel G plate), and development was conducted with a mixed solution of TCM, ethyl acetate, methanol, and formic acid (40:5:10:0.2) as a developing agent at a normal temperature and humidity (T: 21.1°C, RH: 47%); and the silica gel G TLC plate was taken out, air-dried, sprayed with a 5% vanillin-sulfuric acid solution, heated until spots were clearly stained, and observed under sunlight. Experimental results were shown in FIG. 64. It can be seen from the figure that, in the TLC identification method of the present disclosure, there is no spot for an active ingredient deficient in the negative sample and there is also no impurity spot at a position nearby during TLC of the negative sample, indicating that the method has prominent specificity.

### (2) Durability investigation

### 1) Comparison of different temperatures

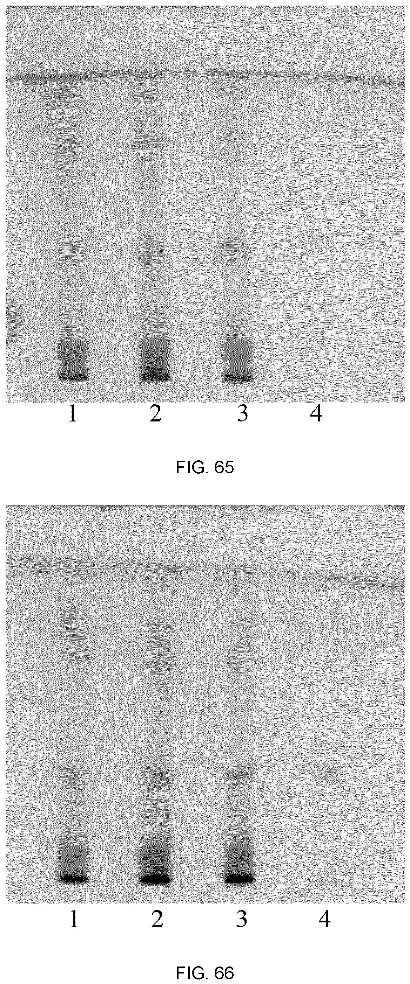

3 µL of the *Paeoniae Radix Rubra* test solution and 3 µL of the *Paeoniae Radix Rubra* reference solution were taken and spotted on a same silica gel G TLC plate (Haiyang silica gel G plate), and development was conducted with a mixed solution of TCM, ethyl acetate, methanol, and formic acid (40:5:10:0.2) as a developing agent at a normal temperature (T: 21.1°C, RH: 47%) and a low temperature (T: 6.4°C, RH: 90%); and the silica gel G TLC plate was taken out, air-dried, sprayed with a 5% vanillin-sulfuric acid solution, heated until spots were clearly stained, and observed under sunlight. Experimental results were shown in FIG. 65 and FIG. 66.

It can be seen from FIG. 65 and FIG. 66 that the resolution effect is excellent at both the normal temperature and the low temperature, and a main spot at a position in a chromatogram of the HSBD composition is in the same color as a main spot at a corresponding position in a chromatogram of the reference. The experimental results show that the temperature has a little impact on the TLC identification of *Paeoniae Radix Rubra* in the HSBD composition, indicating that the TLC identification method has excellent durability for different temperatures.

### 2) Comparison of different humidities

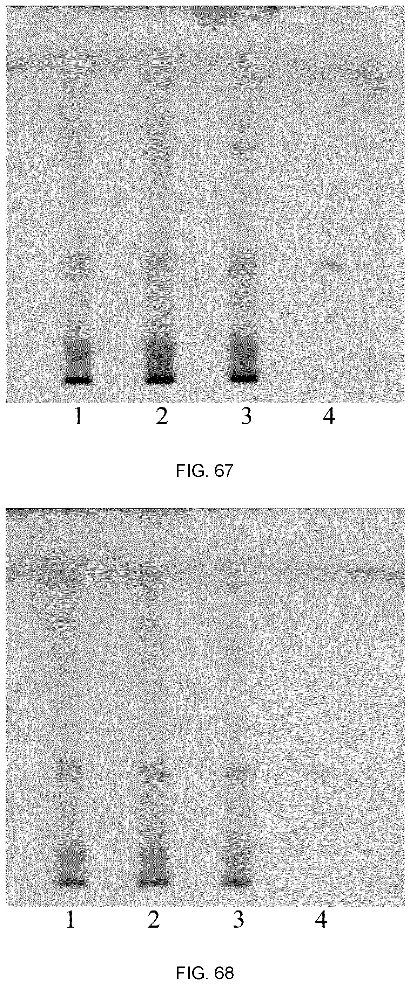

3 µL of the *Paeoniae Radix Rubra* test solution and 3 µL of the *Paeoniae Radix Rubra* reference solution were taken and spotted on a same silica gel G TLC plate (Haiyang silica gel G plate), and development was conducted with a mixed solution of TCM, ethyl acetate, methanol, and formic acid (40:5: 10:0.2) as a developing agent at a normal humidity (T: 21.1°C, RH: 47%), a low humidity (T: 21.1°C, RH: 36%), and a high humidity (T: 21.1°C, RH: 79%); and the silica gel G TLC plate was taken out, air-dried, sprayed with a 5% vanillin-sulfuric acid solution, heated until spots were clearly stained, and observed under sunlight. Experimental results were shown in FIG. 65, FIG. 67, and FIG. 68.

It can be seen from FIG. 65, FIG. 67, and FIG. 68 that the resolution effect is excellent at the normal humidity, low humidity, and high humidity, and a main spot at a position in a chromatogram of the HSBD composition is in the same color as a main spot at a corresponding position in a chromatogram of the reference. The experimental results show that the humidity has a little impact on the TLC identification of *Paeoniae Radix Rubra* in the HSBD composition, indicating that the TLC identification method has excellent durability for different humidities.

### 3) Comparison of different spotting amounts

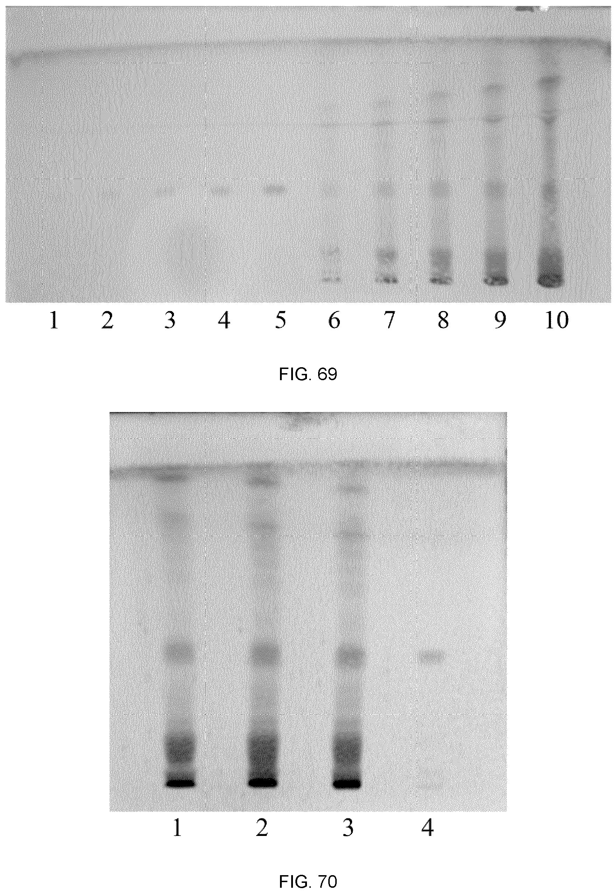

The *Paeoniae Radix Rubra* test solution and the *Paeoniae Radix Rubrareference* solution were taken and spotted on a same silica gel G TLC plate, and development was conducted with a mixed solution of TCM, ethyl acetate, methanol, and formic acid (40:5:10:0.2) as a developing agent; and the silica gel G TLC plate was taken out, air-dried, sprayed with a 5% vanillin-sulfuric acid solution, heated until spots were clearly stained, and observed under sunlight. Experimental results were shown in FIG. 69.

It can be seen from FIG. 69 that, when the *Paeoniae Radix Rubra* test solution is spotted at an amount of 3 µL and the *Paeoniae Radix Rubra* reference solution is spotted at an amount of 3 µL, a main spot at a position in a test chromatogram corresponding to a reference chromatogram is clear and is not interfered. Therefore, in the *Paeoniae Radix Rubra* identification method of the present disclosure, the *Paeoniae Radix Rubra* test solution is spotted at an amount of 3 µL and the *Paeoniae Radix Rubra* reference solution is spotted at an amount of 3 µL.

### 4) Comparison of TLC plates of different manufacturers

The *Paeoniae Radix Rubra* test solution and the *Paeoniae Radix Rubra* reference solution were taken and spotted on each of silica gel G TLC plates of different manufacturers (Haiyang silica gel G plate, PUKE silica gel G plate, and Merck silica gel G plate), and development was conducted with a mixed solution of TCM, ethyl acetate, methanol, and formic acid (40:5:10:0.2) as a developing agent at a normal temperature and humidity (T: 21.1°C, RH: 47%); and the silica gel G TLC plates were taken out, air-dried, sprayed with a 5% vanillin-sulfuric acid solution, heated until spots were clearly stained, and observed under sunlight. Results were shown in FIG. 65, FIG. 69, and FIG. 70.

The Haiyang silica gel G plate was a TLC plate produced by Qingdao Haiyang Chemical Co., Ltd.; the PUKE silica gel G plate was a TLC plate produced by Qingdao PUKE Parting Materials Co., Ltd.; and the Merck silica gel G plate was a TLC plate produced by Merck KGaA. The TLC plates each had a specification of 10 cm × 10 cm and a thickness of 0.20 mm to 0.25 mm.

The results show that the silica gel G TLC plates of different manufacturers have no significant impact on the TLC identification of *Paeoniae Radix Rubra* in the HSBD composition, indicating that the TLC identification method has prominent durability for silica gel G TLC plates of different manufacturers.

### 2.7 TLC identification method for Rheum palmatum

### 2.7.1 Identification method

(1) Preparation of a *Rheum palmatum* test solution: 5 g of the HSBD composition was taken and ground, 20 mL of methanol was added, a resulting mixture was subjected to an ultrasonic treatment for 30 min and filtered, and 5 mL of a filtrate was taken; the filtrate was subjected to evaporation to dryness, a residue was dissolved with 10 mL of water, 1 mL of hydrochloric acid was added, and a resulting mixture was heated to allow a reaction under reflux for 30 min; a resulting reaction system was immediately cooled and subjected to extraction with 20 mL of diethyl ether under shaking 2 times; and resulting diethyl ether phases were combined and subjected to evaporation to dryness, and a residue was dissolved with 1 mL of TCM.
(2) Preparation of a *Rheum palmatum* reference solution: 0.1 g of a *Rheum palmatum* reference was taken to prepare the *Rheum palmatum* reference solution according to the preparation method of the *Rheum palmatum* test solution.
(3) 2 µL of each of the *Rheum palmatum* test solution and the *Rheum palmatum* reference solution was taken and spotted on a same silica gel H TLC plate, and development was conducted with an upper layer ofa mixed solution of petroleum ether (30°C to 60°C), ethyl formate, and formic acid (15:5:1) as a developing agent; and the silica gel H TLC plate was taken out, air-dried, and observed under UV light, where a fluorescent spot at a position in a chromatogram of the test solution was in the same color as a fluorescent spot at a corresponding position in a chromatogram of the reference solution.

### 2.7.2 Methodological verification

### (1) Specificity investigation

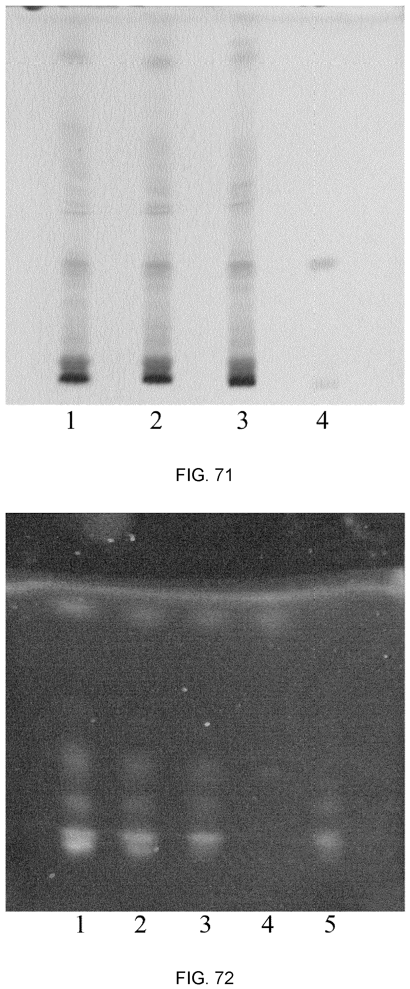

A *Rheum palmatum* negative sample was taken to prepare a *Rheum palmatum-deficient* negative sample solution according to the preparation method of the *Rheum palmatum* test solution; 2 µL of the *Rheum palmatum* test solution, 2 µL of the *Rheum palmatum-deficient* negative sample solution, and 2 µL of the *Rheum palmatum* reference solution were taken and spotted on a silica gel H TLC plate (Haiyang silica gel H plate), and development was conducted with an upper layer of a mixed solution of petroleum ether (30°C to 60°C), ethyl formate, and formic acid (15:5:1) as a developing agent at a normal temperature and humidity (T: 26.1°C, RH: 48%); and the silica gel H TLC plate was taken out, air-dried, and observed under UV light. Results were shown in FIG. 72. It can be seen from the figure that, in the TLC identification method of the present disclosure, there is no spot for an active ingredient deficient in the negative sample and there is also no impurity spot at a position nearby during TLC of the negative sample, indicating that the method has prominent specificity.

### (2) Durability investigation

### 1) Comparison of different temperatures

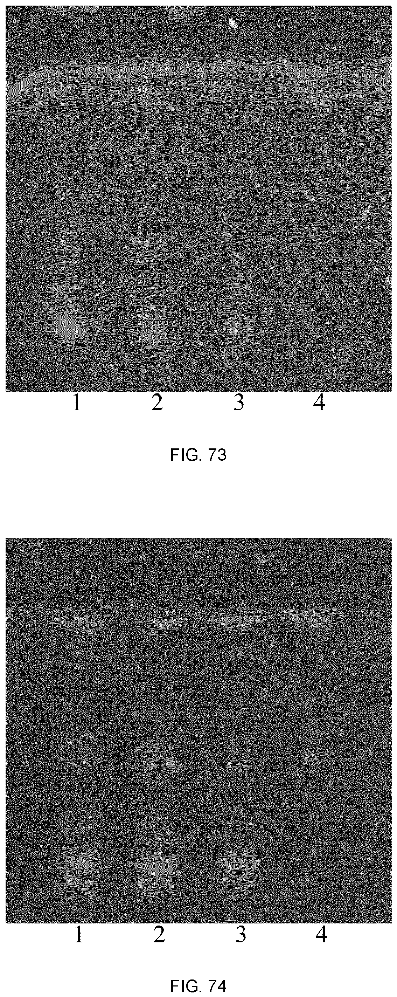

2 µL of the *Rheum palmatum* test solution and 2 µL of the *Rheum palmatumreference* solution were taken and spotted on a same silica gel H TLC plate (Haiyang silica gel H plate), and development was conducted with an upper layer of a mixed solution of petroleum ether (30°C to 60°C), ethyl formate, and formic acid (15:5:1) as a developing agent at a normal temperature (T: 26.1°C, RH: 48%) and a low temperature (T: 3.1°C, RH: 91%); and the silica gel H TLC plate was taken out, air-dried, and observed under UV light (365 nm). Experimental results were shown in FIG. 73 and FIG. 74.

It can be seen from FIG. 73 and FIG. 74 that the resolution effect is excellent at both the normal temperature and the low temperature, and a main spot at a position in a chromatogram of the HSBD composition is in the same color as a main spot at a corresponding position in a chromatogram of the reference. The experimental results show that the temperature has a little impact on the TLC identification of *Rheum palmatum* in the HSBD composition, indicating that the TLC identification method has excellent durability for different temperatures.

### 2) Comparison of different humidities

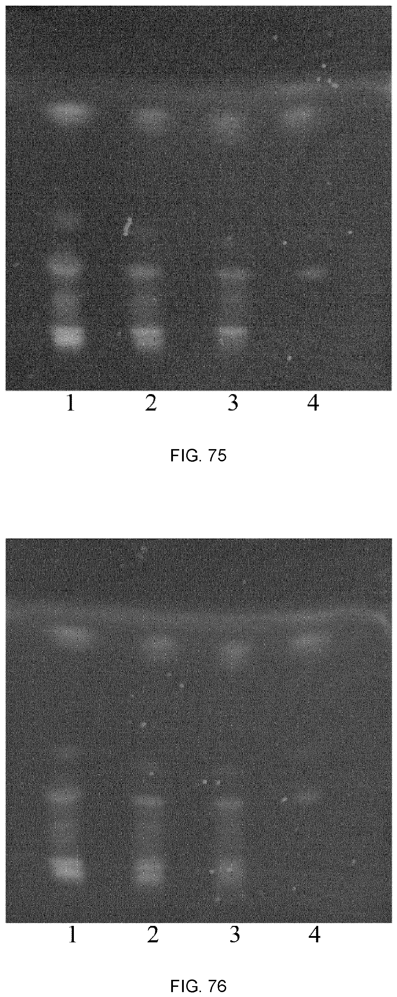

2 µL of the *Rheum palmatum* test solution and 2 µL of the *Rheum palmatum* reference solution were taken and spotted on a same silica gel H TLC plate (Haiyang silica gel H plate), and development was conducted with an upper layer of a mixed solution of petroleum ether (30°C to 60°C), ethyl formate, and formic acid (15:5:1) as a developing agent at a normal humidity (T: 26.1°C, RH: 48%), a low humidity (T: 26.1°C, RH: 36%), and a high humidity (T: 26.1°C, RH: 78%); and the silica gel H TLC plate was taken out, air-dried, and observed under UV light (365 nm). Experimental results were shown in FIG. 73, FIG. 75, and FIG. 76.

It can be seen from FIG. 73, FIG. 75, and FIG. 76 that the resolution effect is excellent at the normal humidity, low humidity, and high humidity, and a main spot at a position in a chromatogram of the HSBD composition is in the same color as a main spot at a corresponding position in a chromatogram of the reference. The experimental results show that the humidity has a little impact on the TLC identification of *Rheum palmatum* in the HSBD composition, indicating that the TLC identification method has excellent durability for different humidities.

### 3) Comparison of different spotting amounts

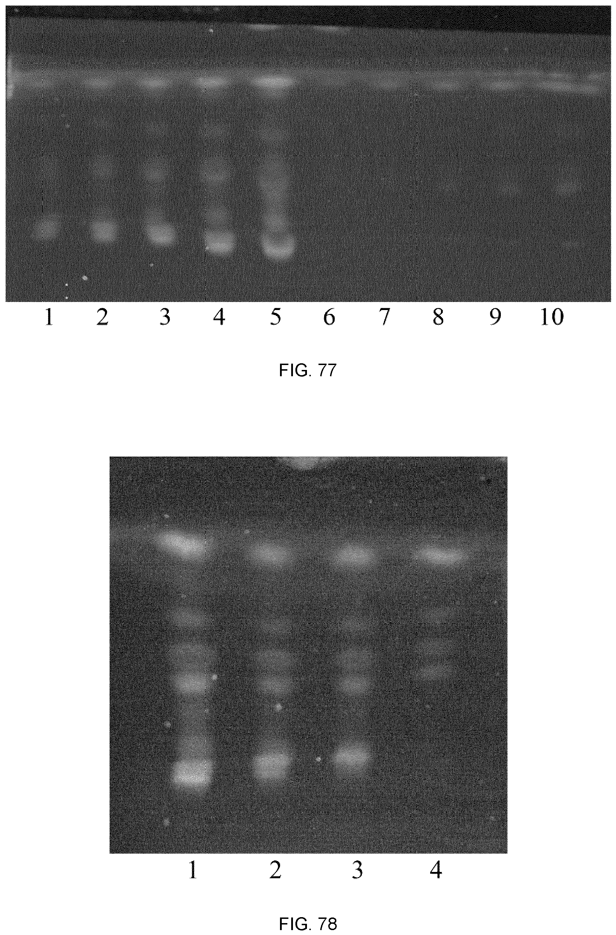

2 µL of the *Rheum palmatum* test solution and 2 µL of the *Rheum palmatum* reference solution were taken and spotted on a same silica gel H TLC plate (Haiyang silica gel H plate), and development was conducted with an upper layer of a mixed solution of petroleum ether (30°C to 60°C), ethyl formate, and formic acid (15:5:1) as a developing agent at a normal temperature and humidity (T: 26.1°C, RH: 48%); and the silica gel H TLC plate was taken out, air-dried, and observed under UV light (365 nm). Experimental results were shown in FIG. 77.

It can be seen from FIG. 77 that, when the *Rheum palmatum* test solution is spotted at an amount of 2 µL and the *Rheum palmatum* reference solution is spotted at an amount of 2 µL, a main spot at a position in a test chromatogram corresponding to a reference chromatogram is clear and is not interfered. Therefore, in the *Rheum palmatum* identification method of the present disclosure, the *Rheum palmatum* test solution is spotted at an amount of 2 µL and the *Rheum palmatum* reference solution is spotted at an amount of 2 µL.

### 4) Comparison of TLC plates of different manufacturers

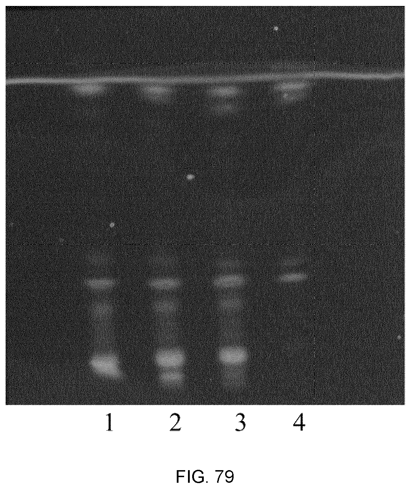

2 µL of the *Rheum palmatum* test solution and 2 µL of the *Rheum palmatum* reference solution were taken and spotted on each of silica gel H TLC plates of different manufacturers (Haiyang silica gel H plate, PUKE silica gel H plate, and Yinlong silica gel H plate), and development was conducted with an upper layer of a mixed solution of petroleum ether (30°C to 60°C), ethyl formate, and formic acid (15:5:1) as a developing agent at a normal temperature and humidity (T: 26.1°C, RH: 48%); and the silica gel H TLC plate was taken out, air-dried, and observed under UV light (365 nm). Results were shown in FIG. 73, FIG. 78, and FIG. 79.

The Haiyang silica gel H plate was a TLC plate produced by Qingdao Haiyang Chemical Co., Ltd.; the PUKE silica gel H plate was a TLC plate produced by Qingdao PUKE Parting Materials Co., Ltd.; and the Yinlong silica gel H plate was a TLC plate produced by Yantai Chemical Industry Institute. The TLC plates each had a specification of 10 cm × 10 cm and a thickness of 0.20 mm to 0.25 mm.

The results show that the silica gel H TLC plates of different manufacturers (Haiyang silica gel H plate, PUKE silica gel H plate, and Yinlong silica gel H plate) have no significant impact on the TLC identification of *Rheum palmatum* in the HSBD composition, indicating that the TLC identification method has prominent durability for silica gel H TLC plates of different manufacturers.

In summary, in the QC method for an HSBD composition of the present disclosure, based on the research of a molecular action mechanism of the HSBD composition, the analysis of specific conditions of mass production, and the large amount of experimental investigation, the ephedra, licorice, *Magnolia officinalis*, *Astragalus membranaceus, Semen Lepidii, Paeoniae Radix Rubra,* and *Rheum palmatum* are identified by TLC, and the contents of combined anthraquinone, ephedrine hydrochloride, pseudoephedrine hydrochloride, and paeoniflorin are determined. Through the determination of the above two aspects, a data basis is provided for the QC of mass production of the HSBD composition.

The determination method of each component in the HSBD composition of the present disclosure has excellent specificity and durability, and the accuracy and stability of the determination method can meet the requirements of large-scale production, which provides a prominent basis for ensuring the stability of the active components in the HSBD composition.

Each of the TLC identification methods in the present disclosure has prominent resolution, no interference by a negative sample, feasibility, short developing time, convenient observation, strong specificity, and excellent reproducibility, and can well control a quality of a drug in a mass production process.

## Claims

1. A quality control (QC) method for a Huashibaidu (HSBD) composition, the HSBD composition mainly comprises the following components: ephedra, fried bitter almond, raw gypsum, licorice, *PogostemonisHerba, Magnolia officinalis*, bran-fried *AtractylodesLancea,* fried *Amomum tsaoko* fruit, *RhizomaPinelliae, Poriacocos, Rheum palmatum, Astragalus membranaceus, Semen Lepidii, Paeoniae Radix Rubra,* and an adjuvant; and
**characterized in that**
the QC method for an HSBD composition comprises:
(1) identifying ephedra, licorice, and *Magnolia officinalis* by thin-layer chromatography (TLC); and
(2) determining a total anthraquinone content, a free anthraquinone content, a total content of ephedrine hydrochloride and pseudoephedrine hydrochloride, and a paeoniflorin content in the HSBD composition by high-performance liquid chromatography (HPLC), and calculating a combined anthraquinone content, and the combined anthraquinone content = the total anthraquinone content - the free anthraquinone content;
in determination of both the total anthraquinone content and the free anthraquinone content, the chromatography column is an octadecylsilane-bonded silica gel column, and the following elution program is adopted:
mobile phase A is acetonitrile and mobile phase B is a phosphoric acid aqueous solution:
0 min to 10 min: mobile phase A: from 35% to 40%, and mobile phase B: from 65% to 60%;
10 min to 38 min: mobile phase A: from 40% to 60%, and mobile phase B: from 60% to 40%; and
38 min to 48 min: mobile phase A: 60%, and mobile phase B: 40%.

2. The QC method for an HSBD composition according to claim 1, further comprising:
(3) identifying *Astragalus membranaceus, Semen Lepidii, Paeoniae Radix Rubra,* and *Rheum palmatum* by TLC.

3. The QC method for an HSBD composition according to claim 1, wherein a determination method of the total anthraquinone content comprises:
(1) weighing appropriate amounts of aloe emodin, rheinic acid, emodin, chrysophanol, and emodin methyl ether, and adding methanol to prepare an anthraquinone reference solution;
(2) subjecting the HSBD composition to extraction with methanol to prepare a total anthraquinone test solution; and
(3) injecting the anthraquinone reference solution and the total anthraquinone test solution into a liquid chromatograph to determine the total anthraquinone content in the HSBD composition.

4. The QC method for an HSBD composition according to claim 1, wherein a determination method of the free anthraquinone content comprises:
(1) weighing appropriate amounts of aloe emodin, rheinic acid, emodin, chrysophanol, and emodin methyl ether, and adding methanol to prepare an anthraquinone reference solution;
(2) subjecting the HSBD composition to extraction with methanol to prepare a free anthraquinone test solution; and
(3) injecting the anthraquinone reference solution and the free anthraquinone test solution into a liquid chromatograph to determine the free anthraquinone content in the HSBD composition.

5. The QC method for an HSBD composition according to claim 3 or 4, wherein in the determination method of the total anthraquinone content and the determination method of the free anthraquinone content, the gradient elution is conducted under the following conditions: flow rate: 0.6 mL/min to 1 mL/min, detection wavelength: 253 nm to 256 nm, and column temperature: 25°C to 35°C.

6. The QC method for an HSBD composition according to claim 3, wherein the total anthraquinone test solution is prepared as follows:
adding 0.2 g to 0.5 g of the HSBD composition to an Erlenmeyer flask with a stopper, adding 20 mL to 30 mL of methanol, and heating to allow extraction under reflux for 20 min to 30 min; taking a resulting system out, cooling, weighing, and making up for a weight loss with methanol; thoroughly shaking and filtering the system, and taking 10 mL to 15 mL of a subsequent filtrate; subjecting the subsequent filtrate to vacuum distillation to dryness to obtain a residue andrecovermethanol, adding 10 mL to 15 mL of a 8% hydrochloric acid solution to the residue, and subjecting a resulting mixture to an ultrasonic treatment for 2 min to 5 min; adding 10 mL to 20 mL of trichloromethane (TCM), and heating to reflux for 1 h to 3 h; cooling a resulting reflux systemand transferringto a separatory funnel, washing a vessel for the refuxwith a small amount of TCM, and adding the small amount of TCM to the separatory funnel; separating to obtain a primaryTCM phase and an acid phase, and subjecting the acid phase to extraction with 10 mL to 15 mL of TCM 2 to 5 times to collect TCM phases and combine with the primary TCM phase, and subjecting a combined TCM phase to vacuum distillation to dryness to obtain a product and recover TCM; dissolving theproduct with methanol, transferring a resulting solution to a 10 mL volumetric flask, and adding methanol to a specified scale; and thoroughly shaking, filtering, and taking a subsequent filtrate as the anthraquinone test solution.

7. The QC method for an HSBD composition according to claim 4, wherein the free anthraquinone test solution is prepared as follows:
adding 0.2 g to 0.5 g of the HSBD composition to an Erlenmeyer flask with a stopper, adding 25 mL to 30 mL of methanol, weighing, and heating to reflux for 20 min to 60 min; taking a resulting system out, cooling, weighing once again, and making up for a weight loss with methanol; and thoroughly shaking, filtering, and taking a subsequent filtrate as the anthraquinone test solution.

8. The QC method for an HSBD composition according to claim 3 or 4, wherein the anthraquinone reference solution is prepared as follows:
weighing 1.581 mg of an aloe emodin reference, 3.017 mg of a rheinic acid reference, 1.604 mg of an emodin reference, 2.656 mg of a chrysophanol reference, and 5.221 mg of an emodin methyl ether reference, adding each of the above to a 100 mL volumetric flaskrespectively, and adding methanol to prepare an aloe emodin stock solution with 15.807 µg of the aloe emodin per mL, a rheinic acid stock solution with 30.167 µg of the rheinic acid per mL, an emodin stock solution with 16.039 µg of the emodin per mL, a chrysophanol stock solution with 26.563 µg of the chrysophanol per mL, and an emodin methyl ether stock solution with 52.213 µg of the emodin methyl ether per mL; and accurately pipetting 1 mL of the aloe emodin stock solution, 1 mL of the rheinic acid stock solution, 1 mL of the emodin stock solution, 1 mL of the chrysophanol stock solution, and 0.1 mL of the emodin methyl ether stock solution to a 10 mL volumetric flask, and adding methanol to prepare a mixed solution with 1.581 µg of the aloe emodin, 3.017 µg of the rheinic acid, 1.604 µg of the emodin, 2.656 µg of the chrysophanol, and 0.522 µg of the emodin methyl ether per mL.

9. The QC method for an HSBD composition according to claim 1, wherein a determination method of the total content of ephedrine hydrochloride and pseudoephedrine hydrochloride comprises:
(1) weighing an appropriate amount of an ephedrine hydrochloride reference and an appropriate amount of a pseudoephedrine hydrochloride reference, and adding methanol to prepare an ephedrine reference solution with 10 µg of the ephedrine hydrochloride reference and 10 µg of the pseudoephedrine hydrochloride reference per mL;
(2) subjecting the HSBD composition to extraction with a hydrochloric acid solution to prepare an ephedrine test solution; and
(3) injecting the ephedrine reference solution and the ephedrine test solution into a liquid chromatograph with polar diethyl ether-linked phenyl-bonded silicagel as a filler, and conducting elution with a mixed solution of methanol and a phosphoric acid aqueous solution as a mobile phase at a flow rate of 0.6 mL/min to 1 mL/min, a column temperature of 25°C to 35°C, and a detection wavelength of 205 nm to 215 nm to determine the total content of ephedrine hydrochloride and pseudoephedrine hydrochloride in the HSBD composition.

10. The QC method for an HSBD composition according to claim 9, wherein in the determination method of the total content of ephedrine hydrochloride and pseudoephedrine hydrochloride, the mixed solution of methanol and a phosphoric acid aqueous solution is adopted as a mobile phase;and
the phosphoric acid aqueous solution is a mixed solution of phosphoric acid, diethylamine (DEA), triethylamine (TEA), and water, in which a volume fraction of the phosphoric acid is 0.090% to 0.094%, a volume fraction of the DEA is 0.01% to 0.04%, and a volume fraction of the TEA is 0.02% to 0.06%.

11. The QC method for an HSBD composition according to claim 1, wherein a determination method of the paeoniflorin content comprises:
(1) weighing an appropriate amount of a paeoniflorin reference, and adding methanol to prepare a paeoniflorin reference solution with 0.13 mg of the paeoniflorin reference per mL;
(2) subjecting the HSBD composition to extraction with methanol to prepare a paeoniflorin test solution; and
(3) injecting the paeoniflorin reference solution and the paeoniflorin test solution into a liquid chromatograph with octadecyl-bonded silicagel as a filler, and conducting elution with a methanol-0.05 mol/L monopotassium phosphate (MKP) aqueous solution as a mobile phase at a flow rate of 0.8 mL/min to 1.2 mL/min, a detection wavelength of 225 nm to 230 nm, and a column temperature of 30°C to 35°C to determine the paeoniflorin content in the HSBD composition.

12. The QC method for an HSBD composition according to claim 1, wherein a TLC identification method for the ephedra comprises:
(1) grinding 5 g to 10 g of the HSBD composition, adding 3 mL to 5 mL of a concentrated ammonia solution for wetting, adding 25 mL to 30 mL of TCM, and heating to reflux for 0.5 h to 1 h; and filtering a resulting system, subjecting a filtrate to evaporation to dryness to obtain a residue, and dissolving theresidue with 1 mL to 2 mL of methanol to obtain an ephedra test solution;
(2) taking an ephedrine hydrochloride reference, and adding methanol to prepare an ephedra reference solution with 1 mg of the ephedrine hydrochloride reference per mL; and
(3) spotting 1 µL to 5 µL of each of the ephedra test solution and the ephedra reference solution on a same silicagel G TLC plate, and developing with a mixed solution of TCM, methanol, and a concentrated ammonia solution in a volume ratio of 20:5:0.5 as a developing agent; and taking the silicagel G TLC plate out, air-drying, spraying with a ninhydrin solution, and heating until stained spots are clearly visulized, wherein a spot at a position in a chromatogram of the test solution is in the same color as a spot at a corresponding position in a chromatogram of the reference solution.

13. The QC method for an HSBD composition according to claim 1, wherein a TLC identification method for the licorice comprises:
(1) grinding 5 g to 10 g of the HSBD composition, adding 40 mL to 50 mL of diethyl ether, and heating to reflux for 1 h to 2 h; filtering a resulting system to obtain an ether solution and a filter residue, discarding the ether solution, dissolving the filter residue with 30 mL to 50 mL of methanol, and heating to reflux for 0.5 h to 1.5 h; filtering a resulting reflux system, subjecting a filtrate to evaporation to dryness to obtain a residue, dissolving the residue with 40 mL to 50 mL of water, and subjecting a resulting solution to extraction with 20 mL to 40 mL of n-butanol under shaking 1 to 3 times to collect n-butanol phases; combining the n-butanol phases, washing a combined n-butanol phase with water 1 to 3 times to obtain a n-butanol liquid, and discarding resulting aqueous phases; and evaporating the n-butanolliquidto dryness to obtain a product, and dissolving the product with 5 mL to 10 mL of methanol to obtain a licorice test solution;
(2) taking 1 g to 3 g of a licorice reference, and preparing a licorice reference solution according to the preparation of the licorice test solution in step (1); and
(3) spotting 2 µL to 5 µL of each of the licorice test solution and the licorice reference solution on a same silicagel G TLC plate prepared with a 1% sodium hydroxide solution, and developing with a mixed solution of ethyl acetate, formic acid, glacial acetic acid, and water in a volume ratio of 15:1:1:2 as a developing agent; and taking the silicagel G TLC plate out, air-drying, spraying with a 10% sulfuric acid-ethanol solution, and heating at 100°C to 110°C until stained spots are clearly visulized, wherein a spot at a position in a chromatogram of the test solution is in the same color as a spot at a corresponding position in a chromatogram of the reference solution.

14. The QC method for an HSBD composition according to claim 1, wherein a TLC identification method for the *Magnolia officinalis* comprises:
(1) grinding 5 g to 10 g of the HSBD composition, adding 15 mL to 25 mL of methanol, and subjecting a resulting mixture to an ultrasonic treatment for 0.5 h to 1 h; filtering a resulting system, subjecting a filtrate to evaporation to dryness to obtain a resuidue, dissolving the residue with 40 mL to 50 mL of water, and subjecting a resulting solution to extraction with 20 mL to 30 mL of ethyl acetate under shaking 1 to 3 times to collect ethyl acetate phases; and combining the ethyl acetate phases, subjecting a combined ethyl acetate phase to evaporation to dryness to obtain a product, and dissolving the product with 1 mL to 2 mL of methanol to obtain a *Magnolia officinalis* test solution;
(2) taking a magnolol reference, and adding methanol to prepare a magnolol reference solution with 1 mg of the magnolol reference per mL; and taking a honokiol reference, and adding methanol to prepare a honokiol reference solution with 1 mg of the honokiol reference per mL; and
(3) spotting 2 µL to 5 µL of each of the *Magnolia officinalis* test solution, the magnolol reference solution, and the honokiol reference solution on a same silicagel G TLC plate, and developing with a mixed solution of toluene, ethyl acetate, and methanol in a volume ratio of 17:3:3 as a developing agent; and taking the silicagel G TLC plate out, air-drying, spraying with a 5% vanillin-sulfuric acid solution, and heating until stained spots are clearly visulized, wherein a spot at a position in a chromatogram of the test solution is in the same color as a spot at a corresponding position in a chromatogram of the reference solution.

15. The QC method for an HSBD composition according to claim 2, wherein a TLC identification method for the *Astragalus membranaceus* comprises:
(1) taking 5 g to 10 g of the HSBD composition, adding 25 mL to 30 mL of methanol, and subjecting a resulting mixture to an ultrasonic treatment for 0.5 h to 1 h; cooling and filtering a resulting system, subjecting a filtrate to evaporation to dryness to obtain a residue, dissolving the residue with 20 mL to 30 mL of water, and subjecting a resulting solution to extraction with 15 mL to 30 mL of water-saturated n-butanol under shaking 1 to 3 times to collect n-butanol phases; combining the n-butanol phases, washing a combined n-butanol phase with 20 mL to 30 mL of an ammonia solution 1 to 3 times to obtain a n-butanol liquid, and discarding resulting ammonia phases; and evaporating the n-butanolliquidto dryness to obtain a product, and dissolving the product with 1 mL to 3 mL of methanol to obtain an *Astragalus membranaceus* test solution;
(2) taking an astragaloside reference, and adding methanol to prepare an *Astragalus membranaceus* reference solution with 1 mg of the astragaloside reference per mL; and
(3) spotting 5 µL to 8 µL of the *Astragalus membranaceus* test solution and 2 µL to 3 µL of the *Astragalus membranaceus* reference solution on a same silica gel G TLC plate, and developing at 4°C to 10°C with a mixed solution of TCM, methanol, and water in a volume ratio of 13:7:2 as a developing agent; and taking the silicagel G TLC plate out, air-drying, spraying with a 10% sulfuric acid-ethanol solution, heating at 100°C to 105°C until stained spots are clearly visulized, and observing under ultraviolet (UV) light, wherein a fluorescent spot at a position in a chromatogram of the test solution is in the same color as a fluorescent spot at a corresponding position in a chromatogram of the reference solution.

16. The QC method for an HSBD composition according to claim 2, wherein a TLC identification method for the *Semen Lepidii* comprises:
(1) grinding 5 g to 10 g of the HSBD composition, adding 20 mL to 30 mL of 70% methanol, and subjecting a resulting mixture to an ultrasonic treatment for 0.5 h to 1 h; cooling and filtering a resulting system, subjecting a filtrate to evaporation to drynessto obtain a residue, and dissolving the residue with 5 mL to 10 mL of water; allowing a resulting solution to pass through a D101 macroporous resin column, eluting with water until an eluate is colorless, eluting with 70% methanol until an 70% methanol eluate is colorless, and collecting the 70% methanol elute; and subjecting the 70% methanol eluate to evaporation to dryness to obtain a product, and dissolving the product with 1 mL to 2 mL of methanol to obtain a *Semen Lepidii* test solution;
(2) taking a quercetin-3-O-β-D-glucose-7-O-β-D-gentiobioside reference, and adding 30% methanol to prepare a *Semen Lepidii* reference solution with 0.1 mg of the quercetin-3-O-β-D-glucose-7-O-β-D-gentiobioside reference per mL; and
(3) spotting 1 µL to 5 µL of each of the *Semen Lepidii* test solution and the *Semen Lepidii*reference solution on a same polyamide (PA) film, and developing with a mixed solution of ethyl acetate, methanol, and water in a volume ratio of 7:2:1 as a developing agent; and taking the PA film out, air-drying, spraying with a 2% aluminum chloride-ethanol solution, hot air-drying, and observing under UV light, wherein a fluorescent spot at a position in a chromatogram of the test solution is in the same color as a fluorescent spot at a corresponding position in a chromatogram of the reference solution.

17. The QC method for an HSBD composition according to claim 2, wherein a TLC identification method for the *Paeoniae Radix Rubra* comprises:
(1) grinding 3 g to 5 g of the HSBD composition, adding 25 mL to 40 mL of methanol, and subjecting a resulting mixture to an ultrasonic treatment for 0.5 h to 1 h; and filtering a resulting system, subjecting a filtrate to evaporation to drynessto obtain a residue, and dissolving the residue with 1 mL to 2 mL of methanol to obtain a *Paeoniae Radix Rubra* test solution;
(2) taking a paeoniflorin reference, and adding methanol to prepare a *Paeoniae Radix Rubra* reference solution with 1 mg of the paeoniflorin reference per mL; and
(3) spotting 2 µL to 5 µL of each of the *Paeoniae Radix Rubra* test solution and the *Paeoniae Radix Rubra* reference solution on a same silicagel G TLC plate, and developing with a mixed solution of TCM, ethyl acetate, methanol, and formic acid in a volume ratio of 40:5:10:0.2 as a developing agent; and taking the silicagel G TLC plate out, air-drying, spraying with a 5% vanillin-sulfuric acid solution, and heating until stained spots are clearly visulized, wherein a spot at a position in a chromatogram of the test solution is in the same color as a spot at a corresponding position in a chromatogram of the reference solution.

18. The QC method for an HSBD composition according to claim 2, wherein a TLC identification method for the *Rheum palmatum* comprises:
(1) grinding 5 g to 10 g of the HSBD composition, adding 20 mL to 30 mL of methanol, and subjecting a resulting mixture to an ultrasonic treatment for 20 min to 30 min; filtering a resulting system, and taking 3 mL to 10 mL of a filtrate; subjecting the filtrate to evaporation to dryness to obtain a residue, dissolving the residue with 5 mL to 15 mL of water, adding 1 mL to 3 mL of hydrochloric acid, and heating to reflux for 20 min to 60 min; immediately cooling a resulting reflux system, and subjecting the refluxsystem to extraction with 20 mL to 30 mL of diethyl ether under shaking 2 to 3 timestocollect diethyl ether phases; and combining the diethyl ether phases, subjecting a combined diethyl ether phase to evaporation to dryness to obtain a product, and dissolving the product with 1 mL to 3 mL of TCM to obtain a *Rheum palmatum* test solution;
(2) taking 0.1 g of a *Rheum palmatum* reference, and preparing a *Rheum palmatum* reference solution according to the preparation of the *Rheum palmatum* test solution in step (1); and
(3) spotting 1 µL to 5 µL of each of the *Rheum palmatum* test solution and the *Rheum palmatum* reference solution on a same silicagel H TLC plate, and developing with a mixed solution of petroleum ether, ethyl formate, and formic acid in a volume ratio of 15:5:1 as a developing agent; and taking the silicagel H TLC plate out, air-drying, and observing under UV light, wherein a fluorescent spot at a position in a chromatogram of the test solution is in the same color as a fluorescent spot at a corresponding position in a chromatogram of the reference solution.

19. The QC method for an HSBD composition according to claim 1, wherein the HSBD composition mainly comprises the following components: 3 to 60 parts of the ephedra, 4.5 to 90 parts of the fried bitter almond, 7.5 to 150 parts of the raw gypsum, 1.5 to 30 parts of the licorice, 5 to 100 parts of the *PogostemonisHerba,* 5 to 100 parts of the *Magnolia officinalis*, 7.5 to 150 parts of the bran-fried *AtractylodesLancea,* 5 to 100 parts of the fried *Amomum tsaoko* fruit, 4.5 to 90 parts of the *RhizomaPinelliae,* 7.5 to 150 parts of the *Poriacocos,* 2.5 to 50 parts of the *Rheum palmatum,* 5 to 100 parts of the *Astragalus membranaceus,* 5 to 100 parts of the *Semen Lepidii,* 5 to 100 parts of the *Paeoniae Radix Rubra,* and an appropriate amount of the adjuvant; and
the HSBD composition is prepared into a traditional Chinese medicine (TCM) preparation in a form selected from the group consisting of a granule, a decoction, a powder, a capsule, an oral liquid, a tablet, and a pill.

## Patentansprüche

1. Verfahren zur Qualitätskontrolle (QC) für eine Huashibaidu(HSBD)-Zusammensetzung, wobei die HSBD-Zusammensetzung hauptsächlich die folgenden Komponenten umfasst: Ephedra, geröstete Bittermandel, roher Gips, Süßholz, *PogostemonisHerba, Magnolia officinalis,* mit Kleie geröstete *AtractylodesLancea,* geröstete *Amomum-tsaoko-Frucht, RhizomaPinelliae, Poriacocos, Rheum palmatum, Astragalus membranaceus, Semen Lepidii, Paeoniae Radix Rubra* und einen Hilfsstoff; und
**dadurch gekennzeichnet, dass**
das QC-Verfahren für eine HSBD-Zusammensetzung Folgendes umfasst:
(1) Identifizieren von Ephedra, Süßholz und *Magnolia officinalis* durch Dünnschichtchromatographie (TLC); und
(2) Bestimmen eines Gesamt-Anthrachinon-Gehalts, eines freien Anthrachinon-Gehalts, eines Gesamtgehalts an Ephedrinhydrochlorid und Pseudoephedrinhydrochlorid und eines Paeoniflorin-Gehalts in der HSBD-Zusammensetzung durch Hochleistungsflüssigkeitschromatographie (HPLC) und Berechnen eines vereinigten Anthrachinon-Gehalts, wobei der vereinigte Anthrachinon-Gehalt = Gesamt-Anthrachinon-Gehalt - freier Anthrachinon-Gehalt ist;
wobei bei der Bestimmung des Gesamtgehalts an Anthrachinon und des Gehalts an freiem Anthrachinon die Chromatographiesäule eine Kieselgelsäule mit Octadecylsilanbindung ist, und das folgende Elutionsprogramm verwendet wird:
die mobile Phase A ist Acetonitril und die mobile Phase B ist eine wässrige Phosphorsäurelösung: 0 min bis 10 min: mobile Phase A: von 35 % bis 40 %, und mobile Phase B: von 65 % bis 60 %;
10 min bis 38 min: mobile Phase A: von 40 % bis 60 %, und mobile Phase B: von 60 % bis 40 %; und
38 min bis 48 min: mobile Phase A: 60 % und mobile Phase B: 40 %.

2. QC-Verfahren für eine HSBD-Zusammensetzung nach Anspruch 1, ferner umfassend:
(3) Identifizieren von *Astragalus membranaceus, Semen Lepidii, Paeoniae Radix Rubra* und *Rheum palmatum* mittels TLC.

3. QC-Verfahren für eine HSBD-Zusammensetzung nach Anspruch 1, wobei ein Verfahren zur Bestimmung des Gesamt-Anthrachinongehalts Folgendes umfasst:
(1) Abwiegen geeigneter Mengen von Aloe-Emodin, Rheinsäure, Emodin, Chrysophanol und Emodin-Methylether und Zugeben von Methanol zur Herstellung einer Anthrachinon-Referenzlösung;
(2) Extrahieren der HSBD-Zusammensetzung mit Methanol zur Herstellung einer Gesamt-Anthrachinon-Testlösung; und
(3) Injizieren der Anthrachinon-Referenzlösung und der Gesamt-Anthrachinon-Testlösung in einen Flüssigkeitschromatographen zur Bestimmung des Gesamt-Anthrachinon-Gehalts in der HSBD-Zusammensetzung.

4. QC-Verfahren für eine HSBD-Zusammensetzung nach Anspruch 1, wobei ein Verfahren zur Bestimmung des Gehalts an freiem Anthrachinon Folgendes umfasst:
(1) Abwiegen geeigneter Mengen von Aloe-Emodin, Rheinsäure, Emodin, Chrysophanol und Emodin-Methylether und Zugeben von Methanol zur Herstellung einer Anthrachinon-Referenzlösung;
(2) Extrahieren der HSBD-Zusammensetzung mit Methanol zur Herstellung einer Testlösung für freies Anthrachinon; und
(3) Injizieren der Anthrachinon-Referenzlösung und der Testlösung für freies Anthrachinon in einen Flüssigkeitschromatographen zur Bestimmung des Gehalts an freiem Anthrachinon in der HSBD-Zusammensetzung.

5. QC-Verfahren für eine HSBD-Zusammensetzung nach Anspruch 3 oder 4, wobei bei dem Verfahren zur Bestimmung des Gesamt-Anthrachinongehalts und dem Verfahren zur Bestimmung des Gehalts an freiem Anthrachinon die folgenden Bedingungen gelten: Flussrate: 0,6 ml/min bis 1 ml/min, Detektionswellenlänge: 253 nm bis 256 nm, und Säulentemperatur: 25 °C bis 35 °C.

6. QC-Verfahren für eine HSBD-Zusammensetzung nach Anspruch 3, wobei die Gesamt-Anthrachinon-Testlösung wie folgt hergestellt wird:
Zugeben von 0,2 g bis 0,5 g der HSBD-Zusammensetzung in einen Erlenmeyerkolben mit einem Stopfen, Zugeben von 20 ml bis 30 ml Methanol und Erhitzen, um die Extraktion unter Rückfluss für 20 min bis 30 min zu ermöglichen; Entnehmen eines resultierenden Systems, Abkühlen, Abwiegen und Ausgleichen eines Gewichtsverlustes mit Methanol; gründliches Schütteln und Filtrieren des Systems und Entnehmen von 10 ml bis 15 ml eines erhaltenen Filtrats; Vakuumdestillieren des erhaltenen Filtrats bis zur Trockne, um einen Rückstand zu erhalten und Methanol zu gewinnen; Zugeben von 10 ml bis 15 ml einer 8%igen Salzsäurelösung zu dem Rückstand und Ultraschallbehandeln der resultierenden Mischung für 2 min bis 5 min; Zugeben von 10 ml bis 20 ml Trichlormethan (TCM) und Erhitzen auf Rückfluss für 1 h bis 3 h; Abkühlen eines resultierenden Rückflusssystems und Überführen in einen Scheidetrichter, Waschen eines Gefäßes für den Rückfluss mit einer kleinen Menge TCM und Zugeben der kleinen Menge TCM in den Scheidetrichter; Trennen, um eine primäre TCM-Phase und eine saure Phase zu erhalten, und 2- bis 5-maliges Extrahieren der sauren Phase mit 10 ml bis 15 ml TCM, um TCM-Phasen zu sammeln und mit der primären TCM-Phase zu vereinigen, und Vakuumdestillieren einer vereinigten TCM-Phase bis zur Trockne, um ein Produkt zu erhalten und TCM zu gewinnen; Auflösen des Produkts mit Methanol, Überführen der resultierenden Lösung in einen 10-ml-Messkolben und Zugeben von Methanol in einem bestimmten Umfang; und gründliches Schütteln, Filtrieren und Entnehmen des erhaltenen Filtrats als Anthrachinon-Testlösung.

7. QC-Verfahren für eine HSBD-Zusammensetzung nach Anspruch 4, wobei die Testlösung für freies Anthrachinon wie folgt hergestellt wird:
Zugeben von 0,2 g bis 0,5 g der HSBD-Zusammensetzung in einen Erlenmeyerkolben mit einem Stopfen, Zugeben von 25 ml bis 30 ml Methanol, Abwiegen und Erhitzen auf Rückfluss für 20 min bis 60 min; Entnehmen eines resultierenden Systems, Abkühlen, erneutes Abwiegen und Ausgleichen eines Gewichtsverlustes mit Methanol; und gründliches Schütteln, Filtrieren und Entnehmen des erhaltenen Filtrats als Anthrachinon-Testlösung.

8. QC-Verfahren für eine HSBD-Zusammensetzung nach Anspruch 3 oder 4, wobei die Anthrachinon-Referenzlösung wie folgt hergestellt wird:
Abwiegen von 1,581 mg einer Aloe-Emodin-Referenz, 3,017 mg einer Rheinsäure-Referenz, 1,604 mg einer Emodin-Referenz, 2,656 mg einer Chrysophanol-Referenz und 5,221 mg einer Emodin-Methylether-Referenz, Zugeben jeder der oben genannten Substanzen in einen 100-ml-Messkolben und Zugeben von Methanol zur Herstellung einer Aloe-Emodin-Stammlösung mit 15,807 µg Aloe-Emodin pro ml, einer Rheinsäure-Stammlösung mit 30,167 µg Rheinsäure pro ml, einer Emodin-Stammlösung mit 16,039 µg Emodin pro ml, einer Chrysophanol-Stammlösung mit 26,563 µg Chrysophanol pro ml, und einer Emodinmethylether-Stammlösung mit 52,213 µg Emodinmethylether pro ml, und genaues Pipettieren von 1 ml der Aloe-Emodin-Stammlösung, 1 ml der Rheinsäure-Stammlösung, 1 ml der Emodin-Stammlösung, 1 ml der Chrysophanol-Stammlösung und 0,1 ml der Emodin-Methylether-Stammlösung in einen 10-ml-Messkolben, und Zugeben von Methanol, um eine gemischte Lösung mit 1,581 µg Aloe-Emodin, 3,017 µg Rheinsäure, 1,604 µg Emodin, 2,656 µg Chrysophanol und 0,522 µg Emodin-Methylether pro ml herzustellen.

9. QC-Verfahren für eine HSBD-Zusammensetzung nach Anspruch 1, wobei ein Verfahren zur Bestimmung des Gesamtgehalts an Ephedrinhydrochlorid und Pseudoephedrinhydrochlorid Folgendes umfasst:
(1) Abwiegen einer geeigneten Menge einer Ephedrinhydrochlorid-Referenz und einer geeigneten Menge einer Pseudoephedrinhydrochlorid-Referenz und Zugeben von Methanol zur Herstellung einer Ephedrin-Referenzlösung mit 10 µg der Ephedrinhydrochlorid-Referenz und 10 µg der Pseudoephedrinhydrochlorid-Referenz pro ml;
(2) Extrahieren der HSBD-Zusammensetzung mit einer Salzsäurelösung zur Herstellung einer Ephedrin-Testlösung; und
(3) Injizieren der Ephedrin-Referenzlösung und der Ephedrin-Testlösung in einen Flüssigkeitschromatographen mit polarem, phenylgebundenem Diethylether-Kieselgel als Füller und Eluieren mit einer gemischten Lösung aus Methanol und einer wässrigen Phosphorsäurelösung als mobiler Phase bei einer Flussrate von 0,6 ml/min bis 1 ml/min, einer Säulentemperatur von 25 °C bis 35 °C und einer Detektionswellenlänge von 205 nm bis 215 nm, um den Gesamtgehalt an Ephedrinhydrochlorid und Pseudoephedrinhydrochlorid in der HSBD-Zusammensetzung zu bestimmen.

10. QC-Verfahren für eine HSBD-Zusammensetzung nach Anspruch 9, wobei bei dem Verfahren zur Bestimmung des Gesamtgehalts an Ephedrinhydrochlorid und Pseudoephedrinhydrochlorid die gemischte Lösung aus Methanol und einer wässrigen Phosphorsäurelösung als mobile Phase verwendet wird; und
die wässrige Phosphorsäurelösung eine gemischte Lösung aus Phosphorsäure, Diethylamin (DEA), Triethylamin (TEA) und Wasser ist, in der ein Volumenanteil von Phosphorsäure 0,090 % bis 0,094 %, ein Volumenanteil von DEA 0,01 % bis 0,04 % und ein Volumenanteil von TEA 0,02 % bis 0,06 % beträgt.

11. QC-Verfahren für eine HSBD-Zusammensetzung nach Anspruch 1, wobei ein Verfahren zur Bestimmung des Paeoniflorin-Gehalts Folgendes umfasst:
(1) Abwiegen einer geeigneten Menge einer Paeoniflorin-Referenz und Zugeben von Methanol, um eine Paeoniflorin-Referenzlösung mit 0,13 mg der Paeoniflorin-Referenz pro ml herzustellen;
(2) Extrahieren der HSBD-Zusammensetzung mit Methanol zur Herstellung einer Paeoniflorin-Testlösung; und
(3) Injizieren der Paeoniflorin-Referenzlösung und der Paeoniflorin-Testlösung in einen Flüssigkeitschromatographen mit octadecylgebundenem Kieselgel als Füller und Eluieren mit einer wässrigen Lösung aus Methanol (0,05 mol/l) und Monokaliumphosphat (MKP) als mobiler Phase bei einer Flussrate von 0,8 ml/min bis 1,2 ml/min, einer Detektionswellenlänge von 225 nm bis 230 nm und einer Säulentemperatur von 30 °C bis 35 °C, um den Paeoniflorin-Gehalt in der HSBD-Zusammensetzung zu bestimmen.

12. QC-Verfahren für eine HSBD-Zusammensetzung nach Anspruch 1, wobei ein TLC-Identifikationsverfahren für das Ephedra Folgendes umfasst:
(1) Vermahlen von 5 g bis 10 g der HSBD-Zusammensetzung, Zugeben von 3 ml bis 5 ml einer konzentrierten Ammoniaklösung zum Benetzen, Zugeben von 25 ml bis 30 ml TCM und Erhitzen auf Rückfluss für 0,5 h bis 1 h; und Filtrieren eines resultierenden Systems, Eindampfen eines Filtrats bis zur Trockne, um einen Rückstand zu erhalten, und Auflösen des Rückstands mit 1 ml bis 2 ml Methanol, um eine Ephedra-Testlösung zu erhalten;
(2) Entnehmen einer Ephedrinhydrochlorid-Referenz und Zugeben von Methanol zur Herstellung einer Ephedra-Referenzlösung mit 1 mg der Ephedrinhydrochlorid-Referenz pro ml; und
(3) Auftupfen von jeweils 1 µl bis 5 µl der Ephedra-Testlösung und der Ephedra-Referenzlösung auf dieselbe Kieselgel-G-TLC-Platte und Entwickeln mit einer gemischten Lösung von TCM, Methanol und einer konzentrierten Ammoniaklösung in einem Volumenverhältnis von 20:5:0,5 als Entwicklungsmittel; und Entnehmen der Kieselgel-G-TLC-Platte, Lufttrocknen, Besprühen mit einer Ninhydrinlösung und Erhitzen, bis gefärbte Spots deutlich sichtbar sind, wobei ein Spot an einer Position in einem Chromatogramm der Testlösung die gleiche Farbe aufweist wie ein Spot an einer entsprechenden Position in einem Chromatogramm der Referenzlösung.

13. QC-Verfahren für eine HSBD-Zusammensetzung nach Anspruch 1, wobei ein TLC-Identifikationsverfahren für das Süßholz Folgendes umfasst:
(1) Vermahlen von 5 g bis 10 g der HSBD-Zusammensetzung, Zugeben von 40 ml bis 50 ml Diethylether und Erhitzen auf Rückfluss für 1 h bis 2 h; Filtrieren eines resultierenden Systems, um eine Etherlösung und einen Filterrückstand zu erhalten, Verwerfen der Etherlösung, Auflösen des Filterrückstands mit 30 ml bis 50 ml Methanol und Erhitzen auf Rückfluss für 0,5 h bis 1,5 h; Filtrieren eines resultierenden Rückflusssystems, Eindampfen eines Filtrats bis zur Trockne, um einen Rückstand zu erhalten, Auflösen des Filterrückstands mit 40 ml bis 50 ml Wasser und Extrahieren einer resultierenden Lösung mit 20 ml bis 40 ml n-Butanol unter 1- bis 3-maligem Schütteln; um n-Butanolphasen zu sammeln; Vereinigen der n-Butanol-Phasen, 1- bis 3-maliges Waschen einer vereinigten n-Butanol-Phase mit Wasser, um eine n-Butanol-Flüssigkeit zu erhalten, und Verwerfen der resultierenden wässrigen Phasen; und Eindampfen der n-Butanol-Flüssigkeit bis zur Trockne, um ein Produkt zu erhalten, und Auflösen des Produkts mit 5 ml bis 10 ml Methanol, um eine Süßholz-Testlösung zu erhalten;
(2) Entnehmen von 1 g bis 3 g einer Süßholz-Referenz und Herstellen einer Süßholz-Referenzlösung entsprechend der Herstellung der Süßholz-Testlösung in Schritt (1); und
(3) Auftupfen von jeweils 2 µl bis 5 µl der Süßholz-Testlösung und der Süßholz -Referenzlösung auf dieselbe Kieselgel-G-TLC-Platte, die mit einer 1%igen Natriumhydroxidlösung präpariert wurde, und Entwickeln mit einer gemischten Lösung aus Ethylacetat, Ameisensäure, Eisessig und Wasser in einem Volumenverhältnis von 15:1:1:2 als Entwicklungsmittel; Entnehmen der Kieselgel-G-TLC-Platte, Lufttrocknen, Besprühen mit einer 10%igen Schwefelsäure-Ethanol-Lösung und Erhitzen auf 100 °C bis 110 °C, bis gefärbte Spots deutlich sichtbar sind, wobei ein Spot an einer Position in einem Chromatogramm der Testlösung die gleiche Farbe aufweist wie ein Spot an einer entsprechenden Position in einem Chromatogramm der Referenzlösung.

14. QC-Verfahren für eine HSBD-Zusammensetzung nach Anspruch 1, wobei ein TLC-Identifikationsverfahren für *Magnolia officinalis* Folgendes umfasst:
(1) Vermahlen von 5 g bis 10 g der HSBD-Zusammensetzung, Zugeben von 15 ml bis 25 ml Methanol und Ultraschallbehandeln der resultierenden Mischung für 0,5 h bis 1 h; Filtrieren eines resultierenden Systems, Eindampfen des Filtrats bis zur Trockne, um einen Rückstand zu erhalten, Auflösen des Filterrückstands mit 40ml bis 50 ml Wasser und Extrahieren einer resultierenden Lösung mit 20 ml bis 30 ml Ethylacetat unter 1- bis 3-maligem Schütteln, um Ethylacetatphasen zu sammeln; und Vereinigen der Ethylacetatphasen, Eindampfen der vereinigten Ethylacetatphase bis zur Trockne, um ein Produkt zu erhalten, und Auflösen des Produkts mit 1 ml bis 2 ml Methanol, um eine Magnolia-officinalis-Testlösung zu erhalten;
(2) Entnehmen einer Magnolol-Referenz und Zugeben von Methanol zur Herstellung einer Magnolol-Referenzlösung mit 1 mg der Magnolol-Referenz pro ml; und Entnehmen einer Honokiol-Referenz und Zugeben von Methanol zur Herstellung einer Honokiol-Referenzlösung mit 1 mg der Honokiol-Referenz pro ml; und
(3) Auftupfen von jeweils 2 µl bis 5 µl der Magnolia-officinalis-Testlösung, der Magnolol-Referenzlösung und der Honokiol-Referenzlösung auf dieselbe Kieselgel-G-TLC-Platte und Entwickeln mit einer gemischten Lösung aus Toluol, Ethylacetat und Methanol in einem Volumenverhältnis von 17:3:3 als Entwicklungsmittel; Entnehmen der Kieselgel-G-TLC-Platte, Lufttrocknen, Besprühen mit einer 5%igen Vanillin-Schwefelsäure-Lösung und Erhitzen, bis gefärbte Spots deutlich sichtbar sind, wobei ein Spot an einer Position in einem Chromatogramm der Testlösung die gleiche Farbe aufweist wie ein Spot an einer entsprechenden Position in einem Chromatogramm der Referenzlösung.

15. QC-Verfahren für eine HSBD-Zusammensetzung nach Anspruch 2, wobei ein TLC-Identifikationsverfahren für *Astragalus membranaceus* Folgendes umfasst:
(1) Entnehmen von 5 g bis 10 g der HSBD-Zusammensetzung, Zugeben von 25 ml bis 30 ml Methanol und Ultraschallbehandeln der resultierenden Mischung für 0,5 h bis 1 h; Abkühlen und Filtrieren des resultierenden Systems, Eindampfen eines Filtrats bis zur Trockne, um einen Rückstand zu erhalten, Auflösen des Filterrückstands mit 20 ml bis 30 ml Wasser und Extrahieren der resultierenden Lösung mit 15ml bis 30 ml wassergesättigtem n-Butanol unter 1- bis 3-maligem Schütteln, um n-Butanolphasen zu sammeln; Vereinigen der n-Butanol-Phasen, 1-bis 3-maliges Waschen einer vereinigten n-Butanol-Phase mit 20 ml bis 30 ml einer Ammoniaklösung, um eine n-Butanol-Flüssigkeit zu erhalten, und Verwerfen der resultierenden Ammoniak-Phasen; und Eindampfen der n-Butanol-Flüssigkeit bis zur Trockne, um ein Produkt zu erhalten, und Auflösen des Produkts mit 1 ml bis 3 ml Methanol, um eine Astragalus-membranaceus-Testlösung zu erhalten;
(2) Entnehmen einer Astragalosid-Referenz und Zugeben von Methanol zur Herstellung einer Astragalus-membranaceus-Referenzlösung mit 1 mg der Astragalosid-Referenz pro ml; und
(3) Auftupfen von 5 µl bis 8 µl der Astragalus-membranaceus-Testlösung und 2 µl bis 3 µl der Astragalus-membranaceus-Referenzlösung auf dieselbe Kieselgel-G-TLC-Platte und Entwickeln bei 4°C bis 10°C mit einer gemischten Lösung von TCM, Methanol und Wasser in einem Volumenverhältnis von 13:7:2 als Entwicklungsmittel; Entnehmen der Kieselgel-G-TLC-Platte, Lufttrocknen, Besprühen mit einer 10%igen Schwefelsäure-Ethanol-Lösung, Erhitzen auf 100 °C bis 105 °C, bis gefärbte Spots deutlich sichtbar sind, und Beobachten unter ultraviolettem (UV) Licht, wobei ein fluoreszierender Spot an einer Position in einem Chromatogramm der Testlösung die gleiche Farbe hat wie ein fluoreszierender Spot an einer entsprechenden Position in einem Chromatogramm der Referenzlösung.

16. QC-Verfahren für eine HSBD-Zusammensetzung nach Anspruch 2, wobei ein TLC-Identifikationsverfahren für *Semen Lepidii* Folgendes umfasst:
(1) Vermahlen von 5 g bis 10 g der HSBD-Zusammensetzung, Zugeben von 20 ml bis 30 ml 70%igem Methanol und Ultraschallbehandeln der resultierenden Mischung für 0,5 h bis 1 h; Abkühlen und Filtrieren des resultierenden Systems, Eindampfen eines Filtrats bis zur Trockne, um einen Rückstand zu erhalten, und Auflösen des Rückstands mit 5 ml bis 10 ml Wasser; Durchlaufenlassen der resultierenden Lösung durch eine makroporöse D101-Harzsäule, Eluieren mit Wasser, bis ein Eluat farblos ist, Eluieren mit 70%igem Methanol, bis ein 70%iges Methanol-Eluat farblos ist, und Sammeln des 70%igen Methanol-Eluats; Eindampfen des 70%igen Methanol-Eluats bis zur Trockne, um ein Produkt zu erhalten, und Auflösen des Produkts mit 1 ml bis 2 ml Methanol, um eine Semen-Lepidii-Testlösung zu erhalten;
(2) Entnehmen einer Quercetin-3-O-β-D-Glucose-7-O-β-D-Gentiobiosid-Referenz und Zugeben von 30 % Methanol, um eine Semen-Lepidii-Referenzlösung mit 0,1 mg der Quercetin-3-O-β-D-Glucose-7-O-β-D-Gentiobiosid-Referenz pro ml herzustellen; und
(3) Auftupfen von jeweils 1 µl bis 5 µl der Semen-Lepidii-Testlösung und der Semen-Lepidii-Referenzlösung auf einen gleichen Polyamid(PA)-Film und Entwickeln mit einer gemischten Lösung aus Ethylacetat, Methanol und Wasser in einem Volumenverhältnis von 7:2:1 als Entwicklungsmittel; und Entnehmen des PA-Films, Lufttrocknen, Besprühen mit einer 2%igen Aluminiumchlorid-Ethanol-Lösung, Heißlufttrocknen und Beobachten unter UV-Licht, wobei ein fluoreszierender Spot an einer Position in einem Chromatogramm der Testlösung die gleiche Farbe hat wie ein fluoreszierender Spot an einer entsprechenden Position in einem Chromatogramm der Referenzlösung.

17. QC-Verfahren für eine HSBD-Zusammensetzung nach Anspruch 2, wobei ein TLC-Identifikationsverfahren für *Paeoniae-Radix-Rubra* Folgendes umfasst:
(1) Vermahlen von 3 g bis 5g der HSBD-Zusammensetzung, Zugeben von 25 ml bis 40 ml Methanol und Ultraschallbehandeln der resultierenden Mischung für 0,5 h bis 1 h; und Filtrieren eines resultierenden Systems, Eindampfen eines Filtrats bis zur Trockne, um einen Rückstand zu erhalten, und Auflösen des Rückstands mit 1 ml bis 2 ml Methanol, um eine Paeoniae-Radix-Rubra-Testlösung zu erhalten;
(2) Entnehmen einer Paeoniflorin-Referenz und Zugeben von Methanol zur Herstellung einer Paeoniae-Radix-Rubra-Referenzlösung mit 1 mg der Paeoniflorin-Referenz pro ml; und
(3) Auftupfen von jeweils 2 µl bis 5 µl der *Paeoniae-Radix-Rubra-*Testlösung und der Paeoniae-Radix-Rubra-Referenzlösung auf dieselbe Kieselgel-G-TLC-Platte, und Entwickeln mit einer gemischten Lösung von TCM, Ethylacetat, Methanol und Ameisensäure in einem Volumenverhältnis von 40:5:10:0.2 als Entwicklungsmittel; und Entnehmen der Kieselgel-G-TLC-Platte, Lufttrocknen, Besprühen mit einer 5%igen Vanillin-Schwefelsäure-Lösung und Erhitzen, bis gefärbte Spots deutlich sichtbar sind, wobei ein Spot an einer Position in einem Chromatogramm der Testlösung die gleiche Farbe aufweist wie ein Spot an einer entsprechenden Position in einem Chromatogramm der Referenzlösung.

18. QC-Verfahren für eine HSBD-Zusammensetzung nach Anspruch 2, wobei ein TLC-Identifikationsverfahren für *Rheum palmatum* Folgendes umfasst:
(1) Vermahlen von 5 g bis 10 g der HSBD-Zusammensetzung, Zugeben von 20 ml bis 30 ml Methanol und Ultraschallbehandeln der resultierenden Mischung für 20 min bis 30 min; Filtrieren eines resultierenden Systems und Entnehmen von 3 ml bis 10 ml eines Filtrats; Eindampfen des Filtrats bis zur Trockne, um einen Rückstand zu erhalten, Auflösen des Rückstands mit 5 ml bis 15 ml Wasser, Zugeben von 1 ml bis 3 ml Salzsäure und Erhitzen auf Rückfluss für 20 min bis 60 min; sofortiges Abkühlen eines resultierenden Rückflusssystems und Extrahieren des Rückflusssystems mit 20 ml bis 30 ml Diethylether unter 2- bis 3-maligem Schütteln, um Diethylether-Phasen zu sammeln; und Vereinigen der Diethylether-Phasen, Eindampfen der vereinigten Diethylether-Phase bis zur Trockne, um ein Produkt zu erhalten, und Auflösen des Produkts mit 1 ml bis 3 ml TCM, um eine *Rheum*-palmatum-Testlösung zu erhalten;
(2) Entnehmen von 0,1 g einer Rheum-palmatum-Referenz und Herstellen einer Rheum-palmatum-Referenzlösung entsprechend der Herstellung der *Rheum-*palmatum-Testlösung in Schritt (1); und
(3) Auftupfen von jeweils 1 µl bis 5 µl der Rheum-palmatum-Testlösung und der *Rheum*-palmatum-Referenzlösung auf dieselbe Kieselgel-H-TLC-Platte und Entwickeln mit einer gemischten Lösung aus Petrolether, Ethylformiat und Ameisensäure in einem Volumenverhältnis von 15:5:1 als Entwicklungsmittel; und Entnehmen der Kieselgel-H-TLC-Platte, Lufttrocknen und Beobachten unter UV-Licht, wobei ein fluoreszierender Spot an einer Position in einem Chromatogramm der Testlösung die gleiche Farbe hat wie ein fluoreszierender Spot an einer entsprechenden Position in einem Chromatogramm der Referenzlösung.

19. QC-Verfahren für eine HSBD-Zusammensetzung nach Anspruch 1, wobei die HSBD-Zusammensetzung hauptsächlich die folgenden Komponenten umfasst: 3 bis 60 Teile Ephedra, 4,5 bis 90 Teile geröstete Bittermandel, 7,5 bis 150 Teile roher Gips, 1,5 bis 30 Teile Süßholz, 5 bis 100 Teile *PogostemonisHerba,* 5 bis 100 Teile *Magnolia officinalis,* 7,5 bis 150 Teile mit Kleie geröstete *AtractylodesLancea,* 5 bis 100 Teile geröstete *Amomum-tsaoko*-Frucht, 4,5 bis 90 Teile *RhizomaPinelliae,* 7,5 bis 150 Teile *Poriacocos,* 2,5 bis 50 Teile *Rheum palmatum,* 5 bis 100 Teile *Astragalus membranaceus,* 5 bis 100 Teile *Semen Lepidii,* 5 bis 100 Teile *Paeoniae Radix Rubra* und eine geeignete Menge des Hilfsstoffs; und
wobei die HSBD-Zusammensetzung zu einem Präparat der traditionellen chinesischen Medizin (TCM) in einer Form zubereitet wird, die ausgewählt ist aus der Gruppe bestehend aus einem Granulat, einer Abkochung, einem Pulver, einer Kapsel, einer oralen Flüssigkeit, einer Tablette und einer Pille.

## Revendications

1. Procédé de contrôle de qualité (QC) pour une composition de Huashibaidu (HSBD), la composition de HSBD comprend principalement les composant suivants : éphédra, amande amère frite, gypse brut, réglisse, *PogostemonisHerba, Magnolia officinalis,* son de blé frit *AtractylodesLancea,* fruit *d'Amomum tsaoko* frit, *RhizomaPinelliae, Poriacocos, Rheum palmatum, Astragalus membranaceus, Semen Lepidii, Paeconiae Radix Rubra* et un adjuvant ; et
**caractérisé en ce que**
le procédé de QC pour une composition de HSBD comprend :
(1) l'identification d'éphédra, de réglisse et de *Magnolia officinalis* par chromatographie sur couche mince (TLC) ; et
(2) la détermination d'une teneur en anthraquinone totale, d'une teneur en anthraquinone libre, d'une teneur totale de chlorhydrate d'éphédrine et de chlorhydrate de pseudoéphédrine et d'une teneur en paéoniflorine dans la composition de HSBD par chromatographie liquide haute performance (HPLC) et le calcul d'une teneur en anthraquinone combinée et la teneur en anthraquinone combinée = la teneur en anthraquinone totale - la teneur en anthraquinone libre ;
dans la détermination des deux teneur en anthraquinone totale et teneur en anthraquinone libre, la colonne de chromatographie est une colonne de gel de silice liée à de l'octadécylsilane et le programme d'élution suivant est adopté :
la phase mobile A est l'acétonitrile et la phase mobile B est une solution aqueuse d'acide phosphorique :
0 min à 10 min : phase mobile A : de 35 % à 40 % et phase mobile B : de 65 % à 60 % ;
10 à 38 min : phase mobile A : de 40 à 60 % et phase mobile B : de 60 à 40 % ;
38 min à 48 min : phase mobile A : 60 % et phase mobile B : 40 %.

2. Procédé de QC pour composition de HSBD selon la revendication 1, comprenant en outre :
(3) l'identification de d'*Astragalus membranaceus,* de *Semen Lepidii,* de *Paeoniae Radix Rubra* et de *Rheum palmatum* par TLC.

3. Procédé de QC pour une composition de HSBD selon la revendication 1, dans lequel un procédé de détermination de la teneur en anthraquinone totale comprend :
(1) peser les quantités appropriées d'émodine d'aloe, d'acide rhéinique, d'émodine, de chrysophanol et d'émodine méthyl éther et ajouter du méthanol pour préparer une solution de référence d'anthraquinone ;
(2) soumettre la composition de HSBD à une extraction avec du méthanol pour préparer une solution test d'anthraquinone totale ; et
(3) injecter la solution de référence d'anthraquinone et de la solution test d'anthraquinone totale un chromatographe liquide pour déterminer la teneur en anthraquinone totale dans la composition de HSBD.

4. Procédé de QC pour une composition de HSBD selon la revendication 1, dans lequel un procédé de détermination de la teneur en anthraquinone libre comprend :
(1) peser les quantités appropriées d'émodine d'aloe, d'acide rhéinique, d'émodine, de chrysophanol et d'émodine méthyl éther et l'addition de méthanol pour préparer une solution de référence d'anthraquinone ;
(2) soumettre la composition de HSBD à une extraction avec du méthanol pour préparer une solution test d'anthraquinone libre ; et
(3) injecter la solution d'anthraquinone de référence et de la solution test d'anthraquinone libre dans un chromatographe liquide pour déterminer la teneur en anthraquinone libre dans la composition de HSBD.

5. Procédé de QC pour une composition de HSBD selon la revendication 3 ou 4, dans lequel dans le procédé de détermination de la teneur en anthraquinone totale et le procédé de détermination de la teneur en anthraquinone libre, l'élution de gradient est effectuée sous les conditions suivantes : débit 0,6 mL/min à 1 mL/min, longueur d'onde de détection : 253 nm à 256 nm et température de colonne : 25 °C à 35 °C.

6. Procédé de QC d'une composition de HSBD selon la revendication 3, dans lequel la solution test d'anthraquinone totale est préparée comme suit :
ajouter 0,2 g à 0,5 g de la composition de HSBD à un flacon Erlenmeyer avec un bouchon, ajouter 20 mL à 30 mL de méthanol et chauffage pour permettre l'extraction sous reflux durant 20 min à 30 min ; prendre un système résultant à l'extérieur, refroidir, peser et constituer pour une perte de poids avec du méthanol ; agiter vigoureusement et filtrer le système et prendre de 10 mL à 15 mL d'un filtrat subséquent ; soumettre le substrat subséquent à une distillation sous vide jusqu'à l'état sec pour obtenir un résidu et récupérer le méthanol, ajouter de 10 mL à 15 mL d'une solution d'acide chlorhydrique à 8 % au résidu et soumettre un mélange résultant à un traitement ultrasonore durant 2 min à 5 min, ajouter de 10 mL à 20 mL de trichlorométhane (TCM) et chauffer au reflux durant 1 h à 3 h ; refroidir un système de reflux résultant et transférer dans un entonnoir de séparation, laver un récipient pour le reflux avec une petite quantité de TCM et ajouter la petite quantité de TCM à l'entonnoir de séparation, ; séparer pour obtenir une phase de TCM primaire et une phase acide et soumission de la phase acide à une extraction avec 10 mL à 15 mL de TCM 2 à 5 fois pour collecter les phases de TCM et les combiner avec la phase de TCM primaire et la soumission d'une phase de TCM combinée à une distillation sous vide jusqu'à l'état anhydre pour obtenir un produit et récupérer le TCM ; dissoudre le produit avec du méthanol, transférer une solution résultante à un flacon volumétrique de 10 mL et ajouter du méthanol à une échelle spécifiée ; et agiter vigoureusement, filtrer et prendre un substrat subséquent comme la solution test d'anthraquinone.

7. Procédé de QC pour une composition de HSBD selon la revendication 4, dans lequel la solution test d'anthraquinone libre est préparée comme suit :
ajouter 0,2 g à 0,5 g de la composition de HSBD à un flacon Erlenmeyer avec un bouchon, ajouter 25 mL à 30 mL de méthanol, peser, et chauffer au reflux durant 20 min à 60 min ; prendre un système résultant à l'extérieur, refroidir, peser une fois encore et constituer pour une perte de poids avec du méthanol ; et agiter vigoureusement, filtrer et prendre un filtrat subséquent comme la solution test d'anthraquinone.

8. Procédé de QC pour une composition de HSBD selon la revendication 3 ou 4, dans lequel la solution de référence d'anthraquinone est préparée comme suit :
peser 1,581 mg d'une référence d'émodine d'aloe, 3,017 mg d'une référence d'acide rhéinique, 1,604 mg d'une référence d'émodine, 2,656 mg d'une référence de chrysophanol et 5,221 mg d'une référence d'émodine méthyl éther, ajouter chacun de ce qui précède à un flacon volumétrique de 100 mL respectivement et ajouter du méthanol pour préparer une solution mère d'émodine d'aloe avec 15,807 µg de l'émodine d'aloe par mL, une solution mère d'acide rhéinique avec 30,167 µg de l'acide rhéinique par mL, une solution mère d'émodine avec 16,039 µg d'émodine par mL, une solution mère de chrysophanol avec 26,563 µg du chrysophanol par mL et une solution mère d'émodine méthyl éther avec 52,213 µg de l'émodine méthyl éther par mL et pipeter précisément 1 mL de la solution mère d'émodine d'aloe, 1 mL de la solution mère d'acide rhéinique, 1 mL de la solution mère d'émodine, 1 mL de la solution mère de chrysophanol et 0,1 mL de la solution mère d'émodine méthyl éther à un flacon volumétrique de 10 mL et ajouter du méthanol pour préparer une solution mixte avec 1,581 µg de l'émodine d'aloe, 3,017 µg de l'acide rhéinique, 1,604 µg de l'émodine, 2,656 µg du chrysophanol et 0,522 µg de l'émodine méthyl éther par mL.

9. Procédé de QC pour une composition e HSBD selon la revendication 1, dans lequel un procédé de détermination de la teneur totale de chlorhydrate d'éphédrine et de chlorhydrate de pseudoéphédrine comprend :
(1) peser une quantité appropriée d'une référence de chlorhydrate d"éphédrine et une quantité appropriée de référence de chlorhydrate de pseudoéphédrine et ajouter du méthanol pour préparer une solution de référence d'éphédrine avec 10 µg de la référence de chlorhydrate d'éphédrine et 10 µg de la référence de chlorhydrate de pseudoéphédrine par mL ;
(2) soumettre la composition de HSBD à une extraction avec une solution d'acide chlorhydrique pour préparer une solution test d'éphédrine ; et
(3) injecter la solution de référence d'éphédrine et la solution test d'éphédrine dans un chromatographe liquide avec du silicagel lié à un phényle lié à un diéthyl éther polaire comme charge, et effectuer une élution avec une solution mixte de méthanol et une solution aqueuse d'acide phosphorique comme phase mobile à un débit de 0,6 mL/min à 1 mL/min, une température de colonne de 25 °C à 35 °C et une longueur d'onde de détection de 205 nm à 215 nm pour déterminer la teneur totale de chlorhydrate d'éphédrine et de chlorhydrate de pseudoéphédrine dans la composition de HSBD.

10. Procédé de QC pour une composition de HSBD selon la revendication 9, dans lequel dans le procédé de détermination de la teneur totale de chlorhydrate d'éphédrine et de chlorhydrate de pseudoéphédrine, la solution mixte de méthanol et d'une solution aqueuse d'acide phosphorique est adoptée comme une phase mobile ; et
la solution aqueuse d'acide phosphorique est une solution mixte d'acide phosphorique, de diéthylamine (DEA), de triéthylamine (TEA)) et d'eau, dans laquelle une fraction volumique de l'acide phosphorique est de 0,090 % à 0,094 %, un fraction volumique de DEA est de 0,01 % à 0,04 % et une fraction volumique de TEA est de 0,02 % à 0,06 %.

11. Procédé de QC pour une composition de HSBD selon la revendication 1, dans lequel un procédé de détermination de la teneur en paéoniflorine comprend :
(1) peser une quantité appropriée d'une référence de paéoniflorine et ajouter du méthanol pour préparer une solution de référence de paéoniflorine avec 0,13mg de la référence de paéoniflorine par mL ;
(2) soumetttre la composition de HSBD à une extraction avec du méthanol pour préparer une solution test de paéoniflorine ; et
(3) injecter la solution de référence de paéoniflorine et la solution test de paéoniflorine dans un chromatographe liquide avec du silicagel lié à de l'octadécyle comme charge et effectuer une élution avec une solution aqueuse de méthanol-phosphate de monopotassium à 0,05 mole/L (MKP) comme phase mobile à un débit de 0,8 mL/min à 1,2 mL/min, une longueur d'onde de détection de 225 nm à 230 nm et une température de colonne de 30 °C à 35 °C pour déterminer la teneur de paéoniflorine dans la composition de HSBD.

12. Procédé de QC pour une composition de HSBD selon la revendication 1, dans lequel un procédé d'identification par TLC pour l'éphédra comprend :
(1) broyer de 5 g à 10 g de la composition de HSBD, ajouter de 3 mL à 5 mL d'une solution d'ammoniaque concentrée pour le mouillage, ajouter de 25 ml à 30 mL de TCM et chauffer au reflux durant 0,5 h à 1 h ; et filtrer un système résultant, soumettre un filtrat à une évaporation jusqu'à l'état anhydre pour obtenir un résidu et dissoudre le résidu avec 1 mL à 2 mL de méthanol pour obtenir une solution test d'éphédra ;
(2) prendre une référence de chlorhydrate d'éphédrine et ajouter du méthanol pour préparer une solution de référence d'éphédra ave 1 mg de la référence de chlorhydrate d'éphédrine par mL ; et
(3) miettre en spot de 1 µL à 5 µL de chacune de la solution est d'éphédra et de la solution de référence d'éphédra sur une même plaque TLC de silicagel G et développer avec une solution mixte de TCM, de méthanol et d'une solution concentrée d'ammoniaque dans un rapport volumique de 20:5:0,5 comme agent de développement ; et prendre la plaque de TLC de silicagel G à l'extérieur, sécher à l'air, pulvériser avec une solution de ninhydrine et chauffer jusqu'à ce que des spots colorés soient clairement visualisés, un spot à une position dans un chromatogramme de la solution test étant de la même couleur qu'un spot à une position correspondante dans un chromatogramme de la solution de référence.

13. Procédé de QC pour une composition de HSBD selon la revendication 1, dans lequel un procédé d'identification par TLC pour le réglisse comprend :
(1) broyer de 5 g à 10 g de la composition de HSBD, ajouter de 40 mL à 50 mL de diéthyl éther et chauffer au reflux durant 1 h à 2 h ; filtrer d'un système résultant pour obtenir une solution d'éther et un résidu de filtre, éliminer la solution d'éther, dissoudre le résidu de filtre avec 30 mL à 50 mL de méthanol et chauffer au reflux durant 0,5 h à 1,5 h ; filtrer un système de reflux résultant, soumettre un filtrat à une évaporation jusqu'à l'état anhydre pour obtenir un résidu, dissoudre le résidu avec 40 mL à 50 mL d'eau et soumettre une solution résultante à une extraction avec 20 mL à 40 mL de n-butanol sous agitation 1 à 3 fois pour collecter les phases de n-butanol ; combiner les phases de n-butanol, laver une phase de n-butanol combiné 1 à 3 fois pour obtenir un liquide de n-butanol et éliminer les phases aqueuses résultantes ; et évaporer le liquide de n-butanol jusqu'à l'état anhydre pour obtenir un produit et dissoudre le produit avec 5 mL à 10 mL de méthanol pour obtenir une solution test de réglisse ;
(2) prendre 1 g à 3 g d'une référence de réglisse et préparer une solution de référence de réglisse selon la préparation de la solution test de réglisse dans l'étape (1) ; et
(3) mettre en spot 2 µL à 5 µL de chacune de la solution test de réglisse et de la solution de référence de réglisse sur une même plaque de TLC de silicagel G préparée avec une solution d'hydroxyde de sodium à 1 % et développer avec une solution mixte d'acétate d'éthyle, d'acide formique, d'acide acétique glacial et d'eau dans un rapport volumique de 15:1:1:2 comme agent de développement ; et prendre la plaque de TLC de silicagel G à l'extérieur, sécher à l'air, pulvériser avec une solution d'éthanol-acide sulfurique à 10 % et chauffer à 100 °C à 110 °C jusqu'à ce que des spots colorés soient clairement visualisés, un spot à une position dans un chromatogramme de la solution test étant de la même couleur qu'un spot à une position correspondante dans un chromatogramme de la solution de référence.

14. Procédé de QC pour une composition de HSBD selon la revendication 1, dans lequel un procédé d'identification par TLC pour le *Magnolia officinalis* comprend :
(1) broyerr de 5 g à 10 g de la composition de HSBD, ajouter de 15 mL à 25 mL de méthanol et soumettre un mélange résultant à un traitement ultrasonore durant 0,5 h à 1 h ; filtrer un système résultant, soumettre un filtrat à une évaporation jusqu'à l'état anhydre pour obtenir un résidu, dissoudre le résidu avec 40 mL à 50 mL d'eau et soumettre une solution résultante à une extraction avec 20 mL à 30 mL d'acétate d'éthyle 1 à 3 fois pour collecter les phases d'acétate d'éthyle et combiner les phases d'acétate d'éthyle, soumettre une phase d'acétate d'éthyle combiné à une évaporation jusqu'à l'état anhydre pour obtenir un produit et dissoudre le produit dans 1 mL à 2 mL de méthanol pour obtenir une solution test de *Magnolia officinalis* ;
(2) prendre une référence de magnolol et ajouter du méthanol pour préparer une solution de référence de magnolol avec 1 mg de la référence de magnolol par mL ; et prendre une référence d'honokiol et ajouter du méthanol pour préparer une solution de référence d'honokiol avec 1 mg de l'honokiol de référence par mL ; et
(3) mettre en spot 2 µL à 5 µL de la solution test de *Magnolia officinalis,* de la solution de référence de magnolol et de la solution de référence d'honokiol sur une même plaque de TLC de silicagel G et développer avec une solution mixte de toluène, d'acétate d'éthyle et de méthanol dans un rapport volumique de 17:3:3 comme agent de développement ; et prendre la plaque de TLC de silicagel à l'extérieur, sécher à l'air, pulvériser avec une solution d'acide sulfurique-vanilline à 5 % et chauffer jusqu'à ce que des spots colorés soient clairement visualisés, un spot à une position dans un chromatogramme de la solution test étant de la même couleur qu'un spot à une position correspondante dans un chromatogramme de la solution de référence.

15. Procédé de QC pour une composition de HSBD selon la revendication 2, dans lequel un procédé d'identification par TLC pour l*'Astragalus membranaceus* comprend :
(1) prendre de 5 g à 10 g de la composition de HSBD, ajouter de 25 mL à 30 mL de méthanol et soumettre un mélange résultant à un traitement ultrasonore durant 0,5 h à 1 h ; refroidir et filtrer un système résultant, soumettre un filtrat à une évaporation jusqu'à l'état anhydre pour obtenir un résidu, dissoudre le résidu avec 20 mL à 30 mL d'eau et soumettreune solution résultante à une extraction avec 15 mL à 30 mL de n-butanol saturé d'eau sous agitation 1 à 3 fois pour collecter les phases de n-butanol ; combiner les phases de n-butanol, laver une phase de n-butanol combiné avec 20 mL à 30 mL d'une solution d'ammoniaque 1 à 3 fois pour obtenir un liquide de n-butanol et'éliminer les phases d'ammoniaque résultantes ; et évaporer le liquide de n-butanol jusqu'à l'état anhydre pour obtenir un produit et dissoudre le produit avec 1 mL à 3 mL de méthanol pour obtenir une solution test *d'Astragalus membranaceus* ;
(2) prendre une référence d'astragaloside et ajouter du méthanol pour préparer une solution de référence d*'Astragalus membranaceus* avec 1 mg de la référence d'astragaloside par mL ; et
(3) mettre en spot de 5 µL à 8 µL de la solution test d*'Astragalus membranaceus* et de 2 µL à 3 µL de la solution de référence d*'Astragalus membranaceus* sur une même plaque de TLC de silicagel G et développer à 4 °C à 10 °C avec une solution mixte de TCM, de méthanol et d'eau dans un rapport volumique de 13:7:2 comme agent de développement ; et prendre la plaque de TLC de silicagel G à l'extérieur, sécher à l'air, pulvériser avec une solution d'éthanol-acide sulfurique à 10 %, chauffer à 100 °C à 105 °C jusqu'à ce que des spots colorés soient clairement visualisés et observer sous lumière ultraviolette (UV), un spot fluorescent à une position dans un chromatogramme de la solution test étant de la même couleur qu'un spot fluorescent à une position correspondante dans un chromatogramme de la solution de référence.

16. Procédé de QC pour une composition de HSBD selon la revendication 2, dans lequel un procédé d'identification par TLC pour le *Semen Lepidii* comprend :
(1) broyer de 5 g à 10 g de la composition de HSBD, ajouter de 20 mL à 30 mL de méthanol à 70 % et soumettre un mélange résultant à un traitement ultrasonore durant 0,5 h à 1 h ; refroidir et filtrer un système résultant, soumettreun filtrat à une évaporation jusqu'à l'état anhydre pour obtenir un résidu et dissoudre le résidu avec 5 mL à 10 mL d'eau ; permettre une solution résultante à passer à travers une colonne de résine macroporeuse D101, éluer avec de l'eau jusqu'à ce qu'un éluat soit incolore, éluer avec du méthanol à 70 % jusqu'à ce qu'un éluat de méthanol à 70 % soit incolore et collecter l'éluat de méthanol à 70 % ; et soumettre l'éluat de méthanol à 70 % à une évaporation jusqu'à l'état anhydre pour obtenir un produit et dissoudre le produit avec 1 mL à 2 mL de méthanol pour obtenir une solution test de *Semen Lepidii* ;
(2) prendre une référence de quercétine-3-O-β-D-glucose-7-O-β-D-gentiobioside et ajouter du méthanol à 30 % pour préparer une solution de référence avec 0,1 mg de la référence de quercétine-3-O-β-D-glucose-7-O-β-D-gentiobioside par mL ; et
(3) mettre en spot 1 µL à 5 µL de chacune de la solution test de *Semen Lepidii* et de la solution de référence de *Semen Lepidii* sur un même film de polyamide (PA) et développer avec une solution mixte d'acétate d'éthyle, de méthanol et d'eau dans un rapport volumique de 7:2:1 comme agent de développement ; et prendre le film de PA à l'extérieur, sécher à l'air, pulvériser avec une solution d'éthanol-chlorure d'aluminium à 2 %, sécher à l'air chaud et observer sous lumière UV, un spot fluorescent à une position dans un chromatogramme de la solution test étant de la même couleur qu'un spot fluorescent à une position correspondante dans un chromatogramme de la solution de référence.

17. Procédé de QC pour une composition de HSBD selon la revendication 2, dans lequel un procédé d'identification par TLC pour le *Paeoniae Radix Rubra* comprend :
(1) broyer de 3 g à 5 g de la composition de HSBD, ajouter de 25 mL à 40 mL de méthanol et soumettre un mélange résultant à un traitement ultrasonore durant 0,5 h à 1 h ; et filtrer un système résultant, soumettre un filtrat à une évaporation jusqu'à l'état anhydre pour obtenir un résidu et dissoudre le résidu avec 1 mL à 2 mL de méthanol pour obtenir une solution test de *Paeoniae Radix Rubra* ;
(2) prendre une référence de paéoniflorine et ajouter du méthanol pour préparer une solution de référence de *Paeoniae Radix Rubra* avec 1 mg de la référence de paéoniflorine par mL ; et
(3) mettre en spot 2 µL à 5 µL de chacune de la solution test de *Paeoniae Radix Rubra* et de la solution de référence de *Paeoniae Radix Rubra* sur une même plaque de TLC de silicagel G et développer avec une solution mixte de TCM, d'acétate d'éthyle, de méthanol et d'acide formique dans un rapport volumique de 40:5:10:0,2 comme agent de développement ; et prendre la plaque de TLC de silicagel G à l'extérieur, sécher à l'air, pulvériser avec une solution d'acide sulfurique-vanilline à 5 % et chauffer jusqu'à ce que des spots colorés soient clairement visualisés, un spot à une position dans un chromatogramme de la solution test étant de la même couleur qu'un spot correspondant d'un chromatogramme de la solution de référence.

18. Procédé de QC pour une composition de HSBD selon la revendication 2, dans lequel un procédé d'identification par TLC pour le *Rheum palmatum* comprend :
(1) broyer de 5 g à 10 g de la composition de HSBD, ajouter de 20 mL à 30 mL de méthanol et soumettre un mélange résultant à un traitement ultrasonore durant 20 min à 30 min ; filtrer un système résultant et prendre de 3 mL à 10 mL d'un filtrat ; soumettre le filtrat à une évaporation jusqu'à l'état anhydre pour obtenir un résidu, dissoudre le résidu avec 5 mL à 15 mL d'eau, ajouter 1 mL à 3 mL d'acide chlorhydrique et chauffer au reflux durant 20 min à 60 min ; immédiatement refroidir un système de reflux résultant et soumettre le système de reflux à une extraction avec 20 mL à 30 mL de diéthyl éther sous agitation 2 à 3 fois pour collecter les phases de diéthyl éther ; et combiner les phases de diéthyl éther, soumettre une phase de diéthyl éther combiné à une évaporation jusqu'à l'état anhydre pour obtenir un produit et dissoudre le produit avec 1 mL à 3 mL de TCM pour obtenir une solution test de *Rheum palmatum* ;
(2) prendre 0,1 g d'une référence de *Rheum palmatum* et préparer une solution de référence de *Rheum palmatum* selon la préparation de la solution test de *Rheum palmatum* dans l'étape (1) ; et
(3) mettre en spot 1 µL à 5 µL de chacune de la solution test de *Rheum palmatum* et de la solution de référence de *Rheum palmatum* sur une même plaque de TLC de silicagel H et développer avec une solution mixte d'éther e pétrole, de formate d'éthyle et d'acide formique dans un rapport volumique de 15:5:1 comme agent de développement ; et prendre la plaque de TLC de silicagel H à l'extérieur, sécher à l'air et observer sous lumière UV, un spot fluorescent à une position dans un chromatogramme de la solution test étant de la même couleur qu'un spot fluorescent à une position correspondante dans un chromatogramme de la solution de référence.

19. Procédé de QC pour une composition de HSBD selon la revendication 1, dans lequel la composition de HSBD comprend principalement les composants suivants : 3 à 60 parties de l'éphédra, 4,5 à 90 parties de l'amande amère frite, 7,5 à 150 parties du gypse brut, 1,5 à 30 parties du réglisse, 5 à 100 parties de la *PogostemonisHerba,* 5 à 100 parties du *Magnolia officinalis,* 7,5 à 150 parties d*'AtractylodesLancea* à son de blé frit, 5 à 100 parties du fruit d*'Amomum tsaoko* frit, 4,5 à 90 parties du *RhizomaPinelliae,* 7,5 à 150 parties du *Poriacocos,* 2,5 à 50 parties du *Rheum palmatum,* 5 à 100 parties de l'*Astragalus membranaceus,* 5 à 100 parties du *Semen Lepidii,* 5 à 100 parties du *Paeoniae Radix Rubra* et une quantité appropriée de l'adjuvant ; et
la composition de HSBD est préparée dans une préparation de médecine chinoise traditionnelle (TCM) sous une forme choisie dans le groupe constitué par un granulé, une décoction, une poudre, une capsule, un liquide oral, un comprimé et une pilule.
